# EUROPEAN PATENT APPLICATION

(11) **EP 3 563 961 A1**
(43) Date of publication of application: **06.11.2019**
(21) Application number: 17886580.4
(22) Date of filing: 19.12.2017
(51) Int. Cl.: B23K 9/23, B23K 9/02

(54) **ARC WELDING METHOD FOR MULTIMATERIAL JOINING, JOINING ASSISTANCE MEMBER, MULTIMATERIAL WELDED JOINT, AND PLATE MATERIAL EQUIPPED WITH JOINING ASSISTANCE MEMBER**

(30) Priority: 27.12.2016 JP 2016254215; 27.12.2016 JP 2016254216
(71) Applicant: Kabushiki Kaisha Kobe Seiko Sho (Kobe Steel, Ltd.), Kobe-shi, Hyogo 651-8585 (JP)
(72) Inventor: SUZUKI, Reiichi, Kanagawa 251-8551 (JP)
(74) Representative: Müller-Boré & Partner Patentanwälte PartG mbB
(86) International application number: PCT/JP2017/045466
(87) International publication number: WO 2018/123716

(57) **Abstract**

A multimaterial welded joint (1) equipped with an aluminum alloy or magnesium alloy upper plate (10) and a steel lower plate (20) arc-welded to the upper plate (10). The upper plate (10) has a circular hole (11) facing a surface that overlaps the lower plate (20), and is further provided with a joining assistance member (30) which is made of steel and has a stepped external shape having a shaft portion (31) and a flange portion (32), and in which a hollow portion (33) penetrating the shaft portion (31) and the flange portion (32) is formed. The maximum outer diameter (P_{D1}) of the shaft portion (31) and the width (P_{D2}) of the flange portion (32) are larger than the diameter (B_{D}) of the hole (11), and the shaft portion (31) has a constricted portion (39) on the flange-portion side. The joining assistance member (30) is press-fitted into the hole (11) provided in the upper plate (10), the hollow portion (33) of the joining assistance member (30) is filled with an iron alloy or a Ni alloy weld metal (40), and a fused portion (W) is formed by the weld metal (40) and a portion of the melted lower plate (20) and the joining assistance member (30).

## Description

### TECHNICAL FIELD

The present invention relates to an arc welding method for dissimilar material joining, a joining assist member, a dissimilar material welded joint, and a plate material with a joining assist member.

### BACKGROUND ART

Transport equipment as typified by automobiles is always required to be increased in drive fuel efficiency for the purpose of suppressing various items such as (a) the consumption of petroleum fuels which are limited resources, (b) CO₂ which is a global warming gas generated with burning, and (c) the running cost. Among means as an improvement measure is vehicle weight reduction as well as improvements in motive force-related technologies such as use of electric driving. One means for weight reduction is to replace steel which is a current main material with light materials such as aluminum alloys, magnesium alloys, carbon fiber, etc. However, replacing all of the materials with such light materials has problems such as cost increase and insufficiency in strength. As a countermeasure against these problems, a design method so called "multi-material" in which a proper combination of steel and a light material are used at each location is now attracting attention.

Combining steel and any of the above-described light materials necessarily results in occurrence of a position where to join these materials. Whereas steel materials, aluminum alloy materials, or magnesium alloy materials can be welded to each other easily, it is known that welding of different materials is very difficult. This is because intermetallic compounds (IMCs) which are very fragile are formed in a melt-mixing portion between steel and aluminum or magnesium and destroyed easily when receiving external stress caused by tension, impact, or the like. As a result, such welding methods as the resistance spot welding method and the arc welding method cannot be used for dissimilar material joining and it is common to use other joining methods. Welding cannot be used for joining of steel and carbon fiber because the latter is not a metal.

Among conventional dissimilar material joining techniques is, for example, a means in which through-holes are formed through both of a steel material and a light material and they are bound together by pressing them against each other from both sides using a bolt and a nut. Another example means is known in which materials are bound together by a swaging effect by inserting a swaging member from one side by applying a strong pressure to it (refer to Patent document 1, for example).

A still another example means is proposed in which a steel joining member is pushed, as a punch, into an aluminum alloy material, whereby a hole is formed and the joining member is bound tentatively. Subsequently, the aluminum alloy material is overlapped with a steel material, the two kinds of members are sandwiched between copper electrodes from both sides, and the steel material and the joining member are resistance-welded to each other by applying pressure and large current to them instantaneously. (Refer to Patent document 2, for example.)

A further example means has been developed in which an aluminum alloy material and a steel material are joined together directly using a friction stir joining tool (refer to Patent document 3, for example).

### Prior Art Documents

### Patent Documents

Patent document 1: JP-A-2002-174219
Patent document 2: JP-A-2009-285678
Patent document 3: Japanese Patent No. 5,044,128

### SUMMARY OF THE INVENTION

### Problems to be Solved by the Invention

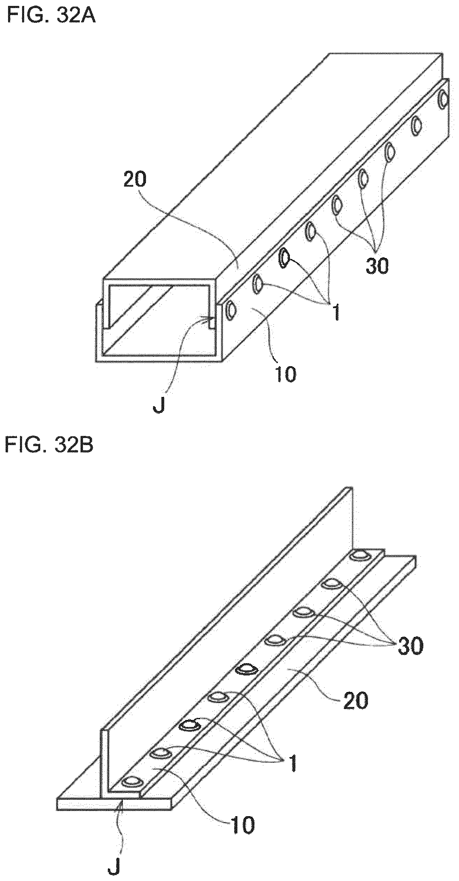

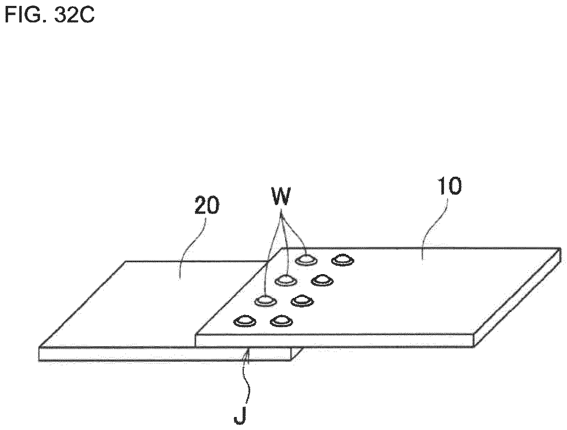

However, the bolt-nut joining method cannot be applied to a case that a steel material and a light material form a structure having a closed cross section (see FIG. 32A) because nuts cannot be inserted. Even in the case of a joint having an open section structure to which this method is applicable (see FIG. 32B and FIG. 32C), another problem of low efficiency arises because screwing nuts into the materials takes time.

Though the joining method disclosed in Patent document 1 is a relatively easy method, it is associated with a problem that the swaging member cannot be inserted in the case where the steel material is high in strength and a problem that high joining strength cannot be obtained because the joining strength depends on the frictional force and the stiffness of the swaging member. There is another problem that this joining method cannot be applied to a closed section structure because it is necessary to press the swaging member by a jig from the front side and the back side when inserting.

The joining method disclosed in Patent document 2 cannot be applied to a closed section structure, either. And there is another problem that a facility for a resistance welding method is very expensive.

As for the joining method disclosed in Patent document 3, where pressure is applied to the surface of a steel material while an aluminum alloy material is caused to flow plastically in a low temperature range, the two materials do not melt-mix with each other, necessary metallic bonding force can be obtained without formation of intermetallic compounds. There exists a study report stating that joining of steel and carbon fiber is also possible. However, this joining method is associated with problems that it cannot be applied to a closed section structure either, and that it requires a large mechanical facility and hence is expensive because high pressure needs to be generated. Furthermore, resulting joining force is not very strong.

As such, each of the existing dissimilar material joining techniques has one or more of the problems that (i) the materials and the groove shape are restricted to ones suitable for an open section structure, (ii) the joining strength is low, and (iii) the facility cost is high. Thus, to spread multi-material designing that enables combination of various kinds of materials, a new technique is desired that is easy to use and satisfies all of conditions of (i') being applicable to both of an open section structure and a closed section structure, (ii') attaining sufficiently high joining strength and being high in reliability, and (iii') being low in cost.

The present invention has been made in view of the above problems, and an object of the invention is therefore to provide an arc welding method for dissimilar material joining, a joining assist member, a dissimilar material welded joint, and a plate material with a joining assist member that make it possible to join different materials, that is, steel and an aluminum alloy (hereinafter also referred to as "Al alloy") or a magnesium alloy (hereinafter also referred to as "Mg alloy"), with quality of being high in strength and reliability using an inexpensive facility already available on the market, and that can be applied to both of an open section structure and a closed section structure with no limitations.

### Means for Solving the Problems

To melt-join steel and an Al alloy or an Mg alloy, formation of intermetallic compounds (IMCs) is unavoidable as mentioned above. On the other hand, it is apparent scientifically and empirically that steel-to-steel welding provides highest joining strength and reliability.

In view of the above, the inventors have conceived a means capable of joining to steel by binding force by using steel-to-steel welding to obtain connection force.

### Means for Solving the Problems

The above object of the invention is thus attained by the constitutions and configurations described below.

An arc welding method for dissimilar material joining for joining a first plate made of an aluminum alloy or a magnesium alloy and a second plate made of steel, the method including:
a step of making a circular hole through the first plate;
a step of press-fitting a joining assist member made of steel into the hole formed in the first plate, the joining assist member having a stepped external shape including a shaft portion and a flange portion and having a hollow portion penetrating the shaft portion and the flange portion, a maximum outer diameter P_{D1} of the shaft portion and a width P_{D2} of the flange portion being larger than a diameter B_{D} of the hole of the first plate respectively and the shaft portion having a narrow portion the shaft portion at the flange portion side;
a step of overlapping the first plate with the second plate; and
a step of filling the hollow portion of the joining assist member with a weld metal and welding the second plate and the joining assist member by any method of the following (a) to (e):
   (a) a gas-shielded arc welding method using, as a consumable electrode, a welding wire to provide the weld metal made of an iron alloy or a nickel alloy;
   (b) a non-gas arc welding method using the welding wire as a consumable electrode;
   (c) a gas tungsten arc welding method using the welding wire as a non-consumable electrode filler;
   (d) a plasma arc welding method using the welding wire as a non-consumable electrode filler; and
   (e) a coated arc welding method using, as a consumable electrode, a coated arc welding rod to provide the weld metal made of an iron alloy or a nickel alloy.

A joining assist member being made of steel, having a stepped external shape including a shaft portion and a flange portion and having a hollow portion penetrating the shaft portion and the flange portion, a maximum outer diameter P_{D1} of the shaft portion and a width P_{D2} of the flange portion being larger than a diameter B_{D} of the hole of the first plate respectively, wherein the shaft portion has a narrow portion at the flange portion side.

A joining assist member being made of steel, having a stepped external shape including a shaft portion and a flange portion and having a hollow portion penetrating the shaft portion and the flange portion, a maximum outer diameter P_{D1} of the shaft portion, a width P_{D2} of the flange portion and a diameter B_{D} of the hole of the first plate having a relationship of P_{D2}>P_{D1}>B_{D}, wherein the shaft portion has a narrow portion at the flange portion side.

A dissimilar material welded joint including a first plate made of an aluminum alloy or a magnesium alloy and a second plate made of steel that is arc-welded to the first plate,
wherein the first plate has a circular hole that reaches an overlapped surface to the second plate,
the dissimilar material welded joint further includes a joining assist member made of steel, the joining assist member having a stepped external shape including a shaft portion fixed in the hole formed in the first plate and a flange portion and having a hollow portion penetrating the shaft portion and the flange portion, a maximum outer diameter P_{D1} of the shaft portion and a width P_{D2} of the flange portion being larger than a diameter B_{D} of the hole of the first plate respectively and the shaft portion having a narrow portion at the flange portion side, and
the hollow portion of the joining assist member is filled with a weld metal made of an iron alloy or a nickel alloy, and a melting portion is formed of the weld metal and a part of melted portions of the second plate and the joining assist member.

A plate material with a joining assist member capable of forming a dissimilar material welded joint by arc welding with a plate material made of steel, the plate material with a joining assist member including:
a plate material made of an aluminum alloy or an magnesium alloy, having a circular hole;
a joining assist member being made of steel, having a stepped external shape including a shaft portion and a flange portion and having a hollow portion penetrating the shaft portion and the flange portion, a maximum outer diameter P_{D1} of the shaft portion and a width P_{D2} of the flange portion being larger than a diameter B_{D} of the hole of the first plate respectively and the shaft portion having a narrow portion at the flange portion side;
wherein the joining assist member is attached to the plate material by fixing the shaft portion in the hole formed in the plate material.

### ADVANTAGEOUS EFFECTS OF INVENTION

The invention makes it possible to join different materials, that is, steel and an aluminum alloy or a magnesium alloy, with quality of being high in strength and reliability using an inexpensive arc welding facility and enables application to both of an open cross section structure and an enclosed cross section structure with no limitations.

### BRIEF DESCRIPTION OF THE DRAWINGS

FIG. 1A is a perspective view of a dissimilar material welded joint according to a first embodiment of the present invention.
FIG. 1B is a sectional view of the dissimilar material welded joint taken along line I-I in FIG. 1A.
FIG. 2A is a side view of a joining assist member of the first embodiment.
FIG. 2B is a front view of a joining assist member of the first embodiment.
FIG. 3A is a side view of a joining assist member according to a first modification of the first embodiment.
FIG. 3B is a side view of a joining assist member according to a second modification of the first embodiment.
FIG. 4 is a sectional view corresponding to FIG. 1B of the dissimilar material welded joint using the joining assist member according to the first modification.
FIG. 5A is a front view of a joining assist member according to a third modification of the first embodiment.
FIG. 5B is a front view of a joining assist member according to a fourth modification of the first embodiment.
FIG. 5C is a front view of a joining assist member according to a fifth modification of the first embodiment.
FIG. 5D is a front view of a joining assist member according to a sixth modification of the first embodiment.
FIG. 6A shows boring work of an arc welding method for dissimilar material joining of the first embodiment.
FIG. 6B shows press-fitting work of an arc welding method for dissimilar material joining of the first embodiment.
FIG. 6C shows overlapping work of an arc welding method for dissimilar material joining of the first embodiment.
FIG. 6D shows welding work of an arc welding method for dissimilar material joining of the first embodiment.
FIG. 7A is a sectional view of a dissimilar material welded joint in which no excess weld metal is formed.
FIG. 7B is a sectional view showing a state where external forces are acting on the dissimilar material welded joint shown in FIG. 7A in a thickness direction (three-dimensional direction).
FIG. 8 is a sectional view showing a state where external forces are acting on the dissimilar material welded joint shown in FIG. 1B in a thickness direction (three-dimensional direction).
FIG. 9A is a sectional view of a dissimilar material welded joint for description of weld penetration of a weld metal.
FIG. 9B is a sectional view of a dissimilar material welded joint for description of weld penetration of a weld metal.
FIG. 10A is a perspective view of a dissimilar material welded joint as a comparative example in which a top plate made of aluminum and a bottom plate made of steel are overlapped and welded by penetration welding.
FIG. 10B is a sectional view of the dissimilar material welded joint shown in FIG. 10A.
FIG. 11A is a sectional view showing a state where shearing tension is acting on the dissimilar material welded joint shown in FIG. 10A.
FIG. 11B is a perspective view of the dissimilar material welded joint shown in FIG. 11A.
FIG. 12A is a sectional view showing a state where vertical peeling tension is acting on the dissimilar material welded joint shown in FIG. 10A.
FIG. 12B is a perspective view of the dissimilar material welded joint shown in FIG. 12A.
FIG. 13A is a perspective view of a dissimilar material welded joint as a comparative example in which a top plate made of aluminum and having a hole and a bottom plate made of steel are overlapped and welded by penetration welding.
FIG. 13B is a sectional view of the dissimilar material welded joint shown in FIG. 13A.
FIG. 14A is a sectional view showing a state where shearing tension is acting on the dissimilar material welded joint shown in FIG. 13A.
FIG. 14B is a perspective view showing a state where shearing tension is acting on the dissimilar material welded joint shown in FIG. 13A and the joining portion is inclined by close to 90°.
FIG. 15A is a sectional view showing a state where vertical peeling tension is acting on the dissimilar material welded joint shown in FIG. 13A.
FIG. 15B is a perspective view of the dissimilar material welded joint shown in FIG. 15A.

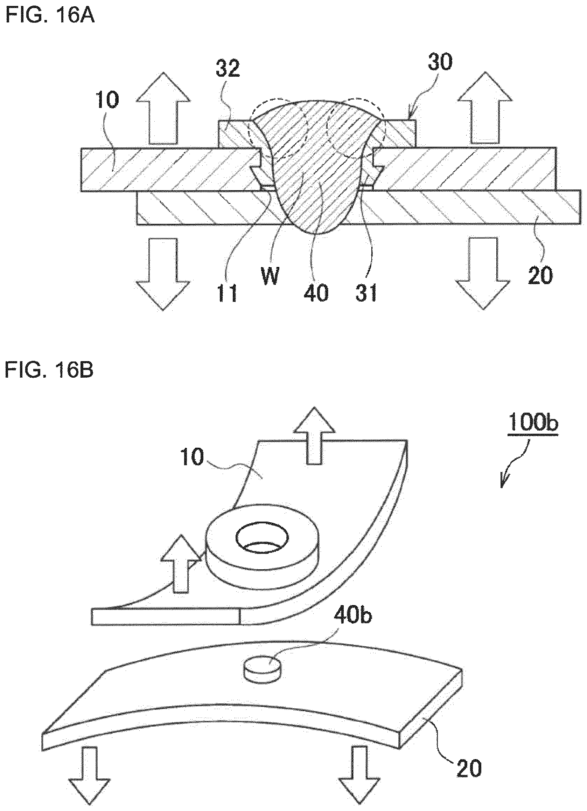

FIG. 16A is a sectional view of the dissimilar material welded joint according to the first embodiment.
FIG. 16B is a perspective view showing a state where vertical peeling tension is acting on the dissimilar material welded joint of the first embodiment.
FIG. 17A is a sectional view showing a state where shearing tension is acting on the dissimilar material welded joint according to the first embodiment.
FIG. 17B is a sectional view showing a state where shearing tension is acting on the dissimilar material welded joint according to the first embodiment in which intermetallic compounds are formed.
FIG. 18A is a sectional view of the top plate, the bottom plate, and the joining assist member showing a state before arc welding where a gap exists between the top plate and the bottom plate.
FIG. 18B is a sectional view of the dissimilar material welded joint showing a state after the arc welding together with thermal contraction forces.
FIG. 19 is a sectional view showing a state where stress in the shearing direction is acting on a dissimilar material welded joint in which the diameter of the shaft portion of the joining assist member is too small.
FIG. 20 is a view showing the state that arc welding is applied in an upward position.
FIG. 21 is a side view of a joining assist member according to a seventh modification of the first embodiment.
FIG. 22A is a sectional view of the top plate, the bottom plate, and the joining assist member for description of dimensional relationships of the joining assist member of the first embodiment.
FIG. 22B is a sectional view of the top plate, the bottom plate, and the joining assist member for description of dimensional relationships of the joining assist member according to the first modification of the first embodiment.
FIG. 23A is a perspective view of the top plate and the bottom plate for description of an arc welding method for dissimilar material joining according to the first modification of the first embodiment.
FIG. 23B is a sectional view of the top plate and the bottom plate for description of the arc welding method for dissimilar material joining according to the first modification of the first embodiment.

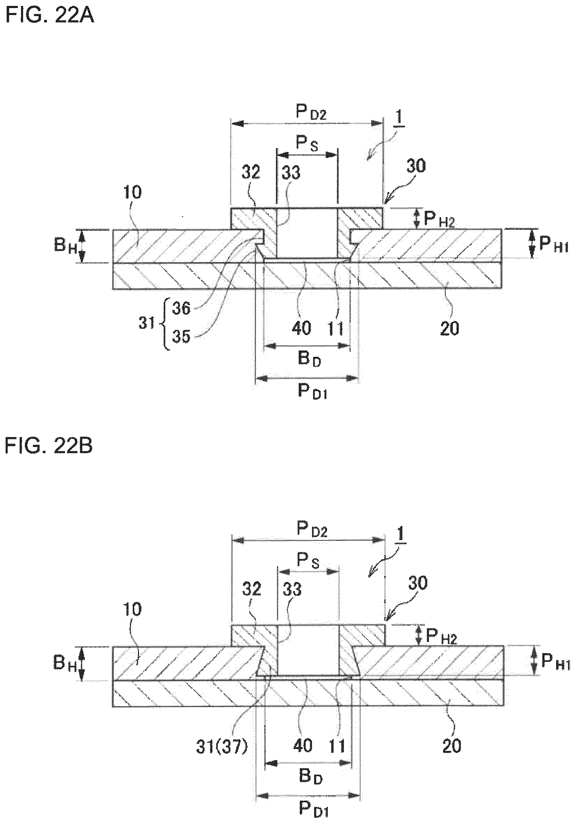

FIG. 22A is a perspective view of the top plate and the bottom plate for description of an arc welding method for dissimilar material joining according to a second modification of the first embodiment.

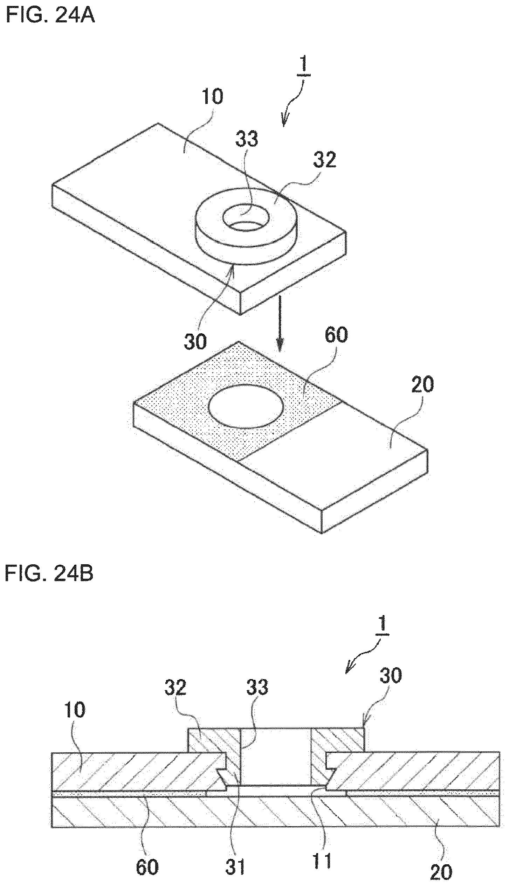

FIG. 24B is a sectional view of the top plate and the bottom plate for description of the arc welding method for dissimilar material joining according to the second modification of the first embodiment.

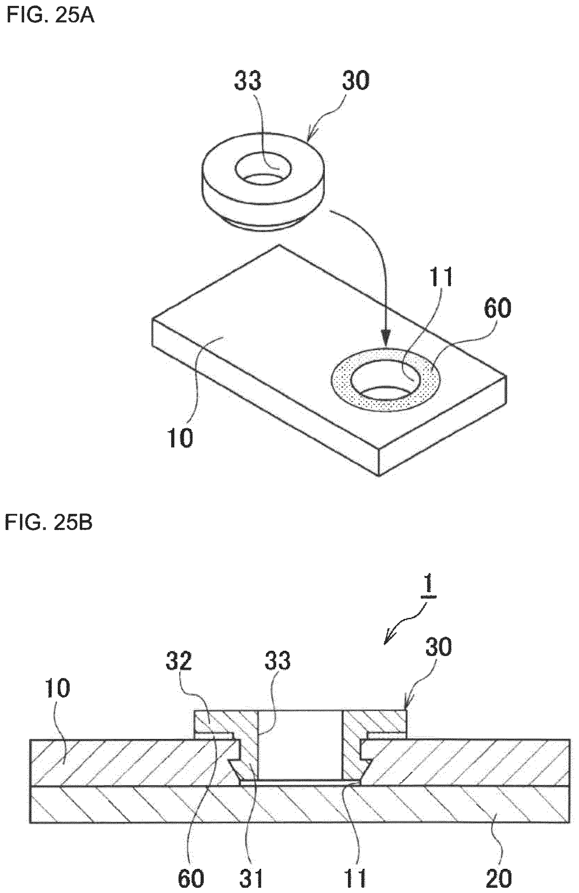

FIG. 25A is a perspective view of the top plate, the bottom plate, and the joining assist member for description of an arc welding method for dissimilar material joining according to a third modification of the first embodiment.
FIG. 25B is a sectional view of the top plate, the bottom plate, and the joining assist member for description of the arc welding method for dissimilar material joining according to the third modification of the first embodiment.

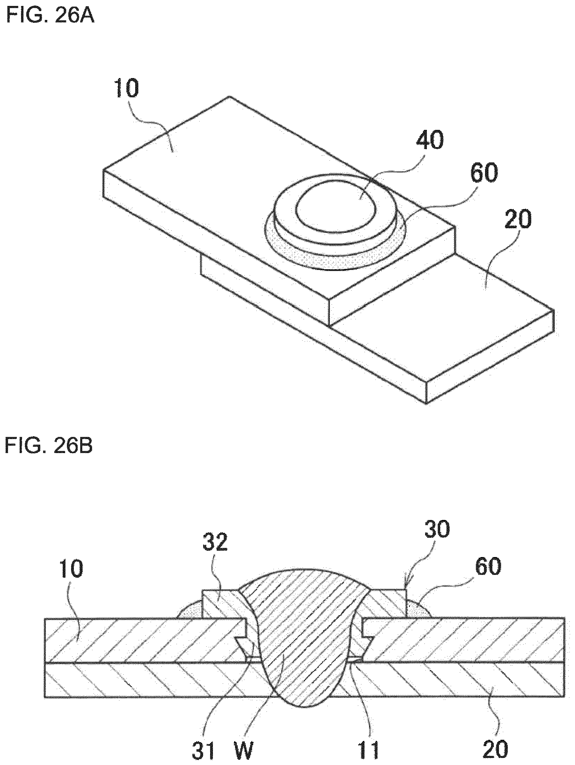

FIG. 26A is a perspective view of a dissimilar material welded joint for description of an arc welding method for dissimilar material joining according to a fourth modification of the first embodiment.
FIG. 26B is a sectional view of the dissimilar material welded joint for description of the arc welding method for dissimilar material joining according to the fourth modification of the first embodiment.

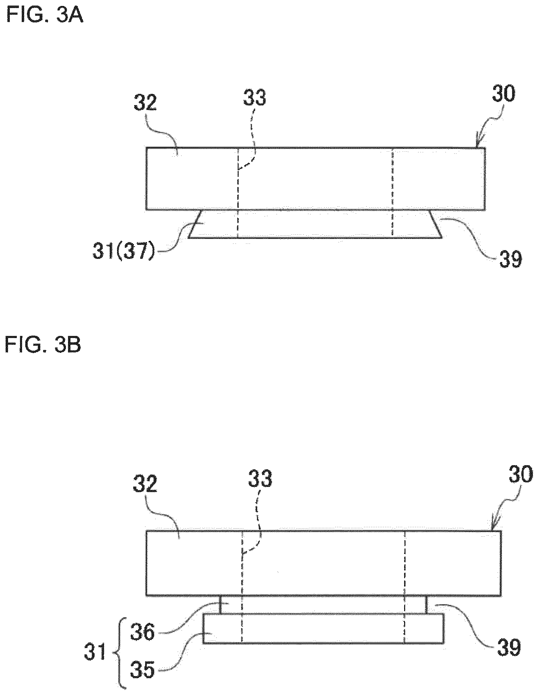

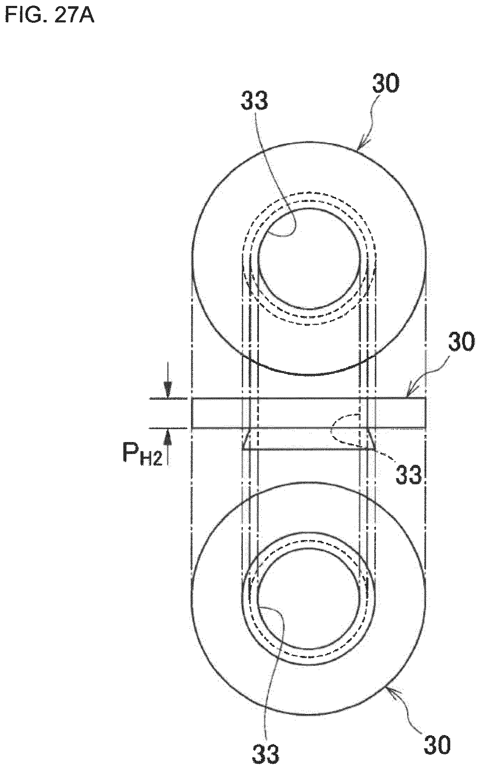

FIG. 27A is a top view, a side view, and a bottom view of the joining assist member shown in FIG. 3A according to the first embodiment.

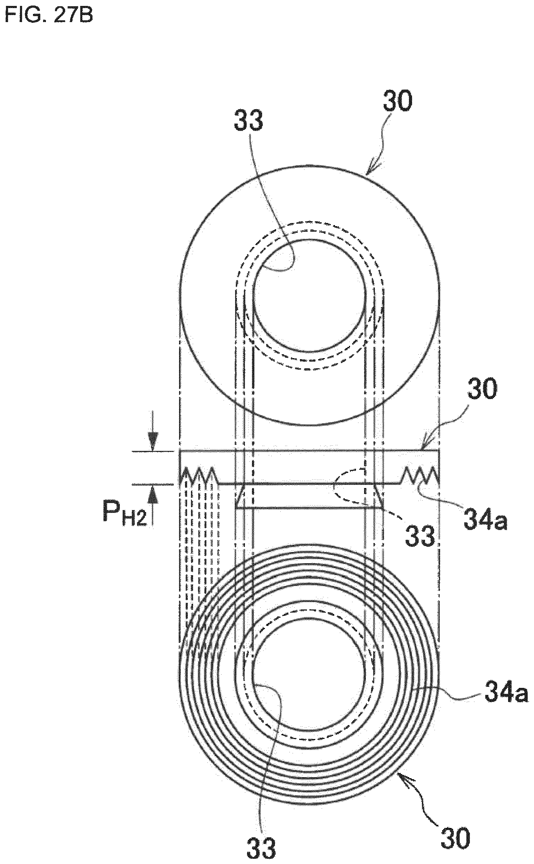

FIG. 27B is a top view, a side view, and a bottom view of a joining assist member according to an eighth modification of the first embodiment.

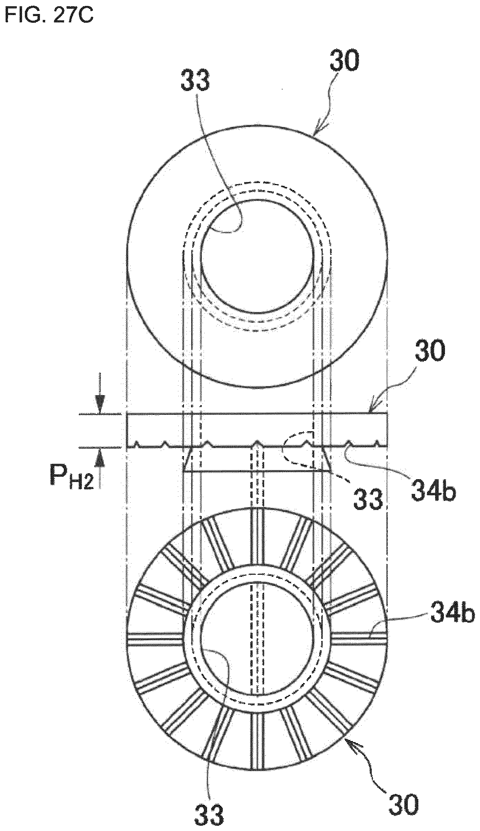

FIG. 27C is a top view, a side view, and a bottom view of a joining assist member according to a ninth modification of the first embodiment.

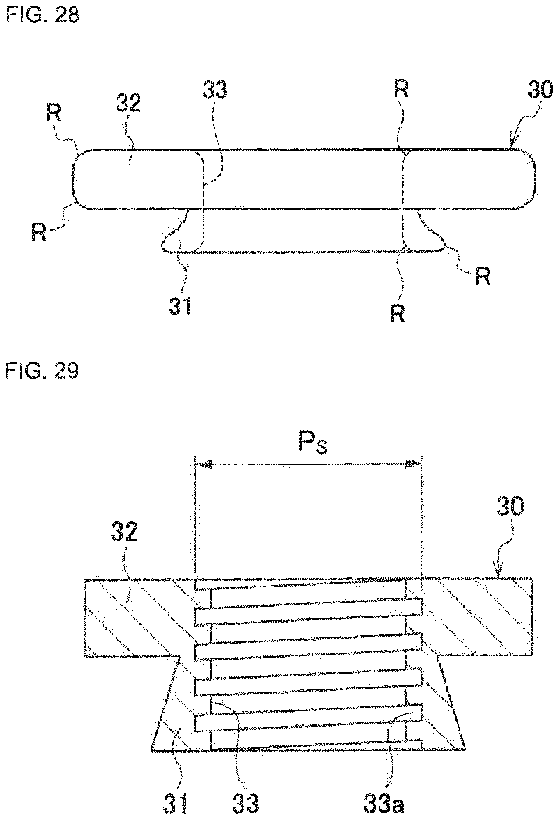

FIG. 28 is a side view of a joining assist member according to a 10th modification of the first embodiment.
FIG. 29 is a side view of a joining assist member according to an 11th modification of the first embodiment.

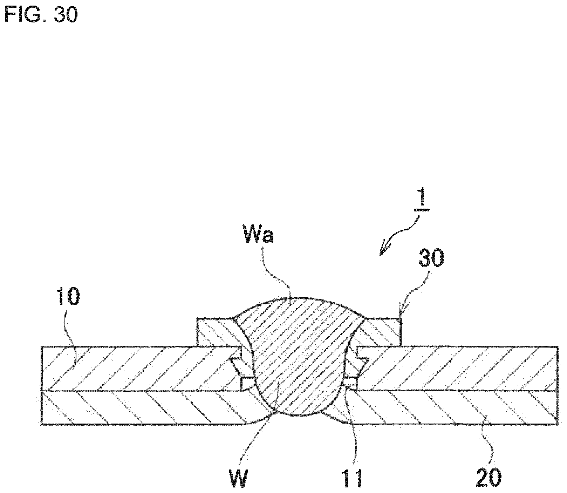

FIG. 30 is a sectional view for description of an arc welding method for dissimilar material joining and a dissimilar material welded joint according to the fifth modification of the first embodiment.

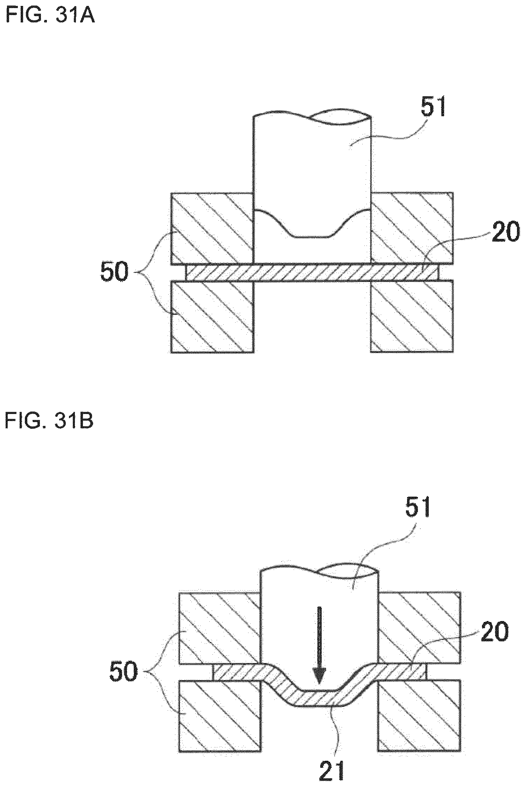

FIG. 31A shows a state before the swell portion is formed by drawing in the bottom plate shown in FIG. 30.
FIG. 31B shows a state after the swell portion is formed by drawing in the bottom plate shown in FIG. 30.
FIG. 32A is a perspective view showing an enclosed cross section structure to which the dissimilar material welded joint according to the first embodiment is applied.
FIG. 32B is a perspective view showing an open cross section structure formed by an L-shaped plate and a flat plate to which the dissimilar material welded joint according to the first embodiment is applied.
FIG. 32C is a perspective view showing an open cross section structure formed by two flat plates to which the dissimilar material welded joint according to the first embodiment is applied.

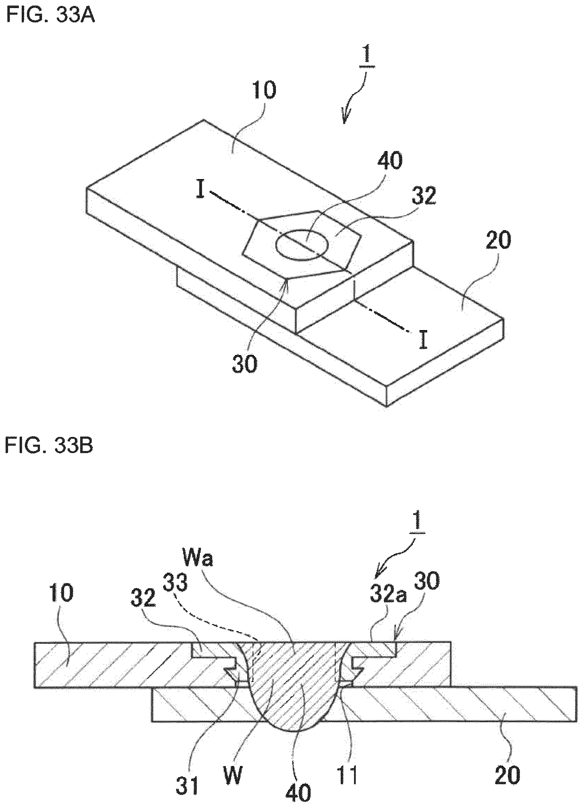

FIG. 33A is a perspective view of a dissimilar material welded joint according to a second embodiment of the present invention.
FIG. 33B is a sectional view of the dissimilar material welded joint taken along line I-I in FIG. 33A.

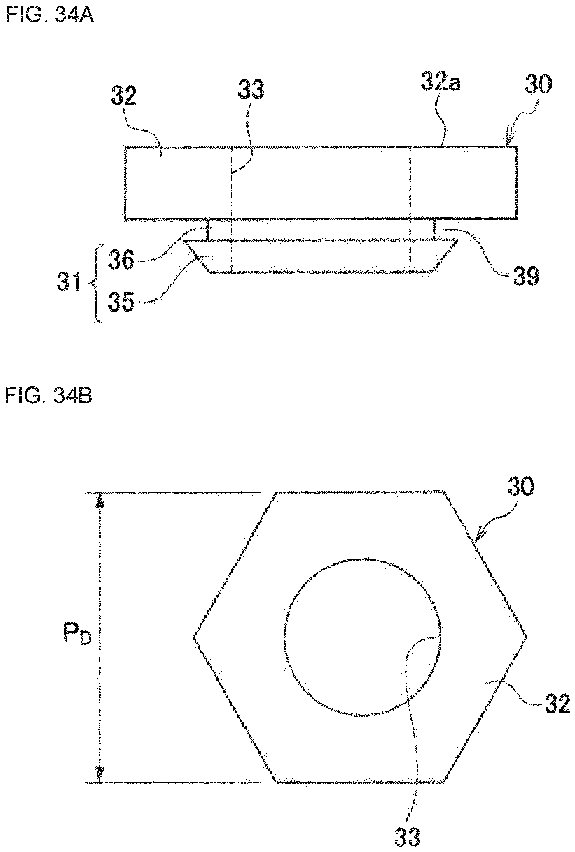

FIG. 34A is a side view of a joining assist member of the second embodiment.
FIG. 34B is a front view of a joining assist member of the second embodiment.

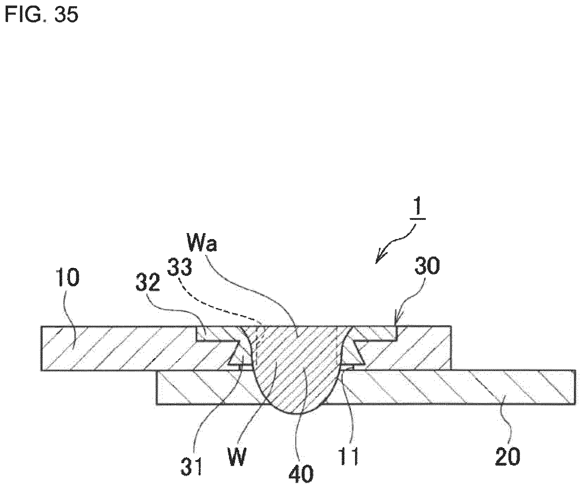

FIG. 35 is a sectional view corresponding to FIG. 33B of the dissimilar material welded joint using the joining assist member according to the first modification.

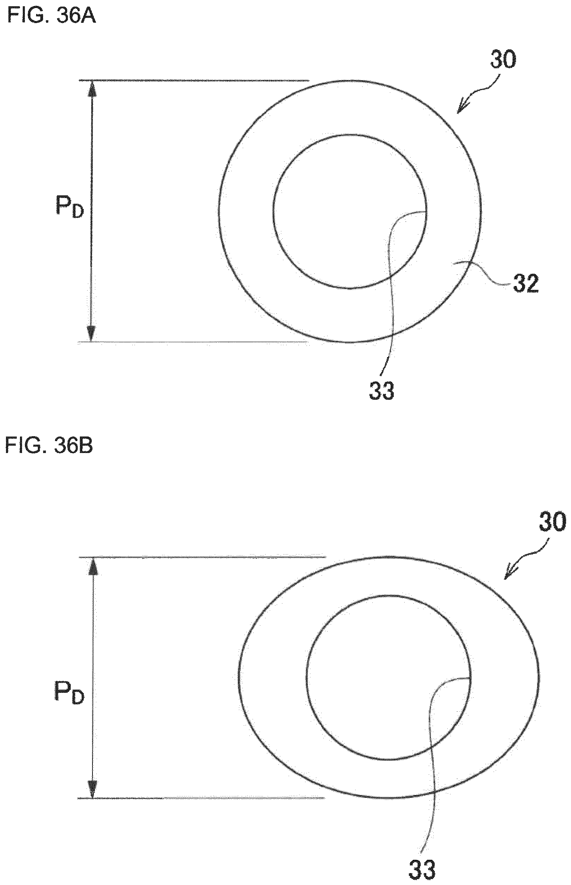

FIG. 36A is a front view of a joining assist member according to a third modification of the second embodiment.
FIG. 36B is a front view of a joining assist member according to a fourth modification of the second embodiment.

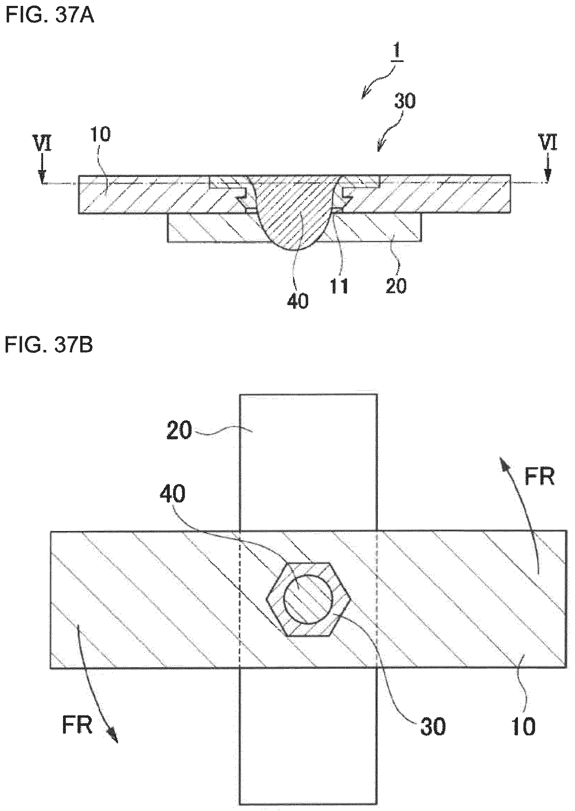

FIG. 37A is a sectional view of a dissimilar material welded joint according to the second embodiment.
FIG. 37B is a sectional view of the dissimilar material welded joint taken along line VI-VI in FIG. 37A.

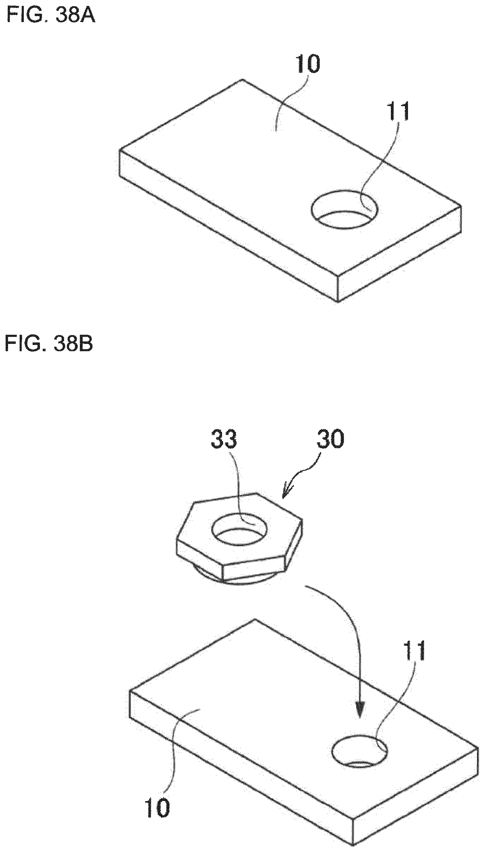

FIG. 38A shows boring work of an arc welding method for dissimilar material joining of the second embodiment.
FIG. 38B shows press-fitting work of an arc welding method for dissimilar material joining of the second embodiment.

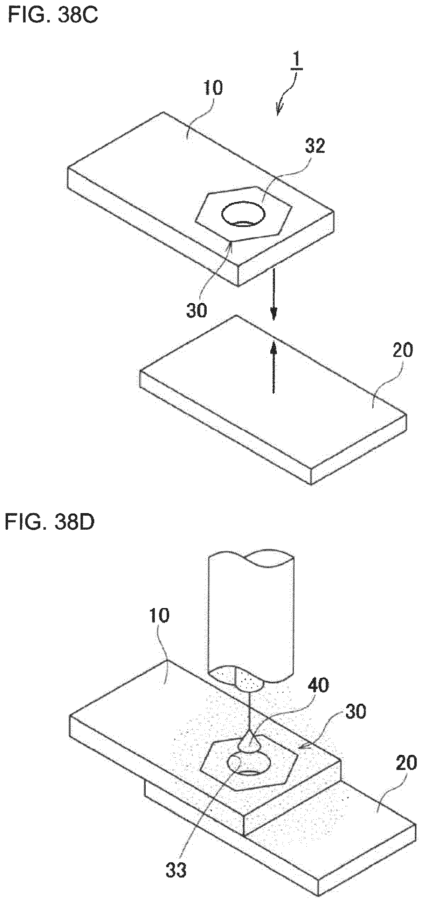

FIG. 38C shows overlapping work of an arc welding method for dissimilar material joining of the second embodiment.
FIG. 38D shows welding work of an arc welding method for dissimilar material joining of the second embodiment.

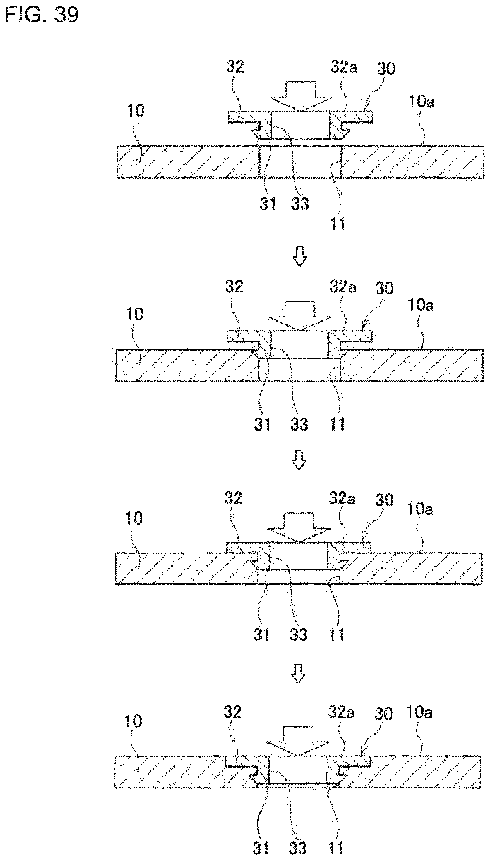

FIG. 39 is a sectional view for description of processes of press-fitting work.

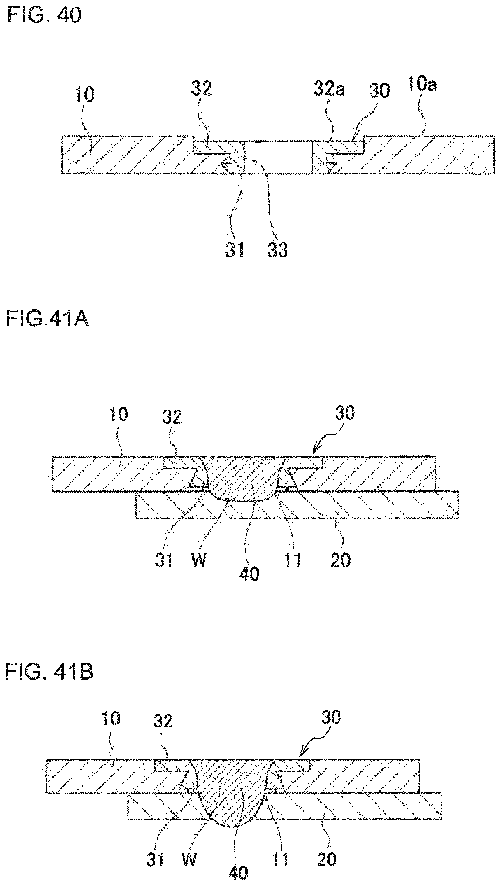

FIG. 40 is a sectional view for description of the case where an exposed surface of a flange portion is press-fitted until locating inside than the surface of the upper plate in a process of press-fitting work.
FIG. 41A is a sectional view of a dissimilar material welded joint for description of weld penetration of a weld metal.
FIG. 41B is a sectional view of a dissimilar material welded joint for description of weld penetration of a weld metal.

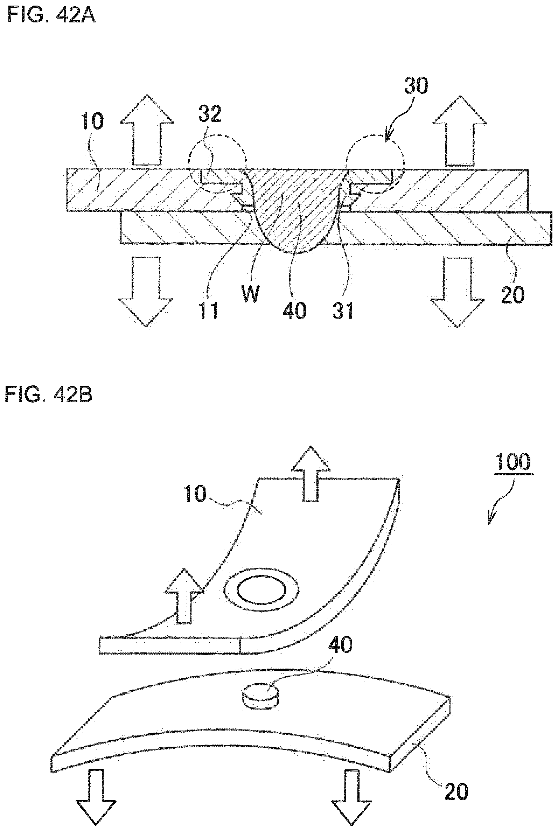

FIG. 42A is a sectional view of the dissimilar material welded joint according to the second embodiment.
FIG. 42B is a perspective view showing a state where shearing tension is acting on the dissimilar material welded joint in FIG. 42A.

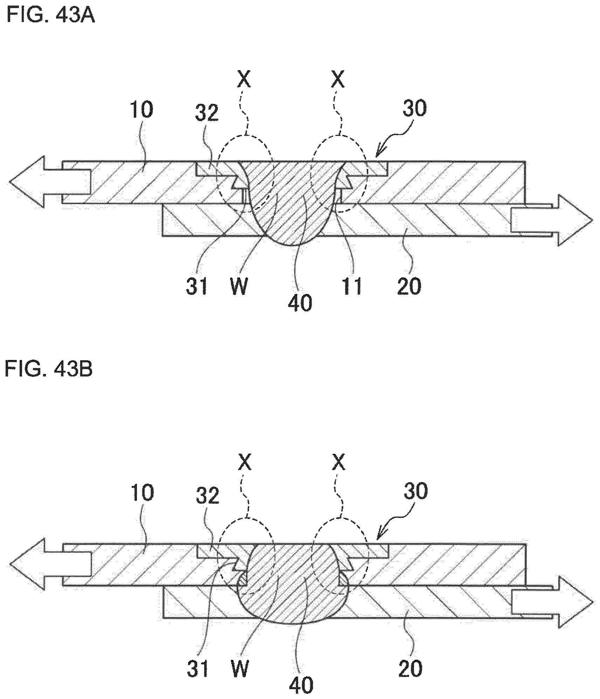

FIG. 43A is a sectional view showing a state where shearing tension is acting on the dissimilar material welded joint according to the second embodiment.
FIG. 43B is a sectional view showing a state where shearing tension is acting on the dissimilar material welded joint according to the second embodiment in which intermetallic compounds are formed.

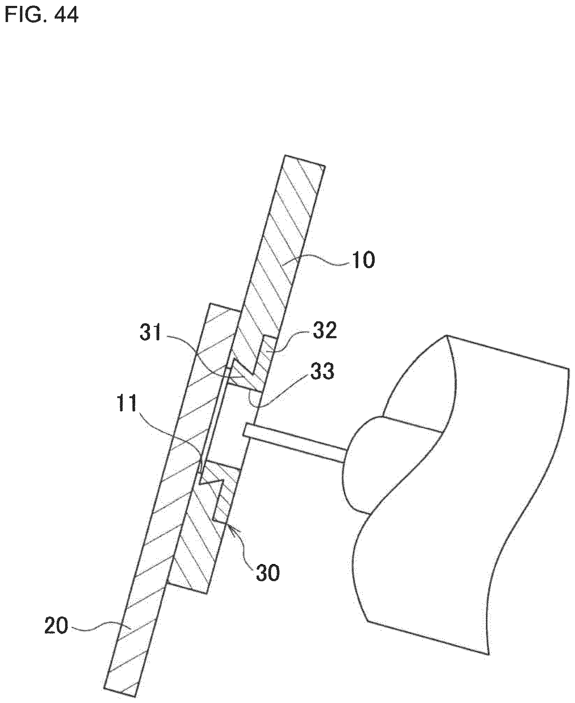

FIG. 44 is a view showing the state that arc welding is applied in an upward position.

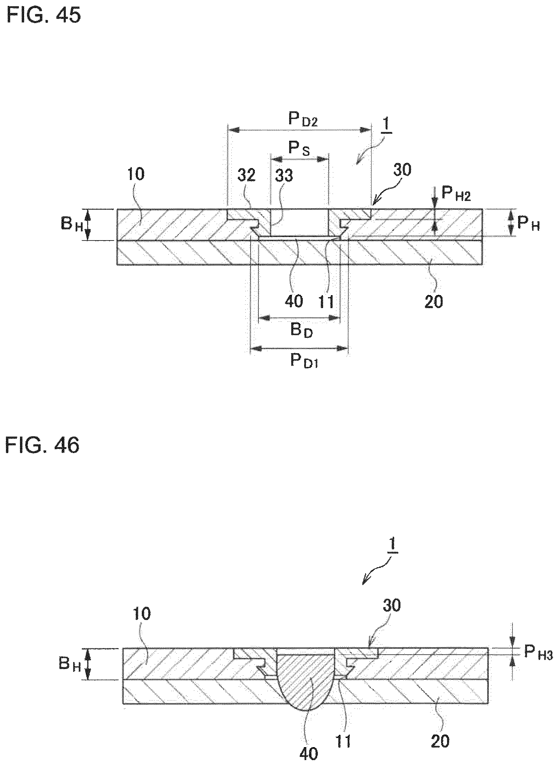

FIG. 45 is a sectional view of the top plate, the bottom plate, and the joining assist member for description of dimensional relationships of the joining assist member of the second embodiment.
FIG. 46 is a sectional view of the dissimilar material welded joint for description of an unfilled height of a weld metal.

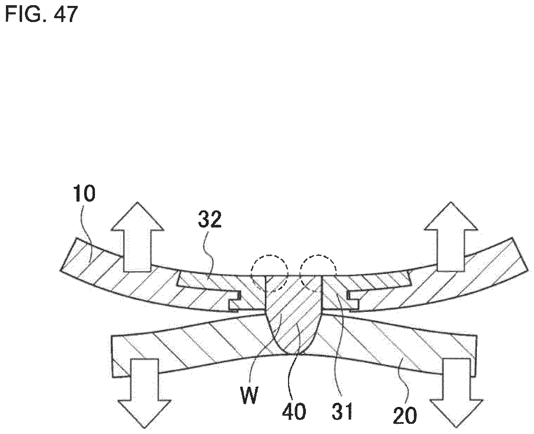

FIG. 47 is a sectional view showing a state where external forces are acting on the dissimilar material welded joint the hollow portion of which is filled.

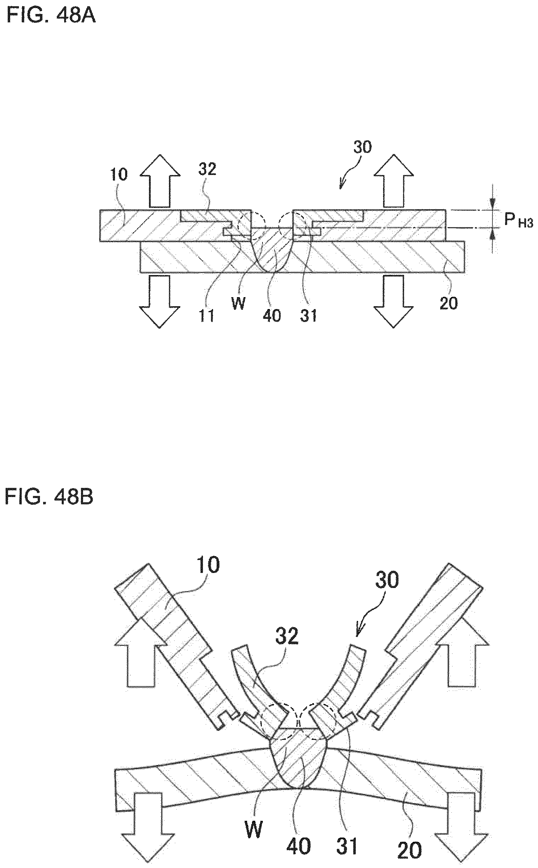

FIG. 48A is a sectional view showing the dissimilar material welded joint when the unfilled height is high.
FIG. 48B is a sectional view showing a state where external forces are acting on the dissimilar material welded joint shown in FIG. 48A in a thickness direction (three-dimensional direction).

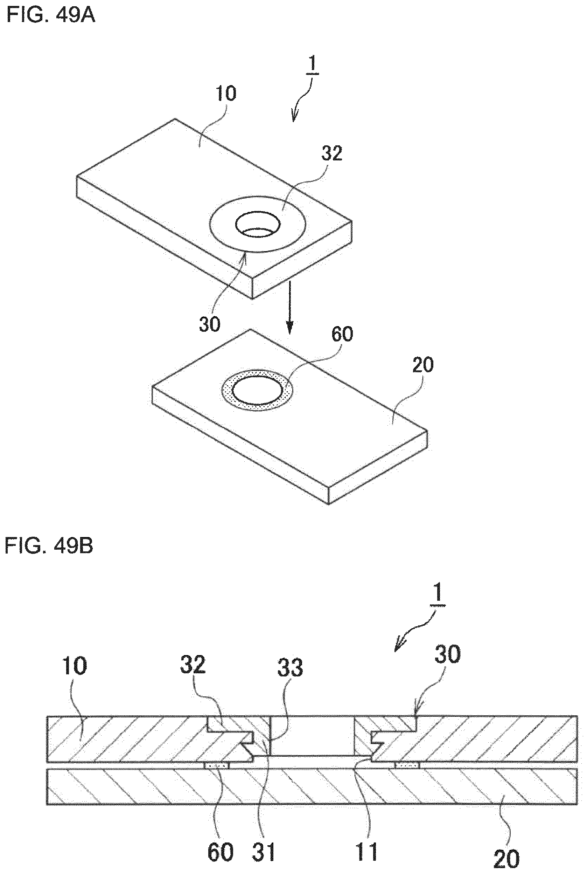

FIG. 49A is a perspective view of the top plate and the bottom plate for description of an arc welding method for dissimilar material joining according to the first modification of the second embodiment.
FIG. 49B is a sectional view of the top plate and the bottom plate for description of the arc welding method for dissimilar material joining according to the first modification of the second embodiment.

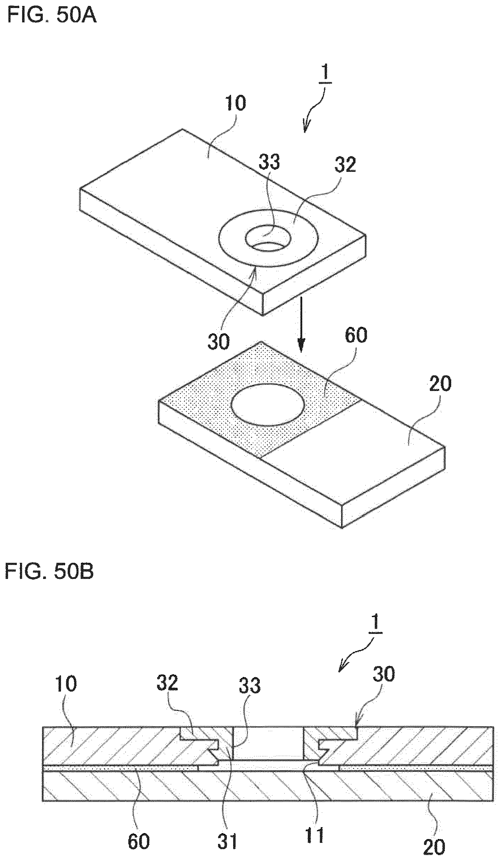

FIG. 50A is a perspective view of the top plate and the bottom plate for description of an arc welding method for dissimilar material joining according to a second modification of the second embodiment.
FIG. 50B is a sectional view of the top plate and the bottom plate for description of the arc welding method for dissimilar material joining according to a second modification of the second embodiment.

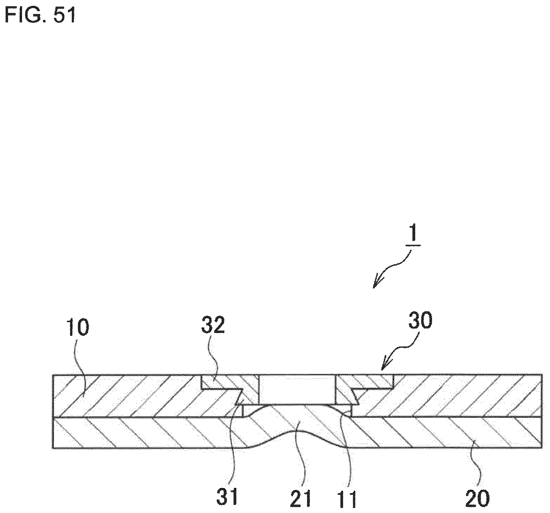

FIG. 51 is a sectional view for description of an arc welding method for dissimilar material joining according to a third modification of the second embodiment.

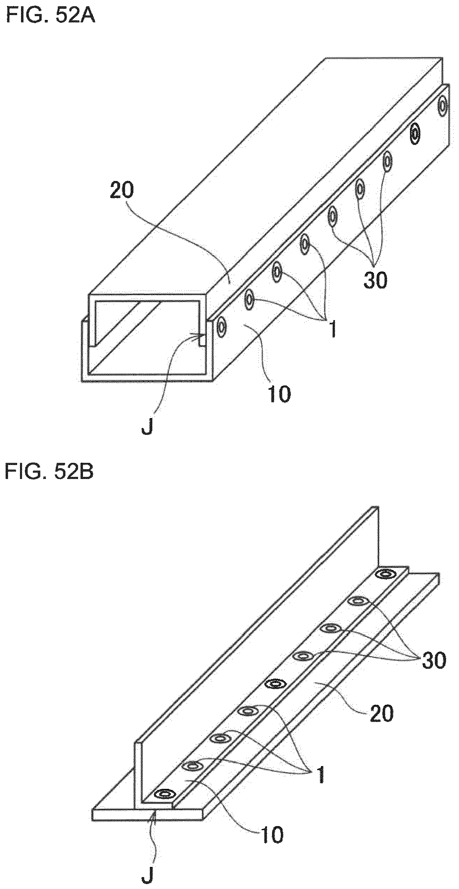

FIG. 52A is a perspective view showing an enclosed cross section structure to which the dissimilar material welded joint according to the second embodiment is applied.
FIG. 52B is a perspective view showing an open cross section structure formed by an L-shaped plate and a flat plate to which the dissimilar material welded joint according to the second embodiment is applied.

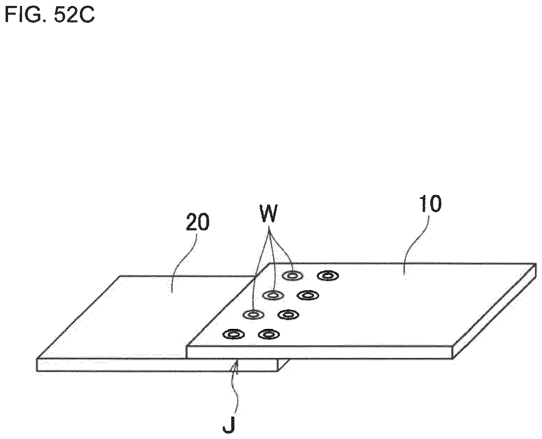

FIG. 52C is a perspective view showing an open cross section structure formed by two flat plates to which the dissimilar material welded joint according to the second embodiment is applied.

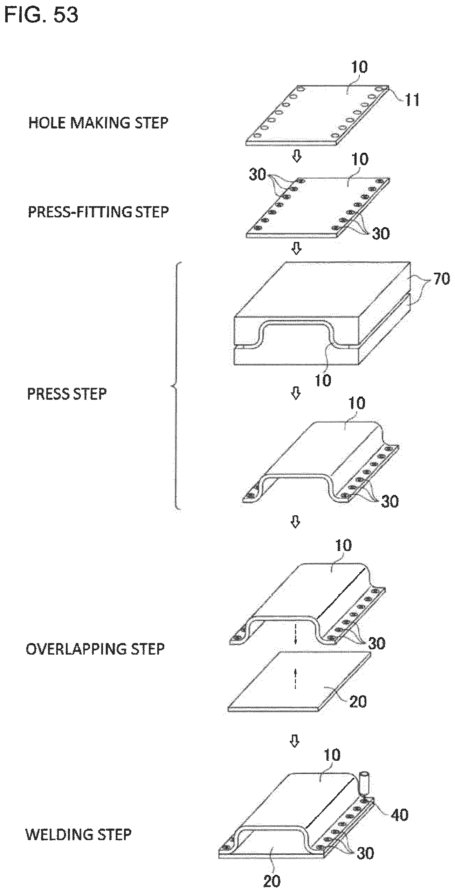

FIG. 53 is a view of an arc welding method for dissimilar material joining according to a fourth modification of the second embodiment.

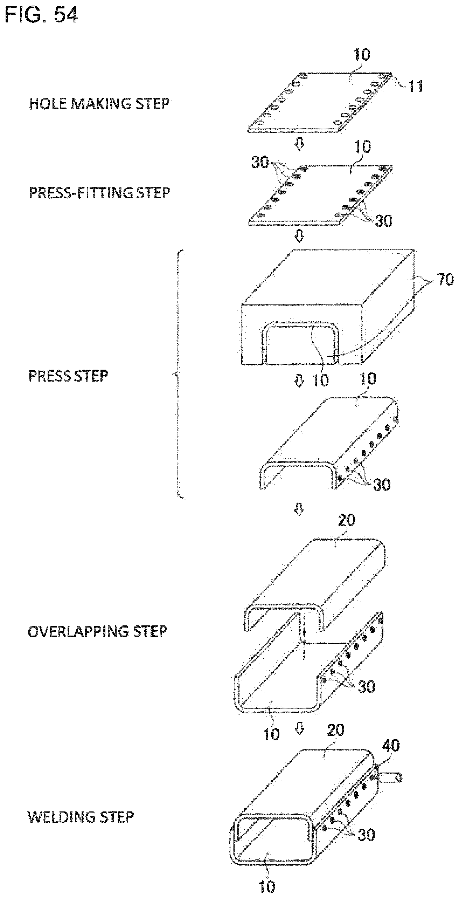

FIG. 54 is a view of an arc welding method for dissimilar material joining according to a fifth modification of the second embodiment.

### DESCRIPTION OF EMBODIMENTS

Each embodiment of an arc welding method for dissimilar material joining, a joining assist member, a dissimilar material welded joint and a plate material with a joining assist member according to the present invention is hereinafter described in detail with reference to the drawings.

### (First Embodiment)

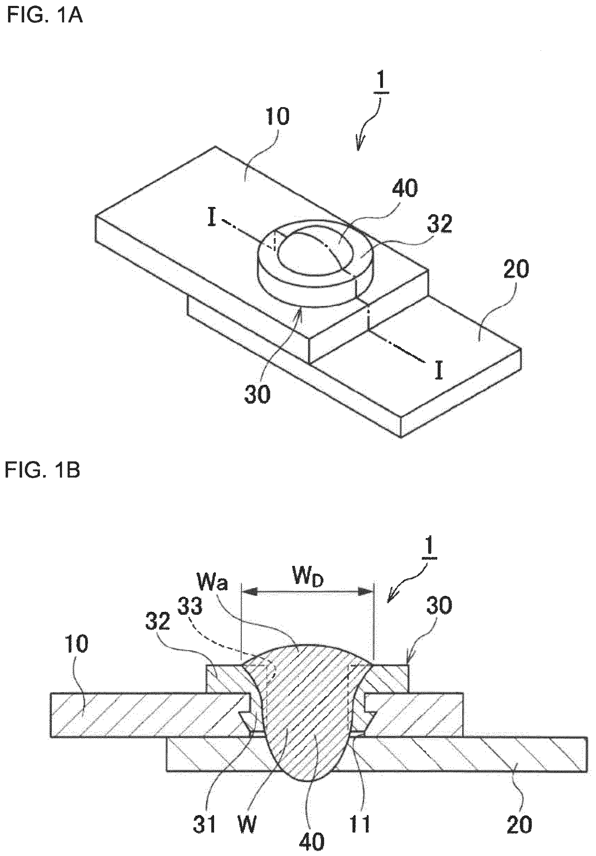

In the arc welding method for dissimilar material joining according to the embodiment, a dissimilar material welded joint 1 as shown in FIG. 1A and FIG. 1B is obtained by joining a top plate 10 (first plate) made of an aluminum alloy or a magnesium alloy and a bottom plate 20 (second plate) made of steel that are overlapped with each other, via a joining assist member 30 made of steel, by an arc welding method described later.

The top plate 10 has a circular hole 11 that reaches an overlapped surface to the bottom plate 20 to penetrate in the thickness direction, and the joining assist member 30 is inserted into the hole 11 by applying pressure.

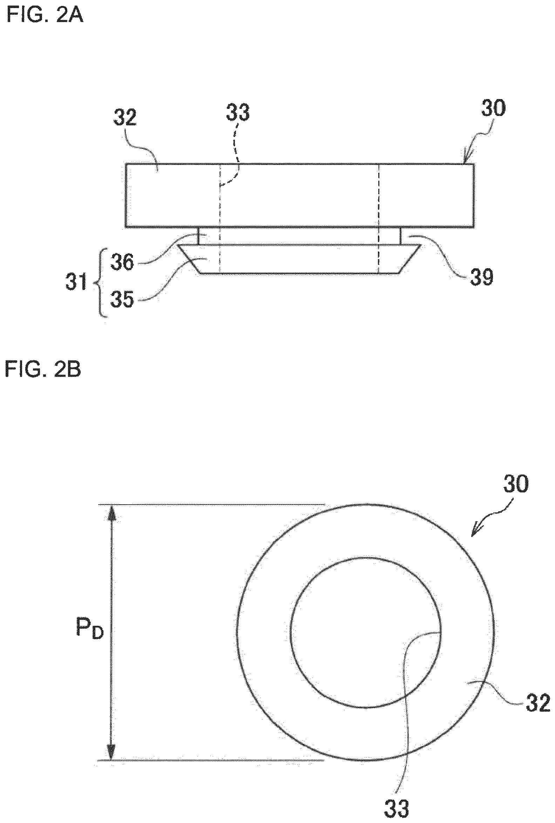

As shown in FIG. 2A and FIG. 2B, the joining assist member 30 has a stepped external shape including a shaft portion 31 to be press-fitted into and fixed to the hole 11 of the top plate 10 and a flange portion 32 that is provided on the upper surface of the top plate 10 and is outward to the shaft portion 31. A circular hollow portion 33 is formed through the joining assist member 30 so as to penetrate through the shaft portion 31 and the flange portion 32.

As described later, the maximum outer diameter P_{D1} of the shaft portion 31 and the width P_{D2} of the flange portion 32 are set to be larger than the diameter B_{D} of the hole 11 of the top plate 10, respectively (refer to FIG. 22A).

In the embodiment, the external shape of the shaft portion 31 has a structure having a narrow portion 39 at the flange portion side. Specifically, the shaft portion 31 has a tapered portion 35 gradually increasing in its outer peripheral surface toward the flange portion 12 side from the tip and defining the maximum outer diameter P_{D1}, and a small diameter cylindrical portion 36 having a diameter smaller than the maximum outer diameter P_{D1} of the tapered portion 35. Therefore, the external shape of the shaft portion 31 has the narrow portion 39 at the flange portion side by the small diameter cylindrical portion 36.

The external shape of the shaft portion 31 is not particularly limited so long as the joining assist member 30 is fixed to the top plate 10 with caulking and restraining force by having the narrow portion 39 at the flange portion side. For example, as shown in FIG. 3A, the shaft portion 31 may be a diameter reduction tapered portion 37 in which its outer peripheral surface gradually decreases from the tip to the flange portion 32. Furthermore, as shown in FIG. 3B, the shaft portion 31 may be constituted of a large diameter cylindrical portion 38 provided at the tip side, and the small diameter cylindrical portion 36 provided at the flange portion side.

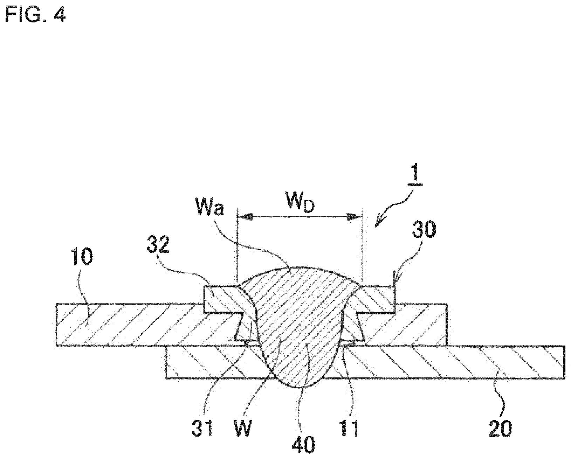

The function in the narrow portion 39 does not substantially change even in any of the joining assist portions 30 of FIG. 2A, FIG. 3A and FIG. 3B. Therefore, the description hereinafter is based on the optional joining assist member 30. FIG. 4 is a sectional view corresponding to FIG. 1B of the dissimilar material welded joint 1 in the case of using the joining assist member 30 of FIG. 3A.

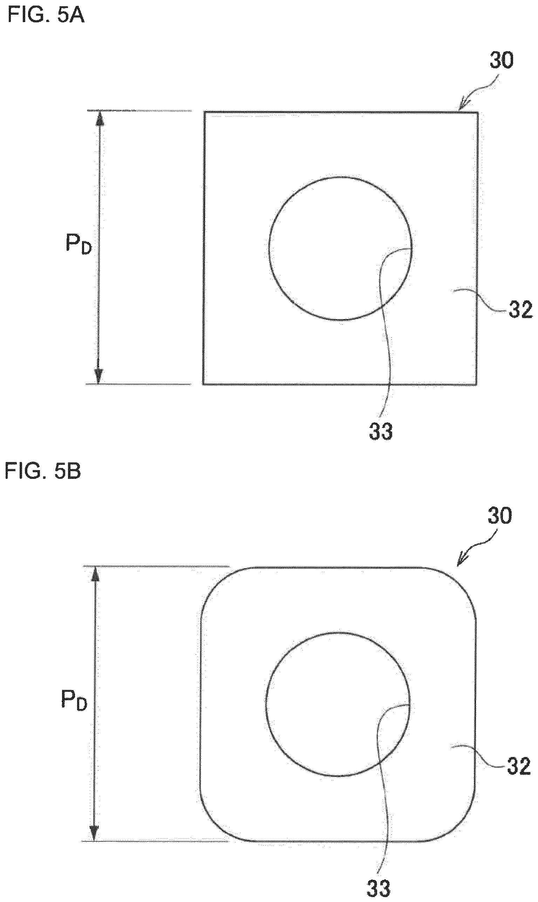

The external shape of the flange portion 32 of the joining assist member 30 is not limited to a circle as shown in FIG. 2B, and may be any shape as long as the flange portion 32 closes the hole 11 of the top plate 10 after welding. For example, the external shape of the flange portion 32 may be a polygon of a rectangle or more as shown in FIG. 5A to FIG. 5D. Furthermore, corners of the polygon may be rounded as shown in FIG. 5B.

In those joining assist members 30, the width P_{D2} of the flange portion 32 described later is defined by the shortest distance between confronting portions.

Thus, the shaft portion 31 and the hollow portion 33 are located on the same axis as the hole 11 of the top plate 10 by that the joining assist member 30 is press-fitted into the top plate 10.

The hollow portion 33 of the joining assist member 30 is filled with a weld metal 40 of an iron alloy or an Ni alloy provided by melt of a filler material (welding material) by arc welding, and a melting portion W is formed of the weld metal 40 and a part of melted portions of the bottom plate 20 and the joining assist member 30. Thus, the melting portion W is placed in the hole 11 of the top plate 10 and serves to weld the joining assist member 30 and the bottom plate 20, whereby the top plate 10 and the bottom plate 20 are joined.

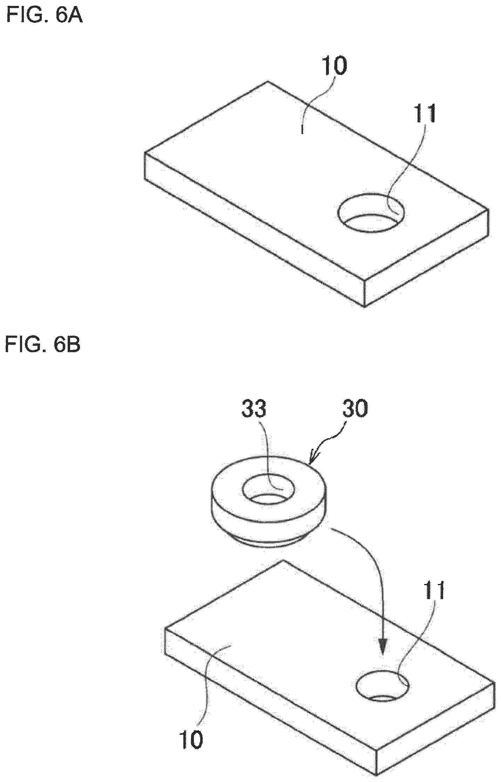

An arc welding method for dissimilar material joining for constructing the dissimilar material welded joint 1 will be described below with reference to FIG. 6A to FIG. 6D.

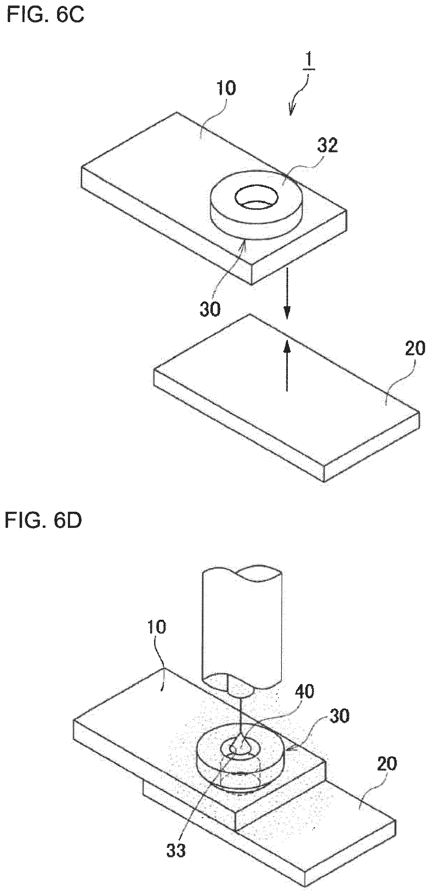

First, as shown in FIG. 6A, boring work for making a hole 11 through the top plate 10 is performed (step S1). Then, as shown in FIG. 6B, the shaft portion 31 of the joining assist member 30 is press-fitted into the hole 11 of the top plate 10 from the top surface of the top plate 10 (step S2). Further, overlapping work of overlapping the top plate 10 and the bottom plate 20 with each other is then performed as shown in FIG. 6C (step S3). Subsequently, as shown in FIG. 6D, the top plate 10 and the bottom plate 20 are joined to each other by performing any arc welding work of (a) a consumable-electrode gas-shielded arc welding method, (b) a non-gas arc welding method, (c) a gas tungsten arc welding method, (d) a plasma arc welding method, and (e) a coated arc welding method (step S4). FIG. 6D shows a case where arc welding work is performed by (a) the consumable-electrode gas-shielded arc welding method.

Specific examples of methods for the boring work of step S1 include a) punching with a punch, b) press punching using a die, and c) cutting using a laser or plasma or by a water jet method.

The arc welding work of step S4 is necessary to join the joining assist member 30 and the bottom plate 20 via a weld metal 40 in the hole 11 of the top plate 10 and fill the hollow portion 33 of the joining assist member 30. It is therefore indispensable for the arc welding to insert a filler material (welding material). More specifically, the weld metal 40 is formed by melting the filler material by the following four arc welding methods.
(a) The consumable-electrode gas-shielded arc welding method, which is a welding method commonly called MAG or MIG, is a method in which a good welded portion is formed by using a solid wire or a flux-containing wire as a filler/arc generation consumable electrode and shielding the welded portion from the air by a shielding gas such as CO₂, Ar, or He.
(b) The non-gas arc welding method, which is also called a self-shielded arc welding method, is a means for forming a good welded portion using a special flux-containing wire as a filler/arc generation consumable electrode while dispensing with a shielding gas.
(c) The gas tungsten arc welding method is one kind of gas-shielded arc welding method but is of a non-consumable-electrode type, and is commonly called TIG. An inert gas such as Ar or He is used as a shielding gas. An arc is generated between a tungsten electrode and a base material, and a filler wire is supplied to the arc from the side.
   Whereas in general no current is applied to the filler wire, there exists hot wire TIG in which the melting rate is increased by applying a current to the filler wire. In this case, no arc is generated from the filler wire.
(d) The plasma arc welding method, which is the same as the TIG in the principle, is a welding method in which the arc power is increased by tightening an arc by employing double gas supply systems and increasing the gas supply rate.
(e) The coated arc welding method is an arc welding method in which a coated arc welding rod in which a metal core wire is coated with flux is used as a filler. No shielding gas is necessary.

As for the filler material (welding material), common welding wires or welding rods can be employed as long as the weld metal 40 is an Fe alloy. An Ni alloy can also be used because it does not cause any problems in welding to iron.

More specifically, on the market are JIS standard materials such as (a) Z3312, Z3313, Z3317, Z3318, Z3321, Z3323, and Z3334, (b) Z3313, (c) Z3316, Z3321, and Z3334, and (d) Z3211, Z3221, Z3223, Z3224 and AWS (American Welding Society) standard materials such as (a) A5.9, A5.14, A5.18, A5.20, A5.22, A5.28, A5.29, and A5.34, (b) A5.20, (c) A5.9, A5.14, A5.18, and A5.28, and (d) A5.1, A5.4, A5.5, and A5.11.

The hollow portion 33 of the joining assist member 30 is filled with a filler material using the above arc welding methods. In general, it is not necessary to move the target position of the filler wire or welding rod. It is appropriate to finish welding by ending arc formation after a lapse of a proper supply time. However, in the case where hollow portion 33 has a large area, the target position of the filler wire or welding rod may be moved so as to form a circle in the hollow portion 33.

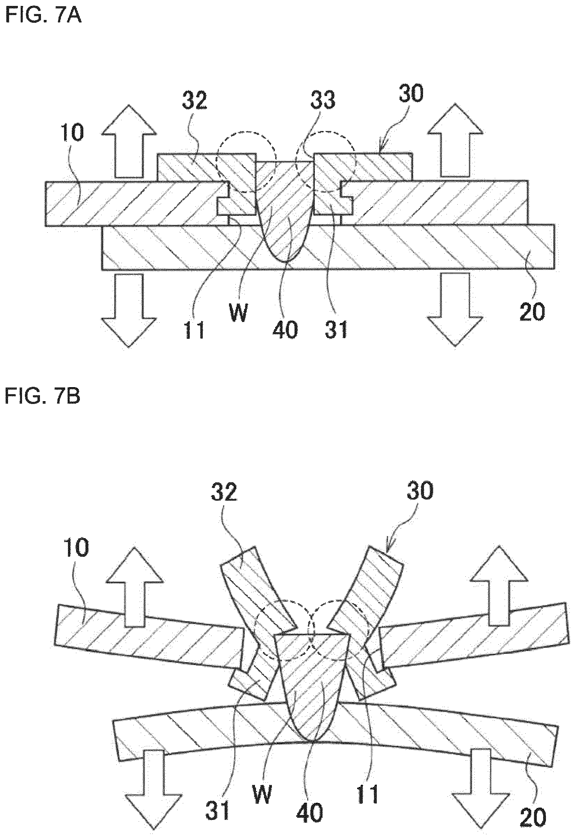

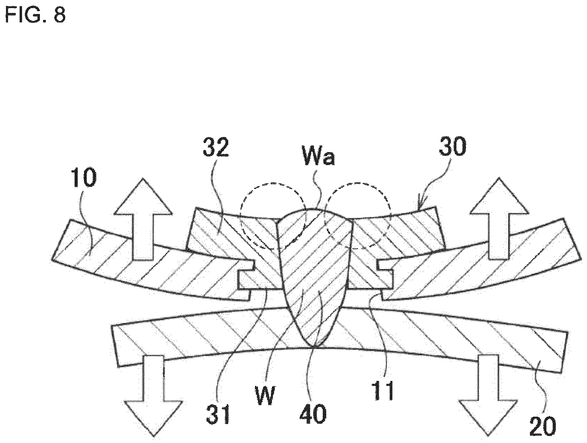

It is desirable that the hollow portion 33 of the joining assist member 30 is filled with the weld metal 40 and, furthermore, an excess weld metal Wa is formed on the surface of the joining assist member 30 (see FIG. 1B). If no excess weld metal is formed, that is, a part of the hollow portion 33 remains in appearance after welding as shown in FIG. 7A, the welding strength might be insufficient particularly for external stress in the thickness direction (three-dimensional direction) (see FIG. 7B). As shown in FIG. 8, formation of the excess weld metal Wa suppresses deformation of the joining assist member 30 and provides high joining strength when external stress is received in the thickness direction (three-dimensional direction).

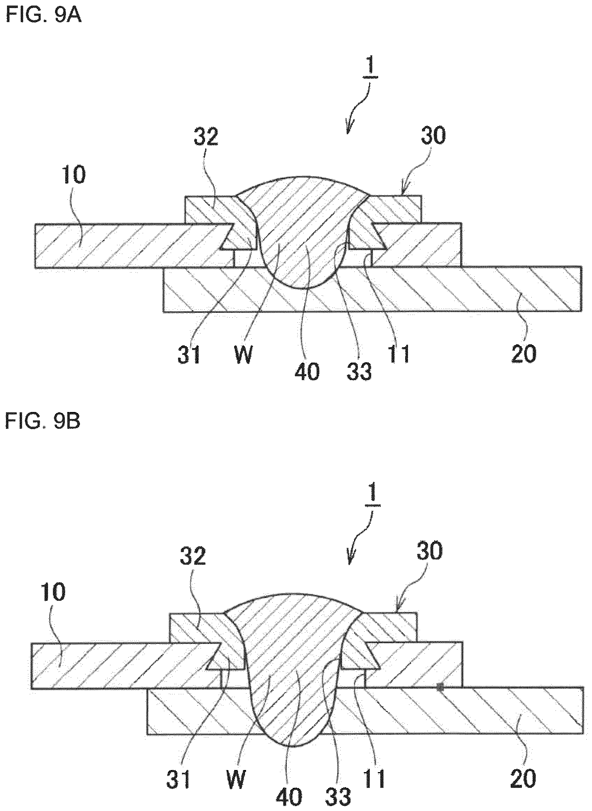

On the other hand, as for the weld penetration on the side opposite to the side of the excess weld metal, it is necessary that a part of the bottom plate 20 be melted to a proper extent as shown in FIG. 9A. There is no problem even if as shown in FIG. 9B the weld metal 40 is formed past the bottom surface of the bottom plate 20, that is, the bottom plate 20 is melted to such an extent that what is called a penetration bead is formed.

However, high strength cannot be obtained if no part of the bottom plate 20 is melted and the weld metal 40 is merely placed thereon. On the other hand, welding needs to be performed so that the weld metal 40 does not melt so deep that the weld metal 40 and the bottom plate 20 cause burn-through.

By the above steps of work, the top plate 10 made of an Al alloy or an Mg alloy and the bottom plate 20 made of steel are joined with high strength.

Roles of the steel joining assist member 30 that is used in the above-described arc welding method is described below.

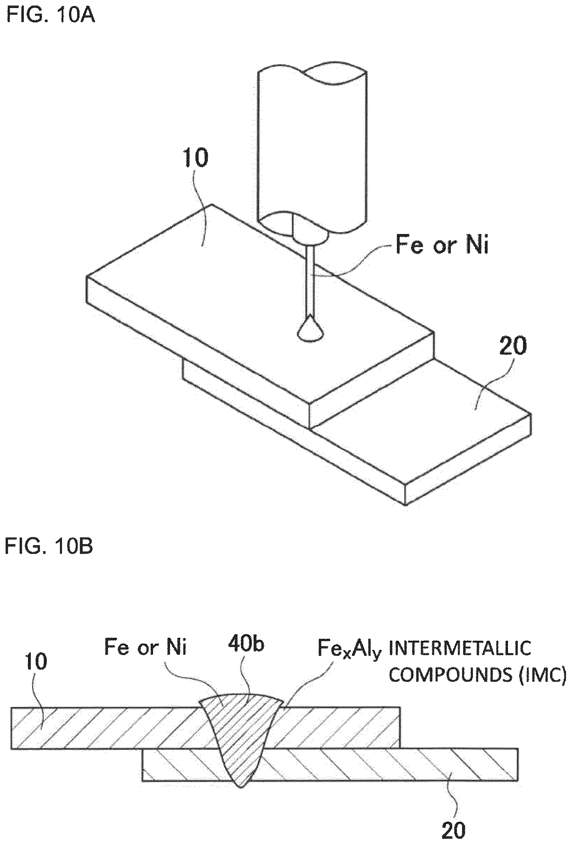

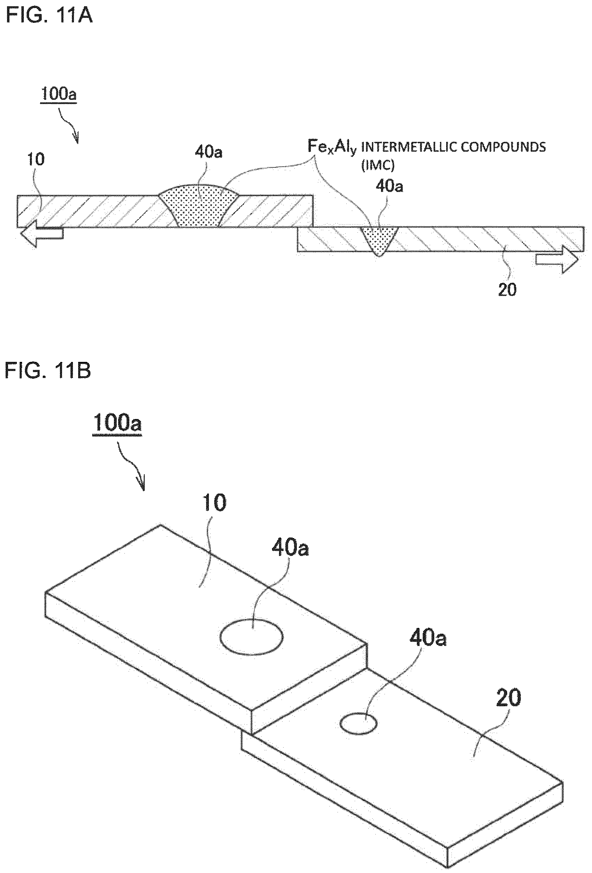

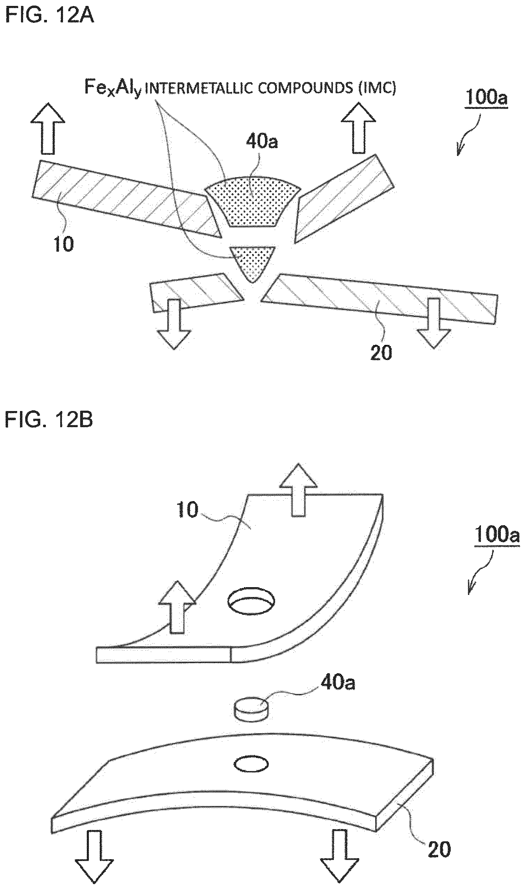

First, where as shown in FIG. 10A and FIG. 10B a top plate 10 made of aluminum is simply overlapped with a bottom plate 20 made of steel and arc spot welding is performed at a fixed point for a prescribed time from the top plate side using a welding wire made of steel or a nickel alloy, a weld metal 40a is formed that is an alloy of aluminum and steel or aluminum, steel, and nickel. Having a large aluminum content, this alloy is in the form of intermetallic compounds (IMCs) which are fragile. Although it appears that joining is made in such a dissimilar material welded joint 100a, the weld metal 40a is broken easily and disjoining occurs as shown in FIG. 11A and FIG. 11B when receiving tensile stress in a horizontal direction (shearing tension). Also when receiving tensile stress in the vertical direction (peeling tension), as shown in FIG. 12A and FIG. 12B the weld metal 40a is broken or the interface portion between the weld metal 40a and the top plate 10 or the interface portion between the weld metal 40a and the bottom plate 20 is broken and disjoining occurs like the top plate 10 comes off.

As described above, in the case where the top plate 10 made of aluminum and the bottom plate 20 made of steel are simply overlapped and they are subjected to penetration welding, the entire weld metal 40a becomes intermetallic compounds and hence is vulnerable to both shearing tension and peeling tension. As such, this dissimilar material welded joint is not suitable for practical use.

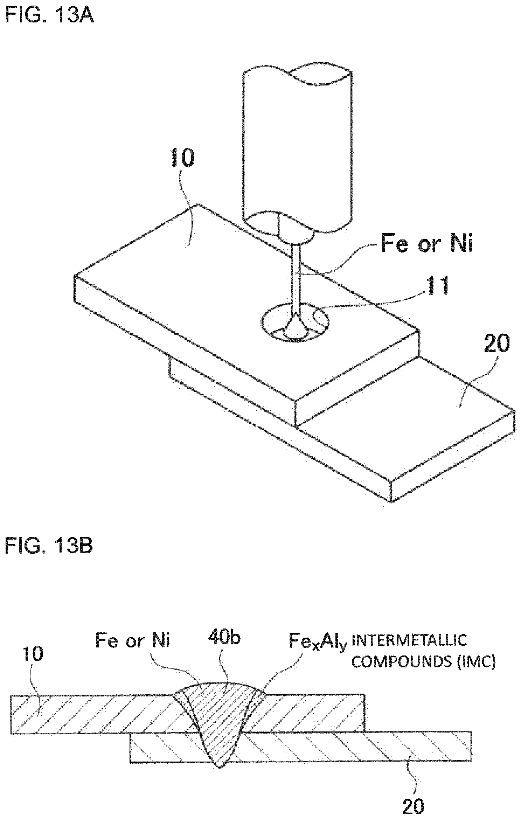

As shown in FIG. 13A and FIG. 13B, another method is conceivable in which a hole 11 having a proper size is made through a top plate 10 and a molten welding material made of steel or a nickel alloy is applied so as to fill up the hole 11.

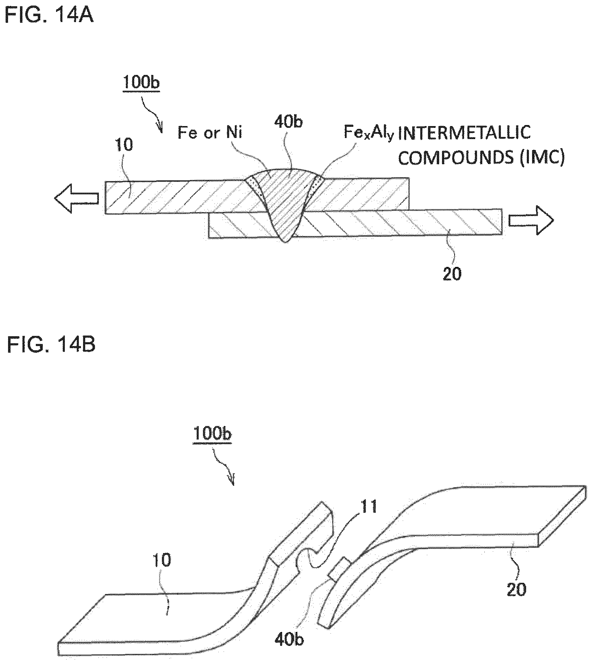

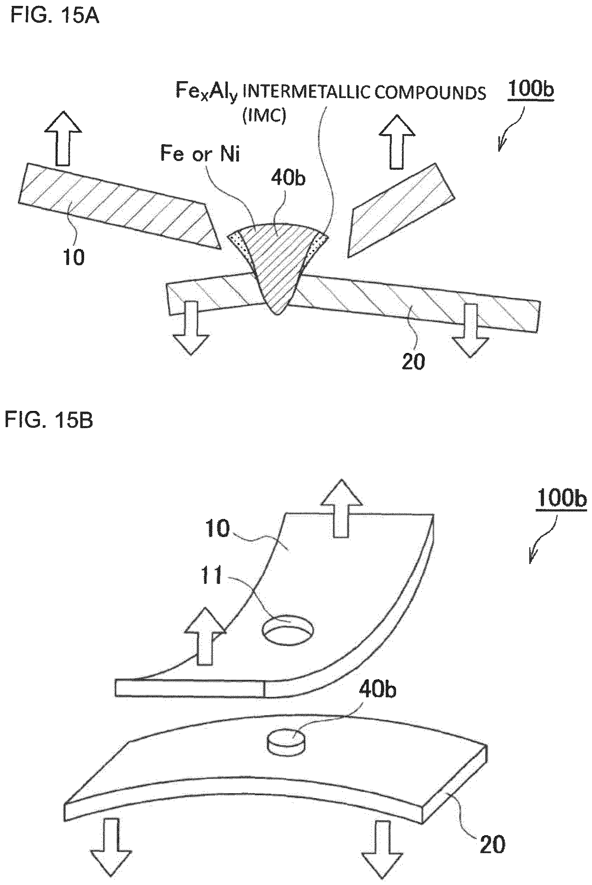

In this case, since a weld metal 40b formed of the welding material and steel that is the bottom plate 20 that are formed in an initial stage of welding do not contain molten aluminum, no intermetallic compounds are formed and the weld metal 40b is high in strength and toughness and is strongly connected to the bottom plate 20. Furthermore, a weld metal 40b formed inside the hole 11 of the top plate 10 contains very small amount of molten aluminum. Generation of intermetallic compounds much suppressed, and in particular, its central portion is robust. However, an intermetallic compound layer of aluminum and steel or aluminum and nickel is formed in the vicinity of the hole 11 of the top plate 10. When shearing tensile stress acts on such a dissimilar material welded joint 100b as shown in FIG. 14A, the bottom plate side withstands strong stress because of the strong metallic bonding. On the other hand, on the top plate side, although intermetallic compounds are formed around the hole 11, the base materials of the top plate 10 and the bottom plate 20 are deformed in an initial stage because they cannot be moved by peeling at the intermetallic compounds because of their shape. Thus, the deformation ability is higher than in the case of the dissimilar material welded joint 100a shown in FIG. 11A and FIG. 11B in which a brittle fracture occurs with almost no deformation. However, when the base materials are deformed further and the joining portion is inclined by close to 90°, as shown in FIG. 14B, the state as in the case of reception of vertical peeling stress is established. When this state occurs, the intermetallic compounds formed around the hole 11 peel off and the top plate 10 comes off easily from the joining portion. That is, the improvement is insufficient. As shown in FIG. 15A and FIG. 15B, the same result naturally occurs in a vertical tension test.

In view of the problems of the above two dissimilar material welded joints 100a and 100b, the joining assist member 30 according to the embodiment having the two-level structure is used to withstand tensile stress in the shearing direction and stress in the vertical peeling direction. More specifically, as shown in FIG. 6A to FIG. 6D, a hole is made through the top plate 10, the shaft portion 31 of the joining assist member 30 is press-fitted into the hole 11 formed in the top plate 10 and fixed, then the top plate 10 is overlapped with the bottom plate 20 to be welded, and a weld metal 40 is formed by arc welding so as to fill the inside of the top plate 10 and the joining assist member 30. This produces a state where the joining assist member 30, the weld metal 40, and the bottom plate 20 are weld-joined by strong metallic bonding in a cross section. The most important role of the flange portion 32 of the joining assist member 30 which is wider than the hole 11 of the top plate 10 is resistance to vertical peeling stress. As shown in FIG. 8, the use of the joining assist member 30 having a proper size can prevent a phenomenon that the top plate 10 is peeled off the weld metal 40 at their interface and thereby comes off. In general, the weld metal 40 fractures after sufficient plastic deformation. The joining assist member 30 does not affect initial stress adversely in response to tensile stress in the shearing direction. Furthermore, the joining assist member 30 prevents a phenomenon that the top plate 10 is peeled off the weld metal 40 at their interface and thereby comes off due to a peeling stress variation after the 90° inclination of the welding portion (see FIG. 14B) due to the deformation of base materials.

As described later in detail, the flange portion 32 of the joining assist member 30 becomes stronger against external stress in the thickness direction (three-dimensional direction) as its area and thickness P_{H2} increase, and it is thus desirable. However, the joining assist member 30 being unduly large is a factor in increasing the weight and means too long a projection from the surface of the top plate 10, which would deteriorate the aesthetic appearance or cause interference with other, nearby members. Thus, the size of the joining assist member 30 should be determined so as to satisfy design requirements.

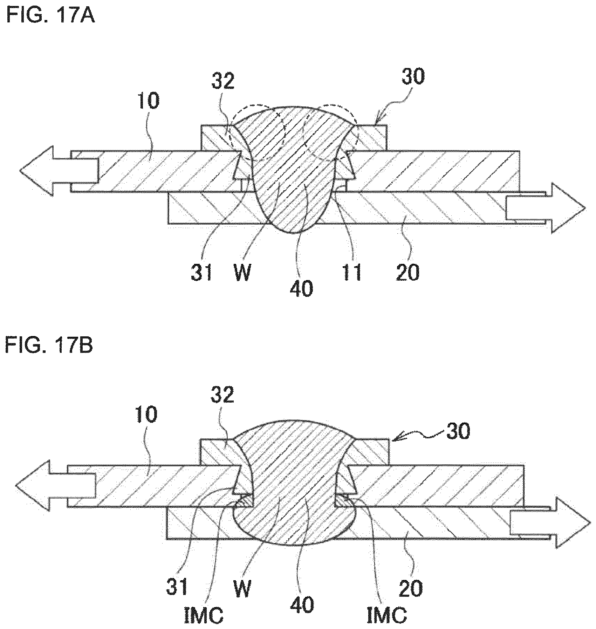

Furthermore, the joining assist member 30 provides protective wall action for preventing melt of Al alloy or Mg alloy. This action is mainly provided by the shaft portion 31 of the joining assist member 30. Al alloy or Mg alloy in the joining portion is most likely to melt on the inner surface of the hole 11 and a surface portion around the inner surface. By covering these surfaces with the joining assist member 30, propagation of heat of arc welding directly to the Al alloy or Mg alloy is prevented and mixing with steel to form intermetallic compounds (IMCs) is prevented. Since the weld penetration range of the arc welding is restricted to within the joining assist member 30 and the bottom plate 20, there occurs no dilution of the weld metal 40 with Al or Mg and hence formation of IMCs can be prevented completely. Thus, as shown in FIG. 17A, the shaft portion 31 provides resistance to external stress in the width direction (two-dimensional directions).

On the other hand, in the embodiment, it is not necessary to prevent formation of IMCs completely, that is, formation of a small number of IMCs is allowable. This is because even if IMCs are formed on the inner surface of the hole 11 as shown in FIG. 17B, if the weld metal 40 is ductile and has proper strength, it provides resistance to external stress in the width direction (two-dimensional directions) and hence the influence of an IMC layer formed around the weld metal 40 is small. Although the IMCs are fragile, even if tensile stress acts on them as a structural body, both compressional stress and tensile stress act on the joining portion at the same time and the IMCs are kept sufficiently strong against compressional force. For these reasons, the IMC layer formation does not cause propagation of destruction. Thus, the shaft portion 31 of the joining assist member 30 need not always be the same in thickness as the top plate 10.

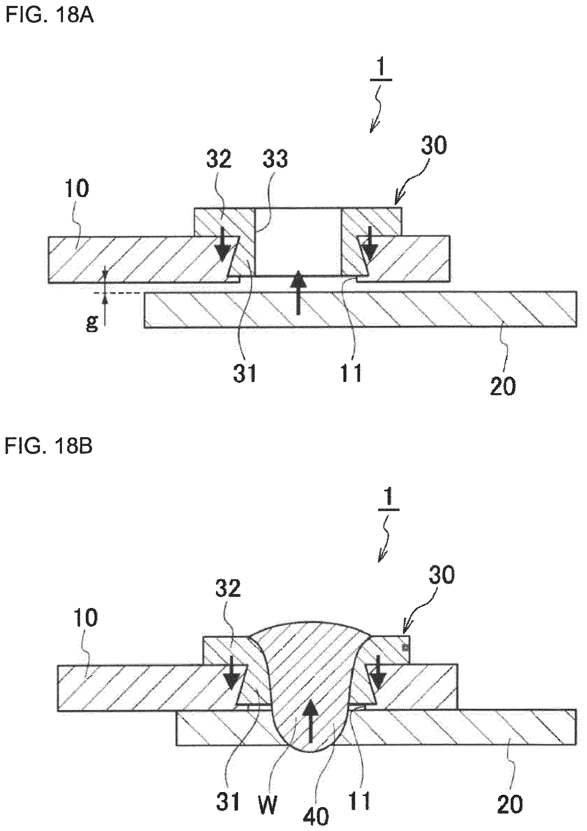

The joining assist member 30 plays a role of minimizing a gap g (see FIG. 18A) that occurs between the overlapped surfaces when the top plate 10 made of an Al alloy or an Mg alloy is overlapped with the bottom plate 20 made of steel. In the arc welding step, the weld metal 40 experiences thermal contraction and, during that course, force causing the bottom plate 20 and the joining assist member 30 to come closer to each other acts on them. By virtue of this force, even if a small gap g exists before the welding, the gap g after the welding is smaller (see FIG. 18B), which means increase in the design accuracy of the joining portion.

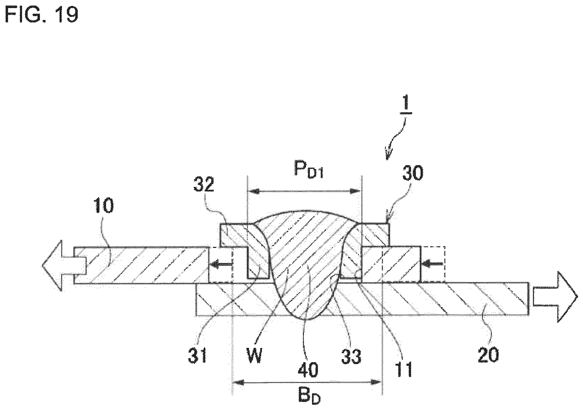

As described above, the joining assist member 30 provides the respective roles of the shaft portion 31 and the flange portion 32, but are required that the maximum outer diameter P_{D1} of the shaft portion 31 and the width P_{D2} of the flange portion 32 are larger than the diameter B_{D} of the hole 11 formed in the top plate 10 and the "narrow portion 39" having small diameter is provided in the boundary portion between the shaft portion 31 and the flange portion 32. If the maximum outer diameter P_{D1} of the shaft portion 31 is smaller than the hole diameter of the top plate 10, the shaft portion does not have force restricting the top plate 10 in a horizontal direction even in joining state. As a result, as shown in FIG. 19, if shear stress in a horizontal direction is received, slippage relatively easily occurs by the amount of a gap between the joining assist member 30 and the hole 11 of the top plate 10.

Thereafter, the state that the joining assist member 30 does not easily move but even slight slippage is easy to occur is the factor of deterioration of design accuracy, and it is not admitted. Therefore, the state having no gap between the joining assist member 30 and the hole 11 of the top plate 10 in the joined state is required. This state can be achieved by that the maximum outer diameter P_{D1} of the shaft portion 31 of the joining assist member 30 is designed to be larger than the diameter B_{D} of the hole 11 of the top plate 10 and the shaft portion is inserted into the hole by applying pressure. However, a metal has a property of elasticity, and some distortion disappears when stress disappears. Conversely, the metal has a force returning to its original state, and even though the shaft portion is pushed into the hole by applying pressure, the shaft portion may be pushed back. To prevent the occurrence of the problem, the narrow portion 39 is provided in the boundary area at the flange portion side in the shaft portion 31 and a part of the matrix of the top plate 10 flows in the form of a metal in the narrow portion 39 when the joining assist member 30 is pushed into, thereby obtaining caulking effect. As a result, the joining assist member 30 cannot be detached easily.

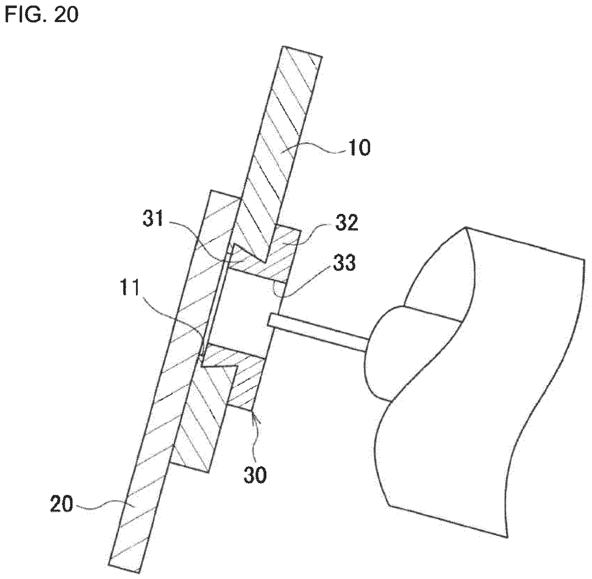

Some side effects are obtained by press-fitting the joining assist member 30. One effect is that joining can be performed in any posture. If the maximum outer diameter P_{D1} of the shaft portion 31 is smaller than the diameter B_{D} of the hole 11 of the top plate 10 and the shaft portion can easily take in and out of the hole, the joining assist member 30 drops down in the case of, for example, upward posture, and joining cannot be performed. However, as shown in FIG. 20, if the joining assist member 30 is press-fitted into the hole 11 of the top plate 10, the joining assist member 30 does not easily drop down and joining work is possible.

If the joining assist member 30 is press-fitted into aluminum or a magnesium alloy as the top plate 10 before the joining step, for example, in other factory different from the joining, coming-off does not easily occur and those are conveyed to a joining factory and can be subjected to a joining step.

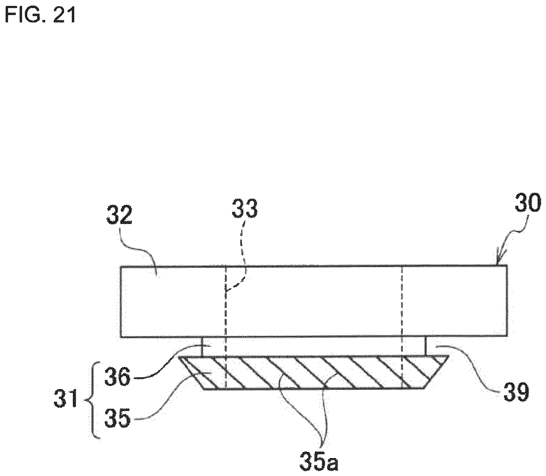

Means of the press-fitting method is not limited, but includes practical means of pushing by human hands, hitting with a hammer or using a press machine that uses oil pressure, water pressure, air pressure, gas pressure or motive power such as electric drive. Furthermore, the joining assist member 30 can be press-fitted into the hole 11 by turning the same. In case where the means is used, screw-like regular undulations are provided at the tip of the shaft portion 31, thereby facilitating the press-fitting by turning. For example, as shown in FIG. 21, a groove 35a may be formed in a tapered portion 35 of the shaft portion 31.

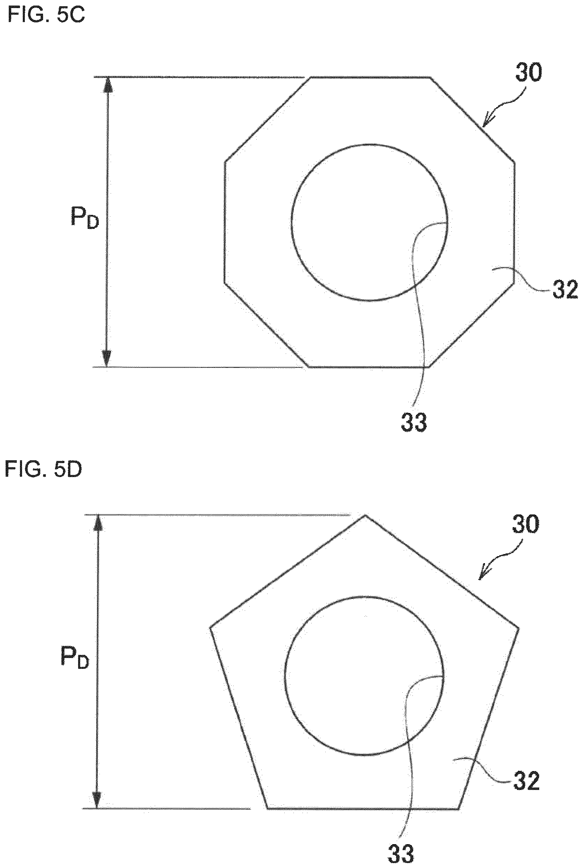

If the pushing pressure is strong, not only the shaft portion 31 but a part of the flange portion 32 may be pushed in the matrix of the top plate 10, but there is no problem (refer to FIG. 4). If the outer diameter of the flange portion 32 is non-circular (refer to FIG. 5A, FIG. 5B, FIG. 5C and FIG. 5D), a part of the flange 32 is pushed in the matrix of the top plate 10. This provides the effect preventing the phenomenon that when the top plate 10 acts rotational force in a horizontal direction to the bottom plate 20, caulking effect disappears and the rotation occurs. This is desirable.

For the above-described reasons, the joining assist member 30 is used which is made of steel, has a stepped external shape including the shaft portion 31 and the flange portion 32 and has the hollow portion 33 formed to penetrate through the shaft portion 31 and the flange portion 32, wherein the maximum outer diameter P_{D1} of the shaft portion 31 and the width P_{D2} of the flange portion 32 are larger than the hole 11 formed in the top plate 10, respectively and the flange portion 31 has the narrow portion 39 at the flange portion side.

There are no particular limitations on the specific material of the steel joining assist member 30 except that it should be pure iron or an iron alloy. Specific examples include soft steel, carbon steel, and stainless steel.

As shown in FIG. 22A and FIG. 22B, various dimensions of the joining assist member 30 are set in the following manners with respect to the top plate 10. FIG. 22A shows the case of using the joining assist member 30 of the embodiment, and FIG. 22B shows the case of using the joining assist member 30 of the first modification.

### Shaft portion height P_{H1}

The shaft portion height P_{H1} is designed to be 10% or larger and 100% or smaller of the thickness B_{H} of the top plate 10. The shaft portion 31 of the joining assist member 30 provides the effect of reducing the melt amount of the Al or Mg during the welding step of the top plate 10 and the effect of caulking and restraining effect by the press-fitting of the joining assist member 30 into the hole 11 of the top plate 10. The degree of propagation of arc heat to the top plate 10 lowers as the shaft portion height P_{H1} increases and hence the former effect is enhanced, and it is thus desirable. However, the shaft portion height P_{H1} being greater than the thickness B_{H} of the top plate 10 is not desirable because a gap is formed between the top plate 10 and the bottom plate 20. Thus, the upper limit of the shaft portion height P_{H1} is 100% of the thickness B_{H}. On the other hand, if the shaft portion height P_{H1} is smaller than 10% of the thickness B_{H}, the former effect cannot be obtained and the weld metal 40 becomes too brittle due to melt of the top plate 10. The latter caulking and restraining effect cannot be obtained and coming-off may occur easily. Therefore, the lower limit of the shaft portion height P_{H1} is 10% of the thickness B_{H} of the top plate 10.

### Maximum outer diameter P_{D1} of shaft portion

The maximum outer diameter P_{D1} of the shaft portion 31 is designed to be 102% or larger and 125% or smaller of the diameter B_{D} of the hole 11 of the top plate 10 (hereinafter referred to as "hole diameter B_{D}"). The shaft portion 31 of the joining assist member 30 has the action of caulking and restraining by the press-fitting into the top plate 10. To exhibit the effect, the maximum outer diameter must be larger than the hole diameter of the top plate 10. If the maximum outer diameter is not at least 2% as large as the hole diameter B_{D}, appropriate pressure cannot be applied to the vicinity of the top plate hole. Therefore, the outer maximum diameter is at least 102% or more of the hole diameter. On the other hand, the caulking force increases as the maximum outer diameter P_{D1} of the shaft portion 31 increases. However, the force necessary for press-fitting increases and simplicity is deteriorated. Furthermore, the shaft portion does not withstand the pressure in the area of the top plate hole and cracks may be generated. For those reasons, the upper limit of the maximum outer diameter P_{D1} of the shaft portion 31 is determined, and is specifically 125%.

### Flange portion width P_{D2}

The width P_{D2} of the flange portion 32 is designed to be 105% or larger of the diameter B_{D} of the hole 11 of the top plate 10. As described above, the flange portion 32 of the joining assist member 30 dominantly plays a role of providing external stress in the thickness direction, that is, resistance force when peeling stress is received. In the member constitution, the shaft portion 31 has resistance force to peeling stress in a certain degree by the caulking and restraining effect to the top plate 10, but the flange portion 32 makes a large contribution in playing that role. The joining assist member 30 becomes stronger with respect to external stress in the thickness direction (three-dimensional direction) as the width P_{D2} and the thickness of the flange portion 32 increase, and it is thus desirable. In the case where the width P_{D2} of the flange portion 32 is smaller than 105% of the diameter B_{DX} of the hole 11, when the joining assist member 30 is deformed elasto-plastically by external stress in the thickness direction, its apparent dimensions are very prone to become smaller than or equal to the corresponding dimensions of the hole 11 of the top plate 10, in which case the top plate 10 is prone to come off. That is, the joining assist member 30 does not provide a strong resistance force. Thus, the lower limit of the width P_{D2} of the flange portion 32 is set at 105% of the diameter B_{D} of the hole 11. It is more preferable that the lower limit of the width P_{D2} of the flange portion 32 be set at 120% of the diameter B_{D} of the hole 11. On the other hand, from the viewpoint of the strength of the joining portion, it is not necessary to set the upper limit.

### Flange portion thickness P_{H2}

The thickness P_{H2} of the flange portion 32 is designed to be 50% or larger and 150% or smaller of the thickness B_{H} of the top plate 10. As described above, the flange portion 32 of the joining assist member 30 becomes stronger with respect to external stress in the thickness direction (three-dimensional direction) as its external dimensions and thickness P_{H2} increase, and it is thus desirable. A stronger resistance force can be obtained by increasing the thickness P_{H2} of the flange portion 32 according to the thickness B_{H} of the top plate 10 of the joint. In the case where the thickness P_{H2} of the flange portion 32 is smaller than 50% of the thickness B_{H} of the top plate 10, the flange portion 32 of the joining assist member 30 is easily deformed elasto-plastically by external stress in the thickness direction. If the visible dimensions of the flange portion 32 become smaller than or equal to the corresponding dimensions of the hole 11 of the top plate 10, coming-off is prone to occur. That is, the joining assist member 30 does not produce a strong resistance force. Thus, the lower limit of the thickness P_{H2} of the flange portion 32 is set at 50% of the thickness B_{H} of the top plate 10. On the other hand, in the case where the thickness P_{H2} of the flange portion 32 is larger than 150% of the thickness B_{H} of the top plate 10, not only the appearance is poor because of excessive projection of the flange portion 32 but also the weight is too heavy, though the joint has no problem of insufficient strength. It is therefore necessary to set the thickness P_{H2} of the flange portion 32 to 150% or smaller of the thickness B_{H} of the top plate 10.

As shown in FIG. 1B, the diameter W_{D} of the excess weld metal Wa that is formed on the surface of the joining assist member 30 in the filling and welding step by arc is set 105% or larger of the diameter Ps of the hollow portion 33 of the joining assist member 30.

Although as described above the joining assist member 30 has a role of providing resistance force against external stress in the thickness direction (three-dimensional direction), a strong resistance force cannot be provided unless the hollow portion 33 is filled up completely. If the hollow portion 33 is not filled up completely and part of the inner surface of the hollow portion 33 is left exposed, coming-off may occur easily because of an insufficient connection area of the joining assist member 30 and the weld metal 40. To increase the connection area of the joining assist member 30 and the weld metal 40, it is desired to fill up the hollow portion 33 completely and form an excess weld metal Wa. In the case where the excess weld metal Wa is formed, its diameter W_{D} should be larger than the diameter Ps of the hollow portion 33 of the joining assist member 30. The lower limit of the diameter W_{D} of the excess weld metal Wa is set 105% or larger of the diameter Ps of the hollow portion 33 of the joining assist member 30, because it means that the excess weld metal Wa has been formed surely.

Although it is not always necessary to restrict the thickness of the top plate 10 or the bottom plate 20, it is desirable to set the thickness of the top plate 10 to be 4.0 mm or smaller when the working efficiency and the overlapping welding shape are taken into consideration. On the other hand, it is desirable that the thickness of both the top plate 10 and the bottom plate 20 be 0.5 mm or larger because, considering the heat input of the arc welding, an unduly small thickness causes burn-through and thereby makes the welding difficult.

With the above measures, the top plate 10 made of an aluminum alloy or a magnesium alloy and the bottom plate 20 made of steel can be joined strongly.

It is known that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated if water exists in an interface where different kinds of metals are in contact with each other. Thus, where the embodiment is applied to a joining location into which water is prone to intrude, it is necessary to subject the joining location to sealing treatment for preventing intrusion of water to prevent electric corrosion. Also in this joining method, since there are plural interfaces where an Al alloy or Mg alloy comes into contact with steel, it is preferable to use a resin-based adhesive not only for further increase of joint strength but also as a sealing material.

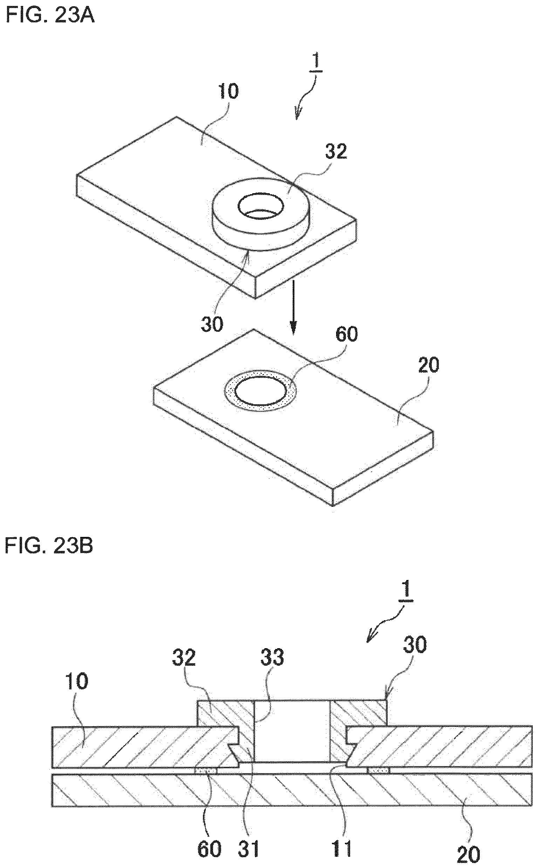

For example, as in a first modification shown in FIG. 23A and FIG. 23B, adhesive 60 may be applied in a ring-like shape around a welding portion over entire circumference between the joining surfaces of the top plate 10 and the bottom plate 20. As in the second modification shown in FIG. 24A and FIG. 24B, another method for applying adhesive 60 around a welding portion over entire circumference between joining surfaces of the top plate 10 and the bottom plate 20 includes a method in which adhesive 60 is applied in the entire area excluding the welding portion. This makes it possible to lower the electric corrosion rates of the top plate 10, the bottom plate 20, and the weld metal 40.

As in a third modification shown in FIG. 25A and 25B, adhesive 60 may be applied between a portion around the hole 11 of the top plate 10 and the bottom surface of the joining assist member 30. This makes it possible to lower the electric corrosion rates of the top plate 10, the joining assist member 30, and the weld metal 40.

As in a fourth modification shown in FIG. 26A and 26B, adhesive 60 may be applied to the boundary between the joining assist member 30 and the surface of the top plate 10. This provides the effect of lowering the electric corrosion rates. Whereas in the third modification shown in FIG. 25A and FIG. 25B the application can be made only before the welding step, in the fourth modification shown in FIG. 26A and FIG. 26B the application can be made either before or after the welding step.

The surface of the joining assist member 30 to come into contact with the top plate 10, need not always be a flat surface as shown in FIG. 27A. That is, as shown in FIG. 27B and FIG. 27C, when necessary, the surface of the joining assist member 30 to come into contact with the top plate 10 may have slits 34a or 34b. In particular, where the surface to come into contact with the top plate 10 has circumferential slits 34a, grid-like slits 34b, or radial slits (not shown), applied adhesive 60 goes into the slits 34a or 34b and does not escape, whereby stable adhesion is attained and a reliable sealing effect is obtained. In the case of having such a non-flat surface, a portion having the largest height is defined as the thickness P_{H2} of the flange portion 32 of the joining assist member 30.

Rounding the sides of the joining assist member 30 as shown in FIG. 28 because of safety during use, limitations relating to forging, and other reasons poses no problem. In particular, widening a top edge surface of the hollow portion 33 into a conical shape provides advantages of increasing the fitting ease of the weld metal 40 and the joining assist member 30 and improving the appearance.

The surface of the hollow portion 33 formed in the joining assist member 30 may be a flat cylindrical surface. However, a groove of screw 33a may be formed as shown in FIG. 29. In this method, although a male screw is not used, the contact area to the molten pool is increased by the groove of screw 33a when arc-welded. Thus, the weld metal 40 and the joining assist member 30 are bonded more strongly. In the case of having a non-flat surface including the groove of screw 33a, the diameter Pₛ is defined as the largest distance between confronting portions.

Furthermore, as in a fifth modification shown in FIG. 30, the bottom plate 20 may have a swell portion 21.

In the case where the top plate 10 made of an Al alloy or an Mg alloy is relatively thin, welding can be performed satisfactorily by not working the bottom plate 20 at all and merely making a hole 11 through the top plate 10 and inserting the joining assist member 30 into the hole 11 in during the joining. However, in the case where the top plate 10 is thick, it takes a long time to fill up the hollow portion 33 of the joining assist member 30 in the welding step, which means low efficiency. Furthermore, because of the great amount of heat, part of the bottom plate 20 made of steel easily causes burn-through before filling-up of the hollow portion 33. If the swell portion 21 is formed by drawing in the bottom plate 20, the volume of the hole 11 is reduced, whereby a burn-through failure while the hollow portion 33 is being filled up is prevented.

In addition, in the fifth modification, the swell portion 21 of the bottom plate 20 can be used as a mark when the top plate 10 and the bottom plate 20 are positioned with respect to each other. As a result, the swell portion 21 of the bottom plate 20 and the hole 11 of the top plate 10 can easily be positioned with respect to each other and the efficiency of the overlapping work can be increased.

As shown in FIG. 31A, the swell portion 21 of the bottom plate 20 is formed by drawing while restraining the peripheral portion around the portion where the swell portion 21 is to be formed, by dies 52. The swell portion 21 is formed by pushing a punch 53 by applying pressure to a portion where the swell portion 21 is to be formed as shown in FIG. 31B.

Since the welding method of this embodiment can be called spot welding where there is a small joining area, in the case of joining overlapped portions J of materials of actual use having a relatively large joining area, this welding method may be employed at plural positions as shown in FIG. 30A to FIG. 30C. With this measure, strong joining can be attained in the overlapped portions J. Whereas the embodiment can be used for open cross section structures as exemplified in FIG. 32B and FIG. 32C, it can be used particularly suitably for enclosed cross section structures as exemplified in FIG. 30A.

As described above, the arc welding method for dissimilar material joining according to the embodiment includes a step of making a circular hole 11 through the top plate 10; a step of press-fitting a joining assist member 30 made of steel into the hole 11 formed in the top plate 10, the joining assist member 30 having a stepped external shape including a shaft portion 31 and a flange portion 32 and having a hollow portion 33 penetrating the shaft portion and the flange portion, wherein a maximum outer diameter P_{D1} of the shaft portion 31 and a width P_{D2} of the flange portion 32 is larger than a diameter B_{D} of the hole 11 of the top plate 10 respectively and the shaft portion 31 has a narrow portion 39 at the flange portion side; a step of overlapping the top plate 10 with the bottom plate20; and a step of filling the hollow portion 33 of the joining assist member 30 with a weld metal 40 and welding the bottom plate 20 and the joining assist member 30 by any method of the following (a) to (e).

(a) A gas-shielded arc welding method using, as a consumable electrode, a welding wire to provide the weld metal 40 made of an iron alloy or an Ni alloy;
(b) a non-gas arc welding method using the above welding wire as a consumable electrode;
(c) a gas tungsten arc welding method using the above welding wire as a non-consumable electrode filler;
(d) a plasma arc welding method using the above welding wire as a non-consumable electrode filler; and
(e) a coated arc welding method using, as a consumable electrode, a coated arc welding rod to provide the weld metal 40 made of an iron alloy or an Ni alloy.

These methods make it possible to join the top plate 10 made of an Al alloy or an Mg alloy and the bottom plate 20 made of steel using an inexpensive arc welding facility with high quality including high strength and reliability, and can be applied to both of an open cross section structure and an enclosed cross section structure with no limitations.

The bottom plate 20 has a swell portion 21 formed by drawing and the swell portion 21 of the bottom plate 20 is placed in the hole 11 of the top plate 10 in the overlapping step. Even where the top plate 10 is thick, this measure makes it possible to prevent a burn-through failure while performing welding and to position the top plate 10 and the bottom plate 20 with respect to each other.

The above method further includes, before the overlapping step, a step of applying an adhesive 60 to at least one of overlapped surfaces of the top plate 10 and the bottom plate 20 around the hole 11 over its entire circumference. With this measure, the adhesive 60 not only increases the strength of the joint but also serves as a sealing material and can thereby lower the corrosion rates of the top plate 10, the bottom plate 20 and the weld metal 40.

In the press-fitting step, an adhesive 60 is applied to at least one of confronting surfaces between the joining assist member 30 and the top plate 10 opposed to the joining assist member 30. With this measure, the corrosion rates of the top plate 10, the joining assist member 30, and the weld metal 40 can be lowered.

In the press-fitting step or after the filling and welding step, an adhesive 60 is applied to a boundary between the joining assist member 30 and a surface of the top plate 10. With this measure, the joining strength of the top plate 10 and the joining assist member 30 can be increased.

The height P_{H1} of the shaft portion 31 of the joining assist member 30 is 10% or larger and 100% or smaller of the thickness B_{H} of the top plate 10. This makes it possible to decrease the melt amount of the top plate 10 during the welding step and to caulk and restrain the joining assist member 30 to the hole of the top plate 30.

The maximum outer diameter P_{D1} of the shaft portion 31 of the joining assist member 30 is 102% or larger and 125% or smaller of the diameter length B_{D} of the hole 11 of the top plate 10. This makes it possible to caulk and restrain the joining assist member 30 to the hole 11 of the top plate 10.

The width P_{D2} of the flange portion 32 of the joining assist member 30 is 105% or larger of the diameter B_{D} of the hole 11 of the top plate 10. This allows the joining assist member 30 to function to provide resistance force against external stress in the thickness direction.

The thickness P_{H2} of the flange portion 32 of the joining assist member 30 is 50% or larger and 150% or smaller of the thickness B_{H} of the top plate 10. This allows the joining assist member 30 to function to provide resistance force against external stress in the thickness direction while taking appearance and weight increase into consideration.

In the filling and welding step, an excess weld metal Wa is formed on a surface of the joining assist member, and the diameter W_{D} of the excess weld metal Wa is 105% or larger of the diameter Ps of the hollow portion 33 of the joining assist member 30. This allows the excess weld metal Wa to function to provide resistance force against external stress in the thickness direction.

The joining assist member 30 according to the embodiment is made of steel, has a stepped external shape including a shaft portion 31 and a flange portion32, and has the hollow portion 33 formed to penetrate through the shaft portion 31 and the flange portion 32, wherein the maximum outer diameter P_{D1} of the shaft portion 31 and the width P_{D2} of the flange portion are larger than the diameter B_{D} of a hole 11 of the top plate 10, respectively, and the flange portion 31 has a narrow portion 39 at the flange portion side. Configured in this manner, the joining assist member 30 can be used suitably for the above-described arc welding method for dissimilar material joining.

The dissimilar material welded joint 1 according to the embodiment includes the top plate 10 made of an aluminum alloy or a magnesium alloy and a bottom plate 20 made of steel and arc-welded to the top plate 10, wherein the top plate 10 has a circular hole 11 that reaches an overlapped surface to the bottom plate 20, wherein the dissimilar material welded joint 1 further includes a joining assist member 30 made of steel, the joining assist member 30 having a stepped external shape including a shaft portion 31 press-fitted into the hole 11 formed in the top plate 10 and a flange portion 32 and having a hollow portion 33 formed to penetrate through the shaft portion 31 and the flange portion 32, wherein the maximum outer diameter P_{D1} of the shaft portion 31 and the width P_{D2} of the flange portion 32 are larger than the dimeter B_{D} of the hole 11 of the top plate 10, respectively and the shaft portion 31 has a narrow portion 39 at the flange portion side, and wherein the hollow portion 33 of the joining assist member 30 is filled with a weld metal 40 made of an iron alloy or an Ni alloy, and a melting portion W is formed of the weld metal 40 and a part of melted portions of the bottom plate 20 and the joining assist member 30.

This dissimilar material welded joint 1 having the top plate 10 made of an Al alloy or an Mg alloy and the bottom plate 20 made of steel is joined using an inexpensive arc welding facility, with good joining quality high in strength and reliability, and can be applied to both an open cross section structure and an enclosed cross section structure with no limitations.

The plate material with a joining assist member according to the embodiment includes a top plate (plate material made of an aluminum alloy or a magnesium alloy) 10 having a circular hole 11 and made of an aluminum alloy or a magnesium alloy, and a joining assist member made of steel, the joining assist member having a stepped external shape including a shaft portion 31 and a flange portion 32 and having a hollow portion 33 penetrating the shaft portion 31 and the flange portion 32, the maximum outer diameter P_{D1} of the shaft portion 31 and the width P_{D2} of the flange portion 32 being larger than the diameter B_{D} of the hole 11 of the top plate 10 respectively and the shaft portion 31 having a narrow portion 39 at the flange portion side, and the joining assist 30 is attached to the top plate 10 by fixing the shaft portion 31 to the hole 11 formed in the top plate 10.

The plate material with a joining assist member is arc-welded to the bottom plate 20 made of steel, thereby a dissimilar material welded joint can be formed strongly and in high reliability.

The invention is not limited to the above-described embodiment and Examples and various modifications, improvements, etc. are possible as appropriate.

### (Second Embodiment)

In the arc welding method for dissimilar material joining according to the embodiment, a dissimilar material welded joint 1 as shown in FIG. 33A and FIG. 33B is obtained by joining a top plate 10 (first plate) made of an aluminum alloy or a magnesium alloy and a bottom plate 20 (second plate) made of steel that are overlapped with each other, via a joining assist member 30 made of steel, by an arc welding method described later. Further, the second embodiment is described by diverting the first embodiment described above.

The top plate 10 has a circular hole 11 that reaches an overlapped surface to the bottom plate 20 to penetrate in the thickness direction, and the whole joining assist member 30 is inserted into the hole 11 by applying pressure.

As shown in FIG. 34A and FIG. 34B, the joining assist member 30 has a stepped external shape including a shaft portion 31 and a flange portion 32 is outward to the shaft portion 31. A circular hollow portion 33 is formed through the joining assist member 30 so as to penetrate through the shaft portion 31 and the flange portion 32.

As described later, the joining assist member 30 is designed such that the maximum outer diameter P_{D1} of the shaft portion 31, the width P_{D2} of the flange portion 32 and the diameter of B_{D} of the hole 11 of the top plate 10 satisfy the relationship of P_{D2}>P_{D1}>B_{D} and the entire thickness P_{H} is equal to or smaller than the thickness B_{H} of the top plate 10 (refer to FIG. 45).

In the embodiment, the external shape of the shaft portion 31 has a structure having a narrow portion 39 at the flange portion side. Specifically, the shaft portion 31 has a tapered portion 35 gradually increasing in its outer peripheral surface toward the flange portion 12 side from the tip and defining the maximum outer diameter P_{D1}, and a small diameter cylindrical portion 36 having a diameter smaller than the maximum outer diameter P_{D1} of the tapered portion 35. Therefore, the external shape of the shaft portion 31 has the narrow portion 39 at the flange portion side by the small diameter cylindrical portion 36.

The external shape of the shaft portion 31 is not particularly limited so long as the joining assist member 30 is fixed to the top plate 10 with caulking and restraining force by having the narrow portion 39 at the flange portion side. For example, as shown in FIG. 3A, the shaft portion 31 may be a diameter reduction tapered portion 37 in which its outer peripheral surface gradually decreases from the tip to the flange portion 32. Furthermore, as shown in FIG. 3B, the shaft portion 31 may be constituted of a large diameter cylindrical portion 38 provided at the tip side, and the small diameter cylindrical portion 36 provided at the flange portion side.

The function in the narrow portion 39 does not substantially change even in any of the joining assist portions 30 of FIG. 2A, FIG. 3A and FIG. 3B. Therefore, the description hereinafter is based on the optional joining assist member 30. FIG. 35 is a sectional view corresponding to FIG. 33B of the dissimilar material welded joint 1 in the case of using the joining assist member 30 of FIG. 3A.

The external shape of the flange portion 32 of the joining assist member 30 is not limited to a hexagon as shown in FIG. 34B, and may be any shape as long as the flange portion 32 closes the hole 11 formed in the top plate 10 after welding. For example, the external shape of the flange portion 32 may be a circle as shown in FIG. 36A an elliptical shape as shown in FIG. 36B or a polygon of a rectangle or more as shown in FIG. 34B and FIG. 5A to FIG. 5D. Furthermore, corners of the polygon may be rounded as shown in FIG. 5B.

In the embodiment, the flange portion 32 is used by press-fitting into the top plate 10. For this reason, in case where the top plate 10 and the bottom plate 20 are joined to each other by only one joining assist member 30, when strong rotational force F_{R} is applied to the top plate 10 in the true circular flange portion 32, there is a possibility that the top plate 10 rotates centering the joining assist member 30. For this reason, when the external shape of the flange portion 32 is an elliptical shape or a polygon, the top plate 10 can be prevented from relatively rotating to the bottom plate 20 even if rotary force F_{R} is applied as shown in FIG. 37B.

In those joining assist members 30, the width P_{D2} of the flange portion 32 described later is defined by the shortest distance between confronting portions.

Thus, the shaft portion 31 and the hollow portion 33 are located on the same axis as the hole 11 of the top plate 10 by that the whole joining assist member 30 is press-fitted into the top plate 10.

The hollow portion 33 of the joining assist member 30 is filled with a weld metal 40 of an iron alloy or an Ni alloy provided by melt of a filler material (welding material) by arc welding, and a melting portion W is formed of the weld metal 40 and a part of melted portions of the bottom plate 20 and the joining assist member 30. Thus, the melting portion W is placed in the hole 11 of the top plate 10 and serves to weld the joining assist member 30 and the bottom plate 20, whereby the top plate 10 and the bottom plate 20 are joined.

An arc welding method for dissimilar material joining for constructing the dissimilar material welded joint 1 will be described below with reference to FIG. 38A to FIG. 38D. First, as shown in FIG. 38A, boring work for making a hole 11 through the top plate 10 is performed (step S1). Then, as shown in FIG. 38B, whole of the joining assist member 30 is press-fitted into the hole 11 of the top plate 10 from the top surface of the top plate 10 (step S2). Overlapping work of overlapping the top plate 10 and the bottom plate 20 with each other is then performed as shown in FIG. 38C (step S3). Subsequently, as shown in FIG. 38D, the top plate 10 and the bottom plate 20 are joined to each other by performing any arc welding work of (a) a consumable-electrode gas-shielded arc welding method, (b) a non-gas arc welding method, (c) a gas tungsten arc welding method, (d) a plasma arc welding method, and (e) a coated arc welding method (step S4). FIG. 38D shows a case where arc welding work is performed by (a) the consumable-electrode gas-shielded arc welding method.

Specific examples of methods for the boring work of step S1 include a) punching with a punch, b) press punching using a die, and c) cutting using a laser or plasma or by a water jet method.

In the press-fitting work, as shown in FIG. 39, the joining assist member 30 is press-fitted into the hole 11 from an upper surface 10a of the top plate 10 until an exposed surface 32a of the flange portion 32 is nearly flush with the upper surface (surface of the first plate) 10a of the top plate 10. If the flange portion 32 protrudes from the upper surface 10a of the top plate 10, beauty is deteriorated, and additionally, in case where other member is placed on the top plate 10, protrusion of the joining assist member 30 may cause trouble. Furthermore, maintaining flatness of the upper surface 10a of the top plate 10 after welding is valuable in design freedom.

However, the depth of the joining assist member 30 pushed does not adversely affect joining strength greatly even though depressed than the upper surface 10a of the top plate 10 as shown in FIG. 40, and the depression is admitted.

On the other hand, it is necessary that a lower surface of the joining assist member 30 does not protrude from a lower surface (i.e. overlapped surface to the bottom plate 20) of the top plate 10. If protruded, a gap is formed between the top plate 10 having the joining assist member 30 press-fitted thereinto and the bottom plate 20, and assembling accuracy is deteriorated.

However, in a special case where the presence of a gap between the top plate 10 and the bottom plate 20 is known from the first, the protrusion of the joining assist member 30 from the lower surface of the top plate 10 is admitted according to the gap.

For the above reason, the thickness P_{H} of the joining assist member 30 is designed to be equal to or smaller than the thickness B_{H} of the top plate 10.

Means of the press-fitting work is not limited, but includes practical means of, hitting with a hammer or using a press machine that uses oil pressure, water pressure, air pressure, gas pressure or motive power such as electric drive.

The joining assist member can be press-fitted by turning the same. In case where the means is used, screw-like regular undulations are provided at the tip of the shaft portion 31, thereby facilitating the press-fitting by turning. For example, as shown in FIG. 21, a spiral groove 35a may be formed in a tapered portion 35 of the shaft portion 31.

The arc welding work of step S4 is necessary to join the joining assist member 30 and the bottom plate 20 via a weld metal 40 in the hole 11 of the top plate 10 and fill the hollow portion 33 of the joining assist member 30. It is therefore indispensable for the arc welding to insert a filler material (welding material). More specifically, the weld metal 40 is formed by melting the filler material by the following four arc welding methods.
(a) The consumable-electrode gas-shielded arc welding method, which is a welding method commonly called MAG or MIG, is a method in which a good welded portion is formed by using a solid wire or a flux-containing wire as a filler/arc generation consumable electrode and shielding the welded portion from the air by a shielding gas such as CO₂, Ar, He, or O₂.
(b) The non-gas arc welding method, which is also called a self-shielded arc welding method, is a means for forming a good welded portion using a special flux-containing wire as a filler/arc generation consumable electrode while dispensing with a shielding gas.
(c) The gas tungsten arc welding method is one kind of gas-shielded arc welding method but is of a non-consumable-electrode type, and is commonly called TIG. An inert gas such as Ar or He is used as a shielding gas. An arc is generated between a tungsten electrode and a base material, and a filler wire is supplied to the arc from the side.
   Whereas in general no current is applied to the filler wire, there exists hot wire TIG in which the melting rate is increased by applying a current to the filler wire. In this case, no arc is generated from the filler wire.
(d) The plasma arc welding method, which is the same as the TIG in the principle, is a welding method in which the arc power is increased by tightening an arc by employing double gas supply systems and increasing the gas supply rate.
(e) The coated arc welding method is an arc welding method in which a coated arc welding rod in which a metal core wire is coated with flux is used as a filler. No shielding gas is necessary.

As for the filler material (welding material), common welding wires or welding rods can be employed as long as the weld metal 40 is an Fe alloy. An Ni alloy can also be used because it does not cause any problems in welding to iron.

More specifically, on the market are JIS standard materials such as (a) Z3312, Z3313, Z3317, Z3318, Z3321, Z3323, and Z3334, (b) Z3313, (c) Z3316, Z3321, and Z3334, and (d) Z3211, Z3221, Z3223, Z3224 and AWS (American Welding Society) standard materials such as (a) A5.9, A5.14, A5.18, A5.20, A5.22, A5.28, A5.29, and A5.34, (b) A5.20, (c) A5.9, A5.14, A5.18, and A5.28, and (d) A5.1, A5.4, A5.5, and A5.11.

The hollow portion 33 of the joining assist member 30 is filled with a filler material using the above arc welding methods. In general, it is not necessary to move the target position of the filler wire or welding rod. It is appropriate to finish welding by ending arc formation after a lapse of a proper supply time. However, in the case where hollow portion 33 has a large area, the target position of the filler wire or welding rod may be moved so as to form a circle in the hollow portion 33.

As for the weld penetration of the weld metal 40, it is necessary that a part of the bottom plate 20 be melted to a proper extent as shown in FIG. 41A. There is no problem even if as shown in FIG. 41B the weld metal 40 is formed past the bottom surface of the bottom plate 20, that is, the bottom plate 20 is melted to such an extent that what is called a penetration bead is formed.

However, high strength for a joint cannot be obtained if no part of the bottom plate 20 is melted and the weld metal 40 is merely placed thereon, because metallic bonding is incomplete. On the other hand, welding needs to be performed so that the weld metal 40 does not melt so deep that the weld metal 40 and the bottom plate 20 cause burn-through.

By the above steps of work, the top plate 10 made of an Al alloy or an Mg alloy and the bottom plate 20 made of steel are joined with high strength.

Roles of the steel joining assist member 30 that is used in the above-described arc welding method is described below.

First, where as shown in FIG. 10A and FIG. 10B a top plate 10 made of aluminum is simply overlapped with a bottom plate 20 made of steel and arc spot welding is performed at a fixed point for a prescribed time from the top plate side using a welding wire made of steel or a nickel alloy, a weld metal 40a is formed that is an alloy of aluminum and steel or aluminum, steel, and nickel. Having a large aluminum content, this alloy is in the form of intermetallic compounds (IMCs) which are fragile. Although it appears that joining is made in such a dissimilar material welded joint 100a, the weld metal 40a is broken easily and disjoining occurs as shown in FIG. 11A and FIG. 11B when receiving tensile stress in a horizontal direction (shearing tension). Also when receiving tensile stress in the vertical direction (peeling tension), as shown in FIG. 12A and FIG. 12B the weld metal 40a is broken or the interface portion between the weld metal 40a and the top plate 10 or the interface portion between the weld metal 40a and the bottom plate 20 is broken and disjoining occurs like the top plate 10 comes off.

As described above, in the case where the top plate 10 made of aluminum and the bottom plate 20 made of steel are simply overlapped and they are subjected to penetration welding, the entire weld metal 40a becomes intermetallic compounds and hence is vulnerable to both shearing tension and peeling tension. As such, this dissimilar material welded joint is not suitable for practical use.

As shown in FIG. 13A and FIG. 13B, another method is conceivable in which a hole 11 having a proper size is made through a top plate 10 and a molten welding material made of steel or a nickel alloy is applied so as to fill up the hole 11.

In this case, since a weld metal 40b formed of the welding material and steel that is the bottom plate 20 that are formed in an initial stage of welding do not contain molten aluminum, no intermetallic compounds are formed and the weld metal 40b is high in strength and toughness and is strongly connected to the bottom plate 20. Furthermore, a weld metal 40b formed inside the hole 11 of the top plate 10 contains very small amount of molten aluminum. Generation of intermetallic compounds much suppressed, and in particular, its central portion is robust. However, an intermetallic compound layer of aluminum and steel or aluminum and nickel is formed in the vicinity of the hole 11 of the top plate 10. When shearing tensile stress acts on such a dissimilar material welded joint 100b as shown in FIG. 14A, the bottom plate side withstands strong stress because of the strong metallic bonding. On the other hand, on the top plate side, although intermetallic compounds are formed around the hole 11, the base materials of the top plate 10 and the bottom plate 20 are deformed in an initial stage because they cannot be moved by peeling at the intermetallic compounds because of their shape. Thus, the deformation ability is higher than in the case of the dissimilar material welded joint 100a shown in FIG. 11A and FIG. 11B in which a brittle fracture occurs with almost no deformation. However, when the base materials are deformed further and the joining portion is inclined by close to 90°, as shown in FIG. 14B, the state as in the case of reception of vertical peeling stress is established. When this state occurs, the intermetallic compounds formed around the hole 11 peel off and the top plate 10 comes off easily from the joining portion. That is, the improvement is insufficient. As shown in FIG. 15A and FIG. 15B, the same result naturally occurs in a vertical tension test.

In view of the problems of the above two dissimilar material welded joints 100a and 100b, the joining assist member 30 according to the embodiment having the two-level structure is used to withstand tensile stress in the shearing direction and stress in the vertical peeling direction. More specifically, as shown in FIG. 38A to FIG. 38D, a hole is made through the top plate 10, the joining assist member 30 having a hollow portion 33 is press-fitted into the hole 11 formed in the top plate 10 and fixed, then the top plate 10 is overlapped with the bottom plate 20 to be welded, and a weld metal 40 is formed by arc welding so as to fill the inside of the top plate 10 and the joining assist member 30. This produces a state where the joining assist member 30, the weld metal 40, and the bottom plate 20 are weld-joined by strong metallic bonding in a cross section. The most important role of the flange portion 32 of the joining assist member 30 which is wider than the hole 11 of the top plate 10 is resistance to vertical peeling stress. As shown in FIG. 42A, the use of the joining assist member 30 having a proper size can prevent a phenomenon that the top plate 10 is peeled off the weld metal 40 at their interface and thereby comes off. In general, the weld metal 40 fractures after sufficient plastic deformation. The joining assist member 30 does not affect initial stress adversely in response to tensile stress in the shearing direction. Furthermore, the joining assist member 30 prevents a phenomenon that the top plate 10 is peeled off the weld metal 40 at their interface and thereby comes off due to a peeling stress variation after the 90° inclination of the welding portion (see FIG. 42B) due to the deformation of base materials.

The flange portion 32 of the joining assist member 30 increases strength to external stress in the thickness direction (three-dimensional direction) as the area is large and the thickness P_{H2} is large, which is preferred. However, if the area and thickness are excessively large, the pressure necessary for press-fitting increases, and not only strong press apparatus is required, but excessive stress is generated to the top plate. As a result, cracks are generated in the top plate 10 or the joining assist member 30, or the top plate or the joining assist member is deformed. Therefore, the area and thickness are set to appropriate size considering material, thickness and hole diameter of the top plate 10.

The joining assist member 30 has a protective wall effect for avoiding melting of Al alloy and Mg alloy. The portions that are most easy to melt in the joining portions of Al alloy or Mg alloy are an inner surface of the hole 11 and a surrounding surface of the inner surface. Heat of arc welding can be prevented from directly propagating to Al alloy or Mg alloy by covering those surfaces with the joining assist member 30 (refer to area X of FIG. 43A), thereby preventing formation of an intermetallic compound (IMC) by mixing with steel. If penetration range of arc welding is only the joining assist member 30 and the bottom plate 20, dilution of Al or Mg into the weld metal 40 is zero, and IMC is completely prevented.

In the embodiment, the generation of IMC is not required to be zero, and few formation of IMC is admitted. As shown in FIG.43B, even though IMC is formed on the inner surface of the hole 11, if the weld metal 40 has ductility and appropriate strength, the weld metal 40 acts as resistance action to external stress in the thickness direction (two-dimensional direction), and as a result, the influence of IMC layer formed on the periphery of the weld metal 40 is small. IMC is brittle, but even if tensile stress acts as a structure, there is a mechanism that compressive stress and tensile stress act simultaneously on the joining portion and IMC maintains sufficient strength to compressive force. As a result, the formation of ICM layer does not become rupture propagation. Therefore, the joining assist member 30 is not always required to have the same thickness as the thickness of the top plate 10.

As described above, the joining assist member 30 has roles of (1) preventing IMC formation by melting of an aluminum alloy or a magnesium alloy that are materials of the top plate 10 during welding and (2) strongly joining the top plate 10 and the bottom plate 20 after welding. However, in setting the joining assist member to the top plate 10, when the joining assist member is merely press-fitted into the top plate, the joining assist member easily removes from the top plate 10, and this may cause a difficulty in the welding step. The representative examples are the case where after setting the joining assist member 30 to the top plate 10, those are conveyed to a separate place and are welded and the case where welding posture is sideways or upward (refer to FIG. 44). In those cases, the joining assist member unavoidably comes off the top plate and those cannot be welded to each other. To avoid the situation, it is necessary to temporarily prefix the joining assist member 30 to the top plate 10. As the countermeasure, the function of "caulking" utilizing elastoplastic deformation of a metal that is a material of the top plate 10 is imparted to the top plate 10.

Specifically, the countermeasure is achieved by that not only the flange portion 32 of the joining assist member 30 but the maximum outer diameter P_{D1} of the shaft portion 31 is larger than the diameter B_{D} formed in the top plate 10 and the narrow portion 39 having small diameter is provided in the boundary portion between the shaft portion 31 and the flange portion 32.

The maximum outer diameter P_{D1} of the shaft portion 31 of the joining assist member 30 is designed to be slightly larger than the diameter B_{D} of the hole 11 of the top plate 10 and the joining assist member is inserted into the hole by applying pressure, thereby the material of the top plate 10 is elastoplastically deformed and is press spread. Thereafter, when the narrow portion 39 having small diameter is inserted into the hole, press-spreading pressure decreases. As a result, elastically deformed portion causes metal flow and caulking effect in shape is obtained. Thus, the joining assist member 30 can be made to not easily come off by utilizing elastic force of the material itself.

The cross-section in the axis direction of the shaft portion 31 is desirably a circular cross-section similar to the hole 11 of the top plate 10 so as to facilitate press-fitting.

For that the flange portion 32 exhibits resistance action to peeling force in the thickness direction of the top plate 10, the width P_{D2} of the flange portion 32 should be relatively larger than the maximum outer diameter P_{D1} of the shaft portion 31.

For the above reasons, the joining assist member 30 used is made of steel, has a stepped external shape having the shaft portion 31 and the flange portion 32 and has the hollow portion 33 penetrating the shaft portion 31 and the flange portion 32, wherein the maximum outer diameter P_{D1} of the shaft portion 31, the width P_{D2} of the flange portion 32 and the diameter B_{D} of the hole 11 of the top plate 10 have the relationship of P_{D2}>P_{D1}>B_{D}, the shaft portion 31 has the narrow portion 39 at the flange portion side, and the thickness P_{H} of the joining assist member is equal to or smaller than the thickness B_{H} of the top plate 10.

There are no particular limitations on the specific material of the steel joining assist member 30 made of steel except that it should be pure iron or an iron alloy. Specific examples include soft steel, carbon steel, and stainless steel.

FIG. 45 shows various dimensions of the joining assist member 30. In the embodiment, other than the specifications that the maximum outer diameter P_{D1} of the shaft portion 31, the width P_{D2} of the flange portion 32 and the diameter B_{D} of the hole 11 of the top plate 10 have the relationship of P_{D2}>P_{D1}>B_{D}, and the thickness P_{H} of the joining assist member 30 is equal to or smaller than the thickness B_{H} of the top plate 10, the dimensions of the joining assist member 30 are specified as follows.

### Flange portion width P_{D2}

The width P_{D2} of the flange portion 32 is designed to be 110% or larger and 200% or smaller of the diameter B_{D} of the hole 11 of the top plate 10. As described above, the flange portion 32 becomes stronger with respect to external stress in the thickness direction (three-dimensional direction) as its area and thickness P_{H2} increase, and it is desirable. In the case where the width P_{D2} of the flange portion 32 is smaller than 110% of the diameter B_{D} of the hole 11 of the top plate 10, when the flange portion 32 is elasto-plastically deformed by external force in the thickness direction, its apparent diameter is very prone to become the corresponding diameter or smaller of the hole 11 of the top plate 10, in which case the top plate 10 is prone to come off. In other words, the flange portion 32 does not provide strong resistance force. Therefore, the lower limit of the width P_{D2} of the flange portion 32 is set to 110% of the dimeter B_{D} of the hole 11 of the top plate 10. It is more preferable that the lower limit of the width P_{D2} be set to 120% of the diameter B_{D} of the hole 11 of the top plate 10. On the other hand, because the flange portion 32 has a sectional area larger than the shaft portion 31, large force is required for press-fitting and this gives large strain to the top plate 10. Therefore, when shaft portion having large area is press-fitted into the hole, cracks may be generated in the top plate 10, resulting in breakage of the top plate. Therefore, the width (diameter) P_{D2} of the flange portion 32 is desirably set to be 200% or smaller.

### Flange portion thickness P_{H2}

The thickness P_{H2} of the flange portion 32 is designed to be 20% or larger and 80% or smaller of the thickness B_{H} of the top plate 10. The flange portion 32 of the joining assist member 30 dominantly plays a role of providing external stress in the thickness direction, that is, resistance force when peeling stress is received. In the member constitution, the shaft portion 31 and the narrow portion 39 have resistance force to peeling stress in a certain degree by the caulking and restraining effect to the top plate 10, but the flange portion 32 relatively makes a large contribution in playing that role. The flange 32 becomes stronger with respect to external stress in the thickness direction (three-dimensional direction) as the area and the thickness P_{H2} increase, and it is thus desirable. In case where the thickness P_{H2} is smaller than 20% of the thickness B_{H} of the top plate 10, the flange portion 32 of the joining assist member 30 is easily deformed elasto-plastically by external stress in the thickness direction, and the top plate 10 is prone to come off the joining assist member 30. That is, the joining assist member 30 does not produce strong resistance force. Therefore, the lower limit of the thickness P_{H2} of the flange portion 32 is desirably set to be 20% of the thickness B_{H} of the top plate 10. On the other hand, in case where the thickness P_{H2} of the flange portion 32 is larger than 80% of the thickness B_{H} of the top plate 10, the total height of the narrow portion 39 having the action of temporarily caulking the top plate 10 and the joining assist member 30 is smaller than 20%, and caulking force is weakened. Because the flange portion 32 has a sectional area larger than the shaft portion 31, large force is required for press-fitting and this gives large strain to the top plate 10. Therefore, when shaft portion having large area is deeply press-fitted into the hole, cracks may be generated in the top plate 10, resulting in breakage of the top plate. Therefore, the thickness P_{H2} of the flange portion 32 is desirably set to be 80% or smaller of the thickness B_{H} of the top plate 10.

As shown in FIG. 46, an unfilled height P_{H3} of the weld metal 40 from the exposed surface 32a of the flange portion 32 is set to be 30% or smaller of the thickness B_{H} of the top plate 10. The hollow portion 33 of the joining assist member 30 is filled with the weld metal 40 and it is desirable that its surface is the same height as the surface of the joining assist member 30. As shown in FIG. 47, this suppresses deformation of the joining assist member 30 against external stress of the thickness direction (three-dimensional direction) external force, and high strength is obtained. On the other hand, as shown in FIG. 48A, in case where the unfilled height P_{H3} is excessively large, joining area of the joining assist member 30 and the weld metal 40 decreases, resulting in the decrease of joining strength. When only less than 70% of the thickness B_{H} of the top plate 10 is filled, joint joining strength remarkably decreases, and as shown in FIG. 48B, the joining assist member 30 deforms and the top plate 10 is prone to come off. For this reason, the lower limit of the unfilled height is set to be 30% of the thickness B_{H} of the top plate 10.

On the other hand, as described above, ideally the weld metal 40 is filled in the same height as the surface of the top plate 10. However, in fabricating the dissimilar material welded joint into large structure, in case where the upper space of the joining portion has excess space, the entire hollow portion 33 of the joining assist member 30 may be filled with the weld metal 40 and excess weld metal may be formed.

Although it is not always necessary to restrict the thickness of the top plate 10 or the bottom plate 20, it is desirable to set the thickness of the top plate 10 to be 4.0 mm or smaller when the working efficiency and the overlapping welding shape are taken into consideration. On the other hand, it is desirable that the thickness of both the top plate 10 and the bottom plate 20 be 0.5 mm or larger because, considering the heat input of the arc welding, an unduly small thickness causes burn-through and thereby makes the welding difficult.

With the above measures, the top plate 10 made of an aluminum alloy or a magnesium alloy and the bottom plate 20 made of steel can be joined strongly.

It is known that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated if water exists in an interface where different kinds of metals are in contact with each other. Thus, where the embodiment is applied to a joining location into which water is prone to intrude, it is necessary to subject the joining location to sealing treatment for preventing intrusion of water to prevent electric corrosion. Also in this joining method, since there are plural interfaces where an Al alloy or Mg alloy comes into contact with steel, it is preferable to use a resin-based adhesive not only for further increase of joint strength but also as a sealing material.

For example, as in a first modification shown in FIG. 49A and FIG. 49B, adhesive 60 may be applied in a ring-like shape around a welding portion over entire circumference between the joining surfaces of the top plate 10 and the bottom plate 20. As in the second modification shown in FIG. 50A and FIG. 50B, another method for applying adhesive 60 around a welding portion over entire circumference between joining surfaces of the top plate 10 and the bottom plate 20 includes a method in which adhesive 60 is applied in the entire area excluding the welding portion. This makes it possible to lower the electric corrosion rates of the top plate 10, the bottom plate 20, and the weld metal 40.

Rounding the sides of the joining assist member 30 as shown in FIG. 28 because of safety during use, limitations relating to forging, and other reasons poses no problem. In particular, widening a top edge surface of the hollow portion 33 into a conical shape provides advantages of increasing the fitting ease of the weld metal 40 and the joining assist member 30 and improving the appearance.

The surface of the hollow portion 33 formed in the joining assist member 30 may be a flat cylindrical surface. However, a groove of screw 33a may be formed as shown in FIG. 29. In this method, although a male screw is not used, the contact area to the molten pool is increased by the groove of screw 33a in arc welding. Thus, the weld metal 40 and the joining assist member 30 is bonded more strongly. In the case of having a non-flat surface including the groove of screw 33a, the diameter PS is defined as the largest distance between confronting portions.

Furthermore, as in a modification shown in FIG. 51, the bottom plate 20 may have a swell portion 21.

In the case where the top plate 10 made of an Al alloy or an Mg alloy is relatively thin, welding can be performed satisfactorily by not working the bottom plate 20 at all and merely making a hole 11 through the top plate 10 and inserting the joining assist member 30 into the hole 11 in during the joining. However, in the case where the top plate 10 is thick, it takes a long time to fill up the hollow portion 33 of the joining assist member 30 in the welding step, which means low efficiency. Furthermore, because of the great amount of heat, part of the bottom plate 20 made of steel easily causes burn-through before filling-up of the hollow portion 33. If the swell portion 21 is formed by drawing in the bottom plate 20, the volume of the hole 11 is reduced, whereby a burn-through failure while the hollow portion 33 is being filled up is prevented.

In addition, in this modification, the swell portion 21 of the bottom plate 20 can be used as a mark when the top plate 10 and the bottom plate 20 are positioned with respect to each other. As a result, the swell portion 21 of the bottom plate 20 and the hole 11 of the top plate 10 can easily be positioned with respect to each other and the efficiency of the overlapping work can be increased.

As shown in FIG. 31A, the swell portion 21 of the bottom plate 20 is formed by drawing while restraining the peripheral portion around the portion where the swell portion 21 is to be formed, by dies 50. The swell portion 21 is formed by pushing a punch 51 by applying pressure to a portion where the swell portion 21 is to be formed as shown in FIG. 31B.

Since the welding method of this embodiment can be called spot welding where there is a small joining area, in the case of joining overlapped portions J of materials of actual use having a relatively large joining area, this welding method may be employed at plural positions as shown in FIG. 52A to FIG. 52C. With this measure, strong joining can be attained in the overlapped portions J. Whereas the embodiment can be used for open cross section structures as exemplified in FIG. 52B and FIG. 52C, it can be used particularly suitably for enclosed cross section structures as exemplified in FIG. 52A.

As shown in FIG. 53 and FIG. 54, since the joining assist member 30 embedded in the top plate 10 does not protrude from the front and back surfaces of the top plate 10 in the joining method, Al or Mg matrix of the top plate 10 having the joining assist member 30 embedded therein (the top plate 10 equipped with the joining assist member) is easily press-molded using a mold 70 or the like as a pre-step of the welding step. The top plate 10 equipped with the press-molded joining assist member and the bottom plate 20 are overlapped with each other and welded as a post-step. Of course, the welding method can be performed without discriminating an open cross section structure and an enclosed cross section structure.

The top plate 10 equipped with the joining assist member is formed nearly flat before the press molding step and therefore has good handling property.

As described above, the arc welding method for dissimilar material joining according to the embodiment includes a step of making a circular hole 11 through a top plate 10; a step of press-fitting a joining assist member 30 made of steel into the hole 11 formed in the top plate 10 such that an exposed surface of a flange portion 32 is located to be nearly flush with or inside the surface of the top plate 10, the joining assist member 30 having a stepped external shape including a shaft portion 31 and the flange portion 32 and having a hollow portion 33 formed to penetrate through the shaft portion 31 and the flange portion 32, wherein a maximum outer diameter P_{D1} of the shaft portion 31, a width P_{D2} of the flange portion 32 and a diameter B_{D} of the hole 11 of the top plate 10 have the relationship of P_{D2}>P_{D1}>B_{D} and the shaft portion 31 has a narrow portion 39 at the flange portion side ; a step of overlapping the top plate 10 and a bottom plate 20; and a step of filling a hollow portion 33 of the joining assist member 30 with a weld metal 40 and welding the bottom plate 20 and the joining assist member 30 by any method of the following (a) to (e).
(a) A gas-shielded arc welding method using, as a consumable electrode, a welding wire to provide the weld metal 40 made of an iron alloy or an Ni alloy;
(b) a non-gas arc welding method using the above welding wire as a consumable electrode;
(c) a gas tungsten arc welding method using the above welding wire as a non-consumable electrode filler;
(d) a plasma arc welding method using the above welding wire as a non-consumable electrode filler; and
(e) a coated arc welding method using, as a consumable electrode, a coated arc welding rod to provide the weld metal 40 made of an iron alloy or an Ni alloy.

These methods make it possible to join the top plate 10 made of an Al alloy or an Mg alloy and the bottom plate 20 made of steel using inexpensive arc welding facilities with high quality including high strength and reliability, and can be applied to both of an open cross section structure and an enclosed cross section structure with no limitations.

Since a thickness P_{H} of the joining assist member 30 is equal to or smaller than a thickness B_{H} of the top plate 10, if the joining assist member 30 is press-fitted into the hole 11 formed in the top plate 10 such that an exposed surface of the flange portion 32 of the joining assist member 30 is located to be nearly flush with the surface of the top plate 10, the joining assist member 30 can be prevented from protruding from the lower surface of the top plate 10.

The bottom plate 20 has a swell portion 21 formed by drawing and the swell portion 21 of the bottom plate 20 is placed in the hole 11 of the top plate 10 in the overlapping step. Even where the top plate 10 is thick, this measure makes it possible to prevent a burn-through failure while performing welding and to easily position the top plate 10 and the bottom plate 20 with respect to each other.

The above method further includes, before the overlapping step, a step of applying an adhesive 60 to at least one of overlapped surfaces of the top plate 10 and the bottom plate 20 around the hole 11 over its entire circumference. With this measure, the adhesive 60 not only increases the strength of the joint but also serves as a sealing material and can thereby lower the corrosion rates of the top plate 10, the bottom plate 20 and the weld metal 40.

In the press-fitting step, the top plate 10 is press-molded. That is, since the joining assist member 30 does not protrude from an upper surface 10a of the top plate 10, the top plate 10 having the joining assist member 30 press-fitted therein can be press-molded in a desired shape using a mold or the like.

The height P_{H2} of the flange portion 32 of the joining assist member 30 is 20% or larger and 80% or smaller of the thickness B_{H} of the top plate 10. This allows the joining assist member 30 to function to provide resistance force against external stress in the thickness direction while securing a length of the shaft portion 31 giving caulking action.

The width P_{D2} of the flange portion 32 of the joining assist member 30 is 110% or larger and 200% or smaller of the diameter B_{H} of the hole 11 of the top plate 10. This allows the joining assist member 30 to function to provide resistance force against external stress in the thickness direction while taking press-fitting property to the top plate 10 into consideration.

In the filling and welding step, an unfilled height P_{H3} of the weld metal from the exposed surface of the flange portion is 30% or smaller of the thickness B_{H} of the first plate. This allows the dissimilar material joint 1 to secure joining strength.

The joining assist member 30 according to the embodiment is made of steel, has a stepped external shape including an shaft portion 31 and a flange portion32, and has a hollow portion 33 formed to penetrate through the shaft portion 31 and the flange portion 32, wherein a maximum outer diameter P_{D1} of the shaft portion 31, a width P_{D2} of the flange portion 32 and a diameter B_{D} of the hole 11 of the top plate 10 have the relationship of P_{D2}>P_{D1}>B_{D} and the shaft portion 31 has a narrow portion 39 at the flange portion side. Configured in this manner, the joining assist member 30 can be used suitably for the above-described arc welding method for dissimilar material joining.

The dissimilar material welded joint 1 according to the embodiment includes a top plate 10 made of an aluminum alloy or a magnesium alloy and a bottom plate 20 made of steel and arc-welded to the top plate 10, wherein the top plate 10 has a circular hole 11 that reaches an overlapped surface to the bottom plate 20, wherein the dissimilar material welded joint 1 further includes a joining assist member 30 made of steel, the joining assist member 30 having a stepped external shape including a shaft portion 31 and a flange portion 32, and having a hollow portion 33 formed to penetrate through the shaft portion 31 and the flange portion 32, wherein a maximum outer diameter P_{D1} of the shaft portion 31, a width P_{D2} of the flange portion 32 and a diameter B_{D} of the hole 11 of the top plate 10 have the relationship of P_{D2}>P_{D1}>B_{D} and the shaft portion 31 has a narrow portion 39 at the flange portion side, wherein the joining assist member 30 is fixed into the hole 11 of the top plate 10 such that an exposed surface 32a of the flange portion 32 is located to be nearly flush with or inside an upper surface 10a of the top plate 10, and wherein the hollow portion 33 of the joining assist member 30 is filled with a weld metal 40 of an Ni alloy and additionally a melting portion W is formed of the weld metal 40 and a part of melted portions of the bottom plate 20 and the joining assist member 30.

This dissimilar material welded joint 1 having the top plate 10 made of an Al alloy or an Mg alloy and the bottom plate 20 made of steel is joined using inexpensive arc welding facilities, with good joining quality high in strength and reliability, and can be applied to both an open cross section structure and an enclosed cross section structure with no limitations.

The plate material with a joining assist member according to the embodiment includes a top plate 10 made of an aluminum alloy or a magnesium alloy (plate material made of an aluminum alloy or a magnesium alloy) and having a circular hole 11 and a joining assist member 30 made of steel, wherein the joining assist member 30 has a stepped external shape including a shaft portion 31 and a flange portion 32, and has a hollow portion 33 formed to penetrate through the shaft portion 31 and the flange portion 32, wherein a maximum outer diameter P_{D1} of the shaft portion 31, a width P_{D2} of the flange portion 32 and a diameter B_{D} of the hole 11 of the top plate 10 have the relationship of P_{D2}>P_{D1}>B_{D}, and the shaft portion 31 has a narrow portion 39 at the flange portion side. The joining assist member 30 is fixed into the hole 11 of the top plate 10 such that an exposed surface 32a of the flange portion 32 is located to be nearly flush with or inside the surface of the top plate 10.

The plate material with the joining assist member is arc-welded with a bottom plate 20 made of steel (plate material made of steel) and a dissimilar material welded joint can be formed with good joining quality high in strength and reliability.

The invention is not limited to the above-described embodiment and Examples and various modifications, improvements, etc. are possible as appropriate.

### Examples

The effectiveness of the first embodiment was confirmed using Examples A to E described below.

### <Examples A>

In Examples A, a lap joint was used having a combination of a 1.6 mm-thick top plate 10 made of an aluminum alloy A5083 and a 1.4 mm-thick bottom plate 20 made of 590 MPa-class high tensile strength steel. This lap joint was joined by arc welding by a MAG welding method in which a shielding gas was a mixed gas of 80% Ar and 20% CO₂, using a 1.2 mm-diameter JIS Z3312 YGW16 steel welding wire at a fixed point for a certain period of time.

This welded joint 1 was subjected to breaking tests according to JIS Z3136 "Test piece dimensions and test method of shearing test of resistance spot and projection welded joint" and JIS Z3137 "Cross tension test for resistance spot and projection welded joint." In the following, tensile strength of Z3136 was referred to as TSS and tensile strength of Z3137 was referred to as CTS. Acceptance criteria were TSS ≥ 8 kN and CTS ≥ 5 kN.

To obtain not-indispensable but preferable performance values, the welded joint was also subjected to JASO-CCT (Japanese Automobile Standards Organization Cyclic Corrosion Test) in which a welded joint was subjected to repetition of spraying of salt water, drying, and moistening to cause accelerated corrosion, through 28 days. It was then subjected to the same breaking tests as described above to obtain TSS after corrosion and CTS after corrosion. Acceptance criteria for these preferable performance were that they should be 80% or larger of respective values of the tests without corrosion.

In Table 1, Comparative Examples are denoted by Nos. A1 to A9 and Examples are denoted by Nos. A10 to A18. (Symbol U means "used" and NU means "not used." and symbol F means "formed" and NF means "not formed; hereinafter the same.")

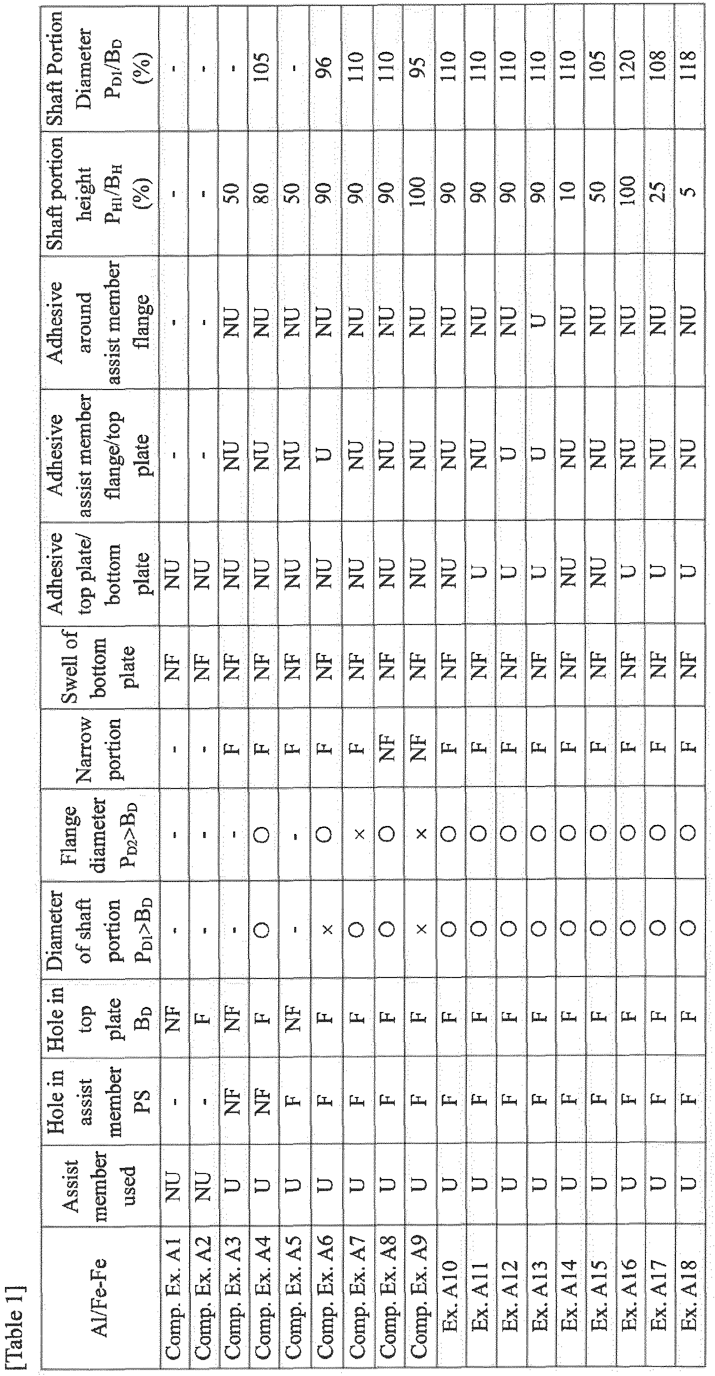

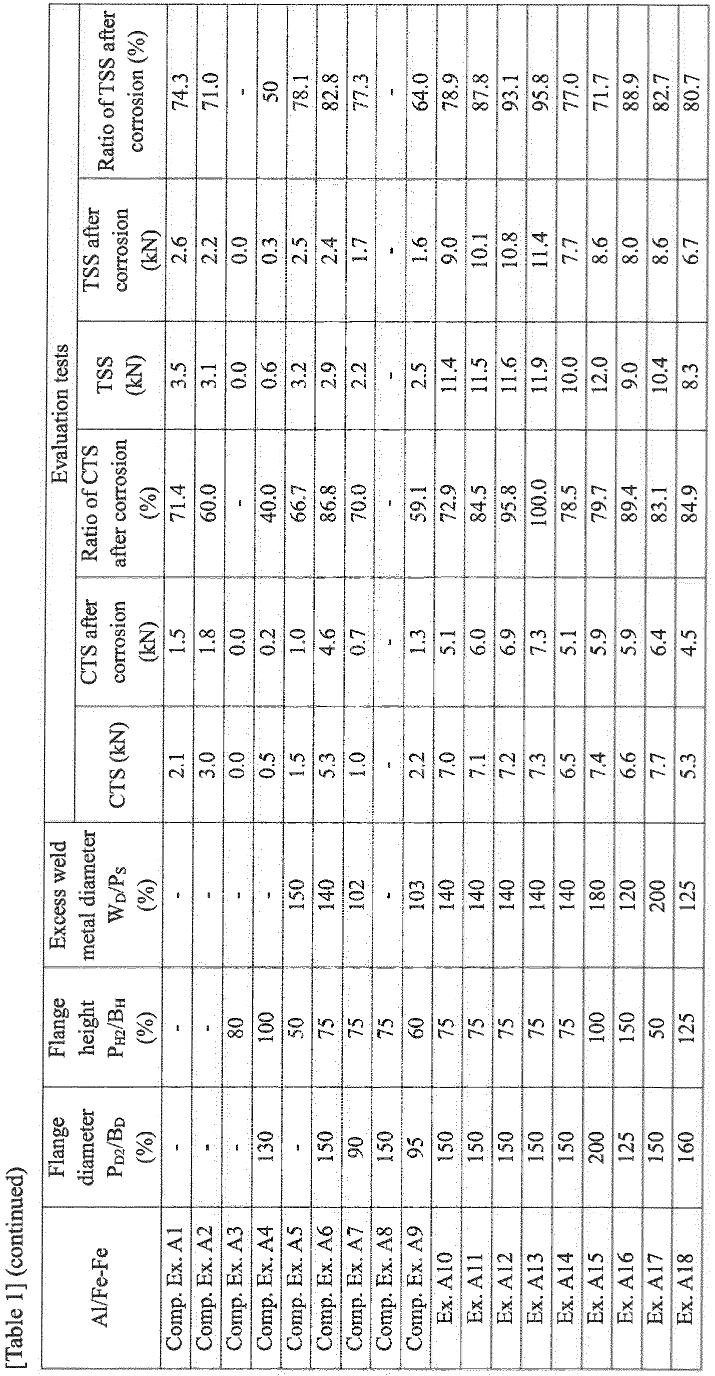

In No. A1, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. A2, a hole 11 having a diameter of 7.0 mm was made through the top plate 10, and arc welding was performed without using the joining assist member 30. Since the aluminum mixing proportion of a weld metal was smaller than in No. A1, the amount of intermetallic compounds was small and the degree of embrittlement was low. However, TSS and CTS were still low.

In No. A3, the joining assist member 30 was put on the top plate 10 through which no hole was made and arc welding was performed from above the joining assist member 30. The material of the joining assist member 30 was JIS G3106 SM490C (this also applies to the following samples of Examples A). No hole was made through the joining assist member 30. As a result, there was no weld penetration into the bottom plate 20 through the joining assist member 30 and the top plate 10 and the welding failed.

In No. A4, the joining assist member 30 was press-fitted into the top plate 10 through which a hole 11 having a diameter of 7.0 mm was made and arc welding was performed from above the joining assist member 30. No hole was made through the joining assist member 30. As a result, there was some weld penetration into the bottom plate 20 through the joining assist member 30. However, the weld penetration width in the bottom plate 20 was very small and the sample was broken easily in the breaking tests.

In No. A5, the joining assist member 30 was put on the top plate 10 through which no hole was made and arc welding was performed from above the joining assist member 30. A hole having a diameter of 5.0 mm was made through the joining assist member 30. As a result, as in No. A1, a steel welding wire and an aluminum base material were melt-mixed to form a weld metal. Thus, the weld metal formed was very fragile intermetallic compounds and TSS and CTS were low.

In No. A6, the joining assist member 30 through which a hole 11 having a diameter of 5.0 mm was made was inserted into the top plate 10 through which a hole having a diameter of 7.0 mm was made and arc welding was performed from above the joining assist member 30. The narrow portion 39 was provided in the shaft portion 31 of the joining assist member 30, but the maximum outer diameter of the shaft portion 31 was smaller than the hole diameter of the top plate 10. Therefore, the joining assist member 30 was arc-welded in the state that the shaft portion 31 was not press-fitted into the hole 11, but was put in the hole 11. Since a gap was present between the shaft portion 31 of the joining assist member 30 and a wall surface of the hole of the top plate 10, deviation occurred easily in a tensile shear test (TSS) and TSS was low value.

In No. A7, the joining assist member 30 through which a hole having a diameter of 5.0 mm was made was press-fitted into the top plate 10 through which a hole having a diameter of 7.0 mm was made and arc welding was performed from above the joining assist member 30. The narrow portion 39 was provided in the shaft portion 31 of the joining assist member 30, but the diameter of the flange portion 32 is smaller than the hole diameter of the top plate 10. The hole 11 of the top plate 10 was clogged with an excess weld metal, but the sample was broken easily when stress was received. Therefore, CTS and TSS were low values.

In No. A8, the joining assist member 30 though which a hole having a diameter of 5.0 mm was made was press-fitted into the top plate 10 through which a hole 11 having a diameter of 7.0 mm was made and arc welding was performed from above the joining assist member 30. The flange portion 32 and the shaft portion 31 were larger than the hole diameter of the top plate 10, but the shaft portion 31 did not have a narrow portion and was cylindrical. In this case, the joining assist member 30 could be temporarily press-fitted into the hole 11. However, since the shaft portion did not have a narrow portion, caulking effect was not obtained and the joining assist member 30 popped out and detached. Therefore, the welding failed.

In No. A9, the joining assist member 30 though which a hole having a diameter of 5.0 mm was made was inserted into the top plate 10 through which a hole having a diameter of 7.0 mm was made and arc welding was performed from above the joining assist member 30. However, the joining assist member 30 did not have the boundary between the shaft portion 31 and the flange portion 32 and did not have a narrow portion. That is, the joining assist member had a form of a circular steel pipe and its diameter was smaller than the hole 11 of the top plate 10. A gap was present between the shaft portion 31 of the joining assist member 30 and a wall surface of the hole 11 of the top plate 10, and the surface of the top plate 10 barely connected to the joining assist member 30 by excess weld metal. The sample was broken easily when stress was received. Therefore, CTS and TSS were low values.

On the other hand, in Nos. A10 to A18, the joining assist member 30 through which a hole having a diameter of 5.0 mm was made was press-fitted into the top plate 10 through which a hole having a diameter of 7.0 mm was made and arc welding was performed from above the joining assist member 30. The joining assist member 30 had the shape that the maximum outer diameter of the shaft portion 31 and the width of the flange portion 32 were larger than the hole diameter of the top plate 10, respectively and the shaft portion 32 had the narrow portion 39 at the flange portion side. In these samples, inflow of aluminum into a weld metal 40 formed was restricted to zero or a very small amount by virtue of the presence of the shaft portion 31 of the joining assist member 30, whereby a high-quality weld metal was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Furthermore, since the top plate 10 and the joining assist member 30 were caulked and restrained, TSS receiving shear stress was high value. Still further, in the samples (Nos. A11 to A13 and A16 to A18) in which a high temperature curing type two-liquid-mixing adhesive was applied to appropriate locations and the samples were maintained in the environment of 180°C and 0.5 hours to cure the adhesive, an effect of preventing electric corrosion at aluminum-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. A10, No. A11, No. A12, and No. A13.

### <Examples B>

In Examples B, a lap joint was used having a combination of a 0.8 mm-thick top plate 10 made of a magnesium alloy ASTM AZ31B and a 1.0 mm-thick bottom plate 20 made of 780 MPa-class high tensile strength steel. This lap joint was joined by arc welding by a TIG welding method using a 100% Ar gas as a shielding gas while inserting a 1.0 mm-diameter JIS Z3316 YGT50 steel welding wire as a non-conduction filler, at a fixed point for a certain period of time.

This welded joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 4 kN and CTS ≥ 3 kN.

To obtain not-indispensable but preferable performance, as in Example A, the welded joint 1 was also subjected to JASO-CCT for 28 days and then subjected to the same breaking tests as described above to obtain TSS after corrosion and CTS after corrosion. Acceptance criteria for these preferable performance were that they should be 80% or larger of respective values of the tests without corrosion.

In Table 2, Comparative Examples are denoted by Nos. B1 to B8 and Examples are denoted by Nos. B9 to B17.

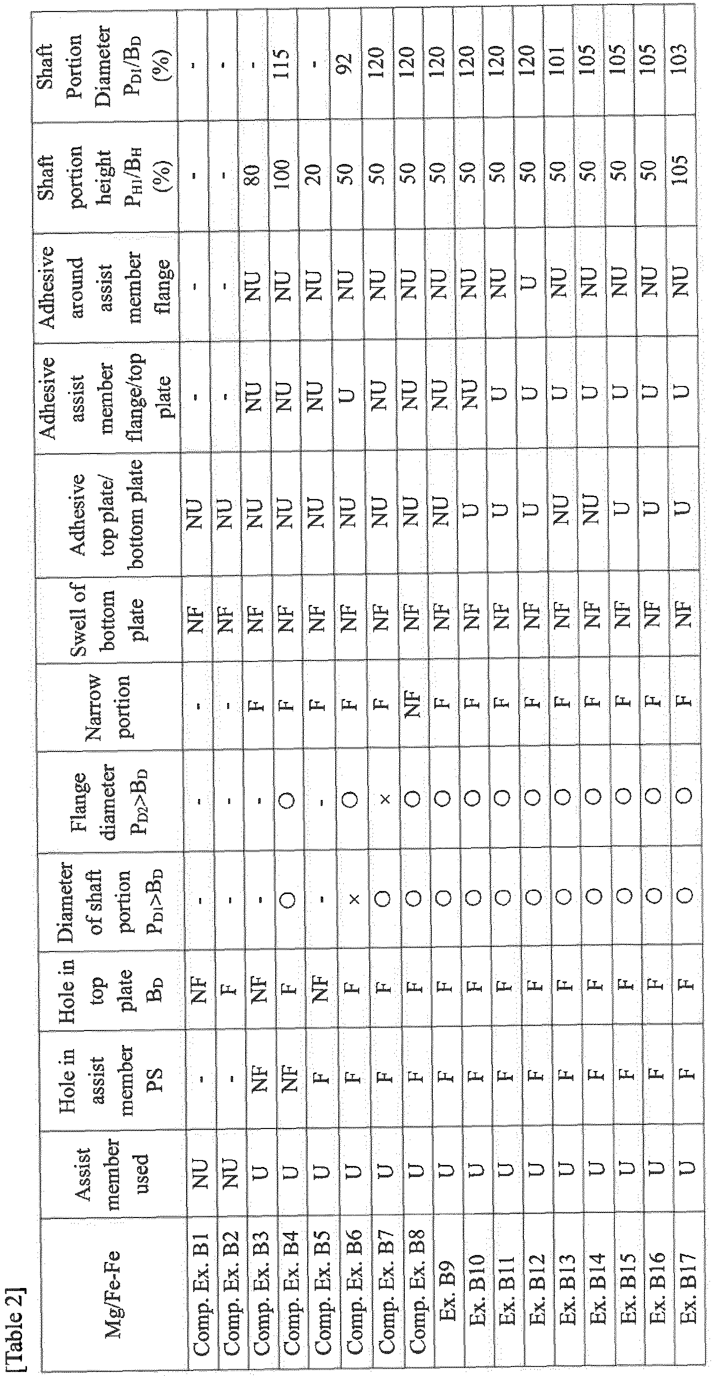

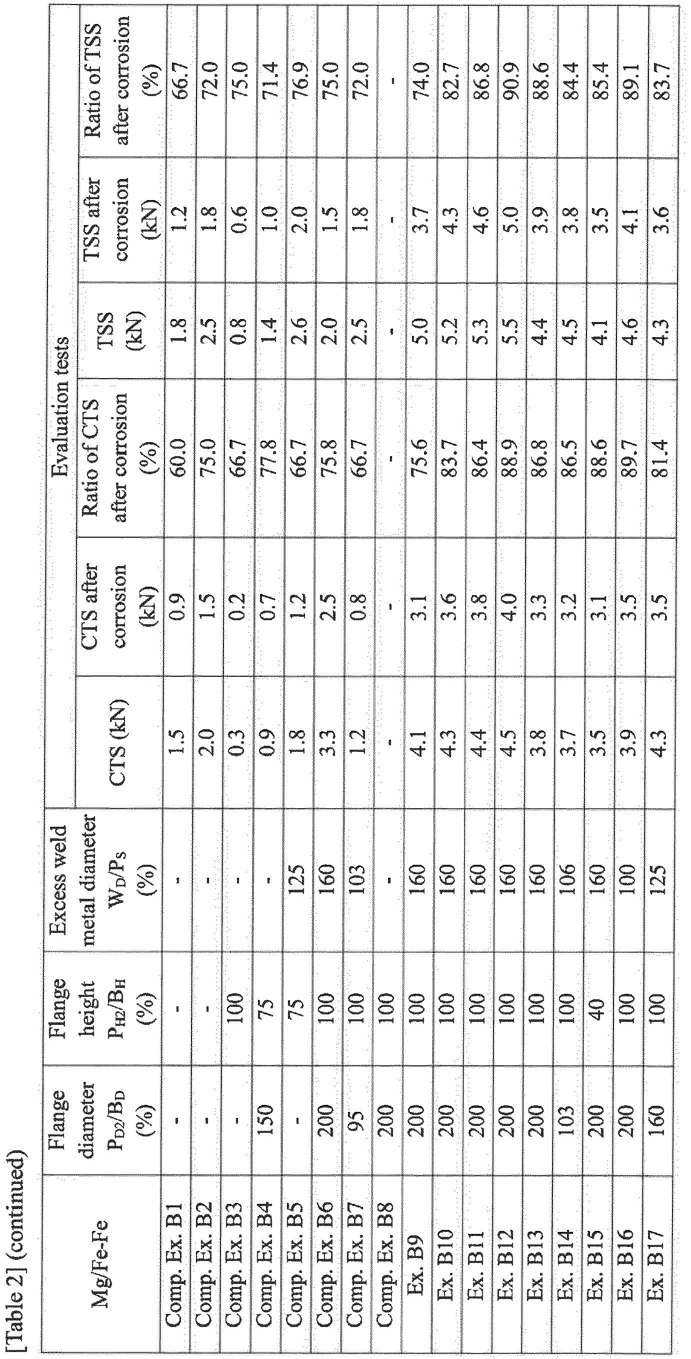

In No. B1, no joining assist member was used, no hole was made through the top plate 10, and arc welding was performed directly on the top plate 10. No adhesive was used. Since a steel welding wire and a magnesium base material were melt-mixed, a weld metal formed was very fragile intermetallic compounds and TSS and CTS were low.

In No. B2, arc welding was performed without using the joining assist member though a hole 11 having a diameter of 5.0 mm was made through the top plate 10. Since the magnesium alloy mixing proportion of a weld metal was smaller than in No. B1, the amount of intermetallic compounds was small and the degree of embrittlement was low. However, TSS and CTS were still low.

In No. B3, the joining assist member 30 was put on the top plate 10 through which no hole was made and arc welding was performed from above the joining assist member 30. The material of the joining assist member 30 was JIS G3101 SS400 (this material also applies to the following samples of Examples B). No hole was made through the joining assist member 30. As a result, there was some weld penetration into the bottom plate 20 through the joining assist member 30 and the top plate 10. However, the weld penetration width in the bottom plate 20 was very small and the sample was broken easily in the breaking tests.

In No. B4, the joining assist member 30 was press-fitted into the top plate 10 through which the same hole 11 as formed in No. B2 was made and arc welding was performed from above the joining assist member 30. No hole was made through the joining assist member 30. As a result, there was some weld penetration into the bottom plate 20 through the joining assist member 30. However, the weld penetration width in the bottom plate 20 was very small and the sample was broken easily in the breaking tests.

In No. B5, the joining assist member 30 was put on the top plate 10 through which no hole was made and arc welding was performed from above the joining assist member 30. A hole having a diameter of 3.8 mm was made through the joining assist member 30. As in No. B1, a steel welding wire and a magnesium alloy base material were melt-mixed to form a weld metal. Thus, the weld metal formed was very fragile intermetallic compounds and TSS and CTS were low.

In No. B6, the joining assist member 30 through which a hole having a diameter of 3.8 mm was made was inserted into the top plate 10 through which a hole having a diameter of 5.0 mm was made and arc welding was performed from above the joining assist member 30. The narrow portion 39 was provided in the shaft portion 31 of the joining assist member 30, but the maximum outer diameter of the shaft portion 31 was smaller than the hole diameter of the top plate 10. Therefore, arc welding was performed in the state that the shaft portion 31 was not press-fitted into the hole 11, but was put in the hole 11. Since a gap was present between the shaft portion 31 of the joining assist member 30 and a wall surface of the hole of the top plate 10, deviation occurred easily in a tensile shear test (TSS) and TSS was low value.

In No. B7, the joining assist member 30 through which a hole having a diameter of 3.8 mm was made was press-fitted into the top plate 10 through which a hole having a diameter of 5.0 mm was made and arc welding was performed from above the joining assist member 30. The narrow portion 39 was provided in the shaft portion 31 of the joining assist member 30, but the diameter of the flange portion 32 was smaller than the hole diameter of the top plate 10. The hole 11 of the top plate 10 was clogged with excess weld metal, but the sample was broken easily when stress was received. Therefore, CTS and TSS were low values.

In No. B8, the joining assist member 30 though which a hole having a diameter of 3.8 mm was made was press-fitted into the top plate 10 through which a hole having a diameter of 5.0 mm was made and arc welding was performed from above the joining assist member 30. The flange portion 32 and the shaft portion 31 were larger than the hole diameter of the top plate 10, but the shaft portion 31 did not have a narrow portion and was cylindrical. In this case, the joining assist member 30 could be temporarily press-fitted into the hole 11. However, since the shaft portion did not have a narrow portion, caulking effect was not obtained and the joining assist member 30 popped out and detached. Therefore, the welding failed.

On the other hand, in Nos. B9 to B17, the joining assist member 30 through which a hole having a diameter of 3.8 mm was made was press-fitted into the top plate 10 through which a hole having a diameter of 5.0 mm was made and arc welding was performed from above the joining assist member 30. The joining assist member 30 had the shape that the maximum outer diameter of the shaft portion 31 and the width of the flange portion 32 were larger than the hole diameter of the top plate 10, respectively and the shaft portion 31 had the narrow portion 39 at the flange portion side. In these samples, inflow of magnesium into a weld metal 40 formed was restricted to zero or a very small amount by virtue of the presence of the shaft portion 31 of the joining assist member 30, whereby a high-quality weld metal 40 was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Furthermore, since the top plate 10 and the joining assist member 30 were caulked and restrained, TSS receiving shear stress was high value. Still further, in the samples (Nos. B10 to B17) in which a high temperature curing type two-liquid-mixing adhesive was applied to appropriate locations and the samples were maintained in the environment of 180°C and 0.5 hours to cure the adhesive, an effect of preventing electric corrosion at magnesium alloy-steel interfaces was obtained, whereby reduction in CTS and TSS due to corrosion was suppressed and high CTS and TSS after corrosion were obtained. More specifically, it is seen that the CTS after corrosion and the TSS after corrosion increases as the number of adhesive application locations increases in order of No. B9, No. B10, No. B11 and No. B12.

### <Examples C>

In Examples C, a lap joint was used having a combination of a 3.6 mm-thick top plate 10 made of an aluminum alloy A6061 and a 2.2 mm-thick bottom plate 20 made of 400 MPa-class steel. This lap joint was joined by arc welding by a coated arc welding method using a 4.0 mm-diameter JIS Z3252 ECNi-Cl Ni alloy coated arc welding rod at a fixed point for a certain period of time. In case where a hole was made through the top plate 10, the bottom plate 20 was subjected to deep drawing using a punch at the welding position of the bottom plate 20 so that the drawn portion went into the hole formed through the top plate 10 to a 1.8 mm height, that is, reaching the center in the thickness direction.

This welded joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 9 kN and CTS ≥ 6 kN.

To obtain not-indispensable but preferable performance, as in Examples A and B, the welded joint 1 was also subjected to JASO-CCT for 28 days and then subjected to the same breaking tests as described above to obtain TSS after corrosion and CTS after corrosion. Acceptance criteria for these preferable performance were that they should be 80% or larger of respective values of the tests without corrosion.

In Table 3, Comparative Examples are denoted by Nos. C1 to C7 and Examples are denoted by Nos. C8 to C14.

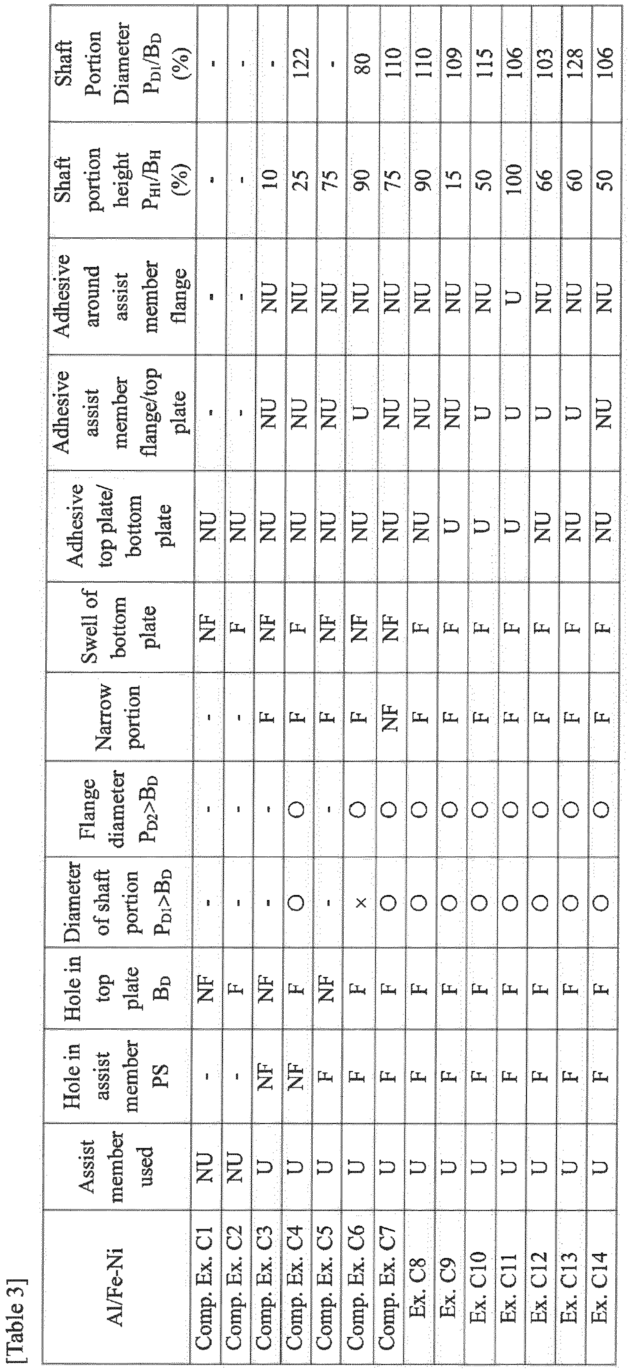

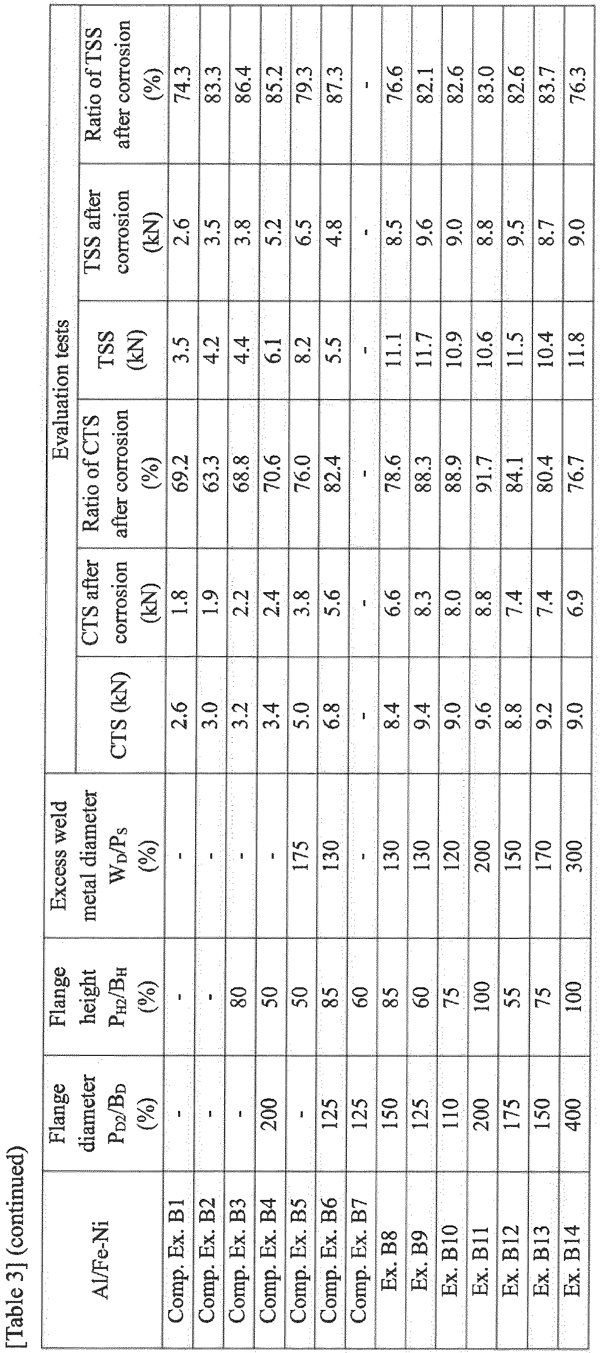

In No. C1, no joining assist member was used, no hole was made through the top plate 10, and arc welding was performed directly on the top plate 10. No adhesive was used. Since an Ni alloy coated arc welding rod and an aluminum base material were melt-mixed, a weld metal formed was very fragile intermetallic compounds and TSS and CTS were low.

In No. C2, arc welding was performed without using the joining assist member 30 and a hole 11 having a diameter of 9.0 mm was made through the top plate 10. Since the aluminum alloy mixing proportion of a weld metal was smaller than in No. C1, the amount of intermetallic compounds was small and the degree of embrittlement was low. However, TSS and CTS were still low.

In No. C3, the joining assist member 30 was put on the top plate 10 through which no hole was made and arc welding was performed from above the joining assist member 30. The material of the joining assist member 30 was JIS G4051 S12C (this material also applies to the following samples of Examples C). No hole was made through the joining assist member 30. As a result, weld penetration into the bottom plate 20 through the joining assist member 30 and the top plate 10 could not be caused and the welding failed.

In No. C4, the joining assist member 30 was press-fitted into the top plate 10 through which a hole having a diameter of 9.0 mm was made and arc welding was performed from above the joining assist member 30. No hole was made through the joining assist member 30. As a result, there was some weld penetration into the bottom plate 20 through the joining assist member 30. However, the weld penetration width in the bottom plate 20 was very small and the sample was broken easily in the breaking tests.

In No. C5, the joining assist member 30 was put on the top plate 10 through which no hole was made and arc welding was performed from above the joining assist member 30. A hole having a diameter of 7.0 mm was made through the joining assist member 30. As in No. C1, an Ni alloy welding rod and a magnesium alloy base material were melt-mixed to form a weld metal. Thus, the weld metal formed was very fragile intermetallic compounds and TSS and CTS were low.

In No. C6, the joining assist member 30 through which a hole having a diameter of 7.0 mm was made was inserted into the top plate 10 through which a hole having a diameter of 9.0 mm was made and arc welding was performed from above the joining assist member 30. The narrow portion 39 was provided in the shaft portion 31 of the joining assist member 30, but the maximum outer diameter of the shaft portion 31 was smaller than the hole diameter of the top plate 10. Therefore, arc welding was performed in the state that the shaft portion 31 was not press-fitted into the hole 11, but was put in the hole 11. Since a gap was present between the shaft portion 31 of the joining assist member 30 and a wall surface of the hole 11 of the top plate 10, deviation occurred easily in a tensile shear test (TSS) and TSS was low value.

In No. C7, the joining assist member 30 though which a hole having a diameter of 7.0 mm was made was press-fitted into the top plate through which a hole having a diameter of 9.0 mm was made and arc welding was performed from above the joining assist member 30. The flange portion 32 and the shaft portion 31 were larger than the hole diameter of the top plate 10, but the shaft portion 31 did not have a narrow portion and was cylindrical. In this case, the joining assist member 30 could be temporarily press-fitted into the hole 11. However, since the shaft portion did not have a narrow portion, caulking effect was not obtained and the joining assist member 30 popped out and detached. Therefore, the welding failed.

On the other hand, in Nos. C8 to C14, the joining assist member 30 through which a hole having a diameter of 7.0 mm was made was press-fitted into the top plate 10 through which a hole having a diameter of 9.0 mm was made and arc welding was performed from above the joining assist member 30. The joining assist member 30 had the shape that the maximum outer diameter of the shaft portion 31 and the width of the flange portion 32 were larger than the hole diameter of the top plate 10, respectively and the shaft portion 31 had the narrow portion 39 at the flange portion side. In these samples, inflow of aluminum into a weld metal formed was restricted to zero or a very small amount by virtue of the presence of the shaft portion 31 of the joining assist member 30, whereby a high-quality weld metal was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Although the top plate 10 was relatively thick as 3.6 mm, the welding efficiency was increased and a burn-through preventing effect was obtained because the distance between the joining assist member 30 and the bottom plate 20 was decreased at the welding location by the deep drawing of the bottom plate 20. Furthermore, since the top plate 10 and the joining assist member 30 were caulked and restrained, TSS receiving shear stress was high value. Still further, in the samples (Nos. C9 to C13) in which a high temperature curing type two-liquid-mixing adhesive was applied to appropriate locations and the samples were maintained in the environment of 180°C and 0.5 hours to cure the adhesive, an effect of preventing electric corrosion at aluminum-steel interfaces was obtained, whereby reduction in CTS and TSS due to corrosion was suppressed and high CTS and TSS after corrosion were obtained.

### <Examples D>

In Examples D, a lap joint was used having a combination of a 1.2 mm-thick top plate 10 made of an aluminum alloy A6N01 and a 1.2 mm-thick bottom plate 20 made of SPCC steel. This lap joint was joined by arc welding at a fixed point for a certain period of time by a self-shielded arc welding method using a 1.2 mm-diameter JIS Z3313 T49T14-0NS-G steel wire containing flux.

This welded joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 6 kN and CTS ≥ 4 kN.

To obtain not-indispensable but preferable performance, as in Examples A, B, and C, the welded joint 1 was also subjected to JASO-CCT for 28 days and then subjected to the same breaking tests as described above to obtain TSS after corrosion and CTS after corrosion. Acceptance criteria for preferable performance values were that they should be 80% or larger of respective values of the tests without corrosion.

In Table 4, Comparative Examples are denoted by Nos. D1 to D3 and Examples are denoted by Nos. D4 and D5.

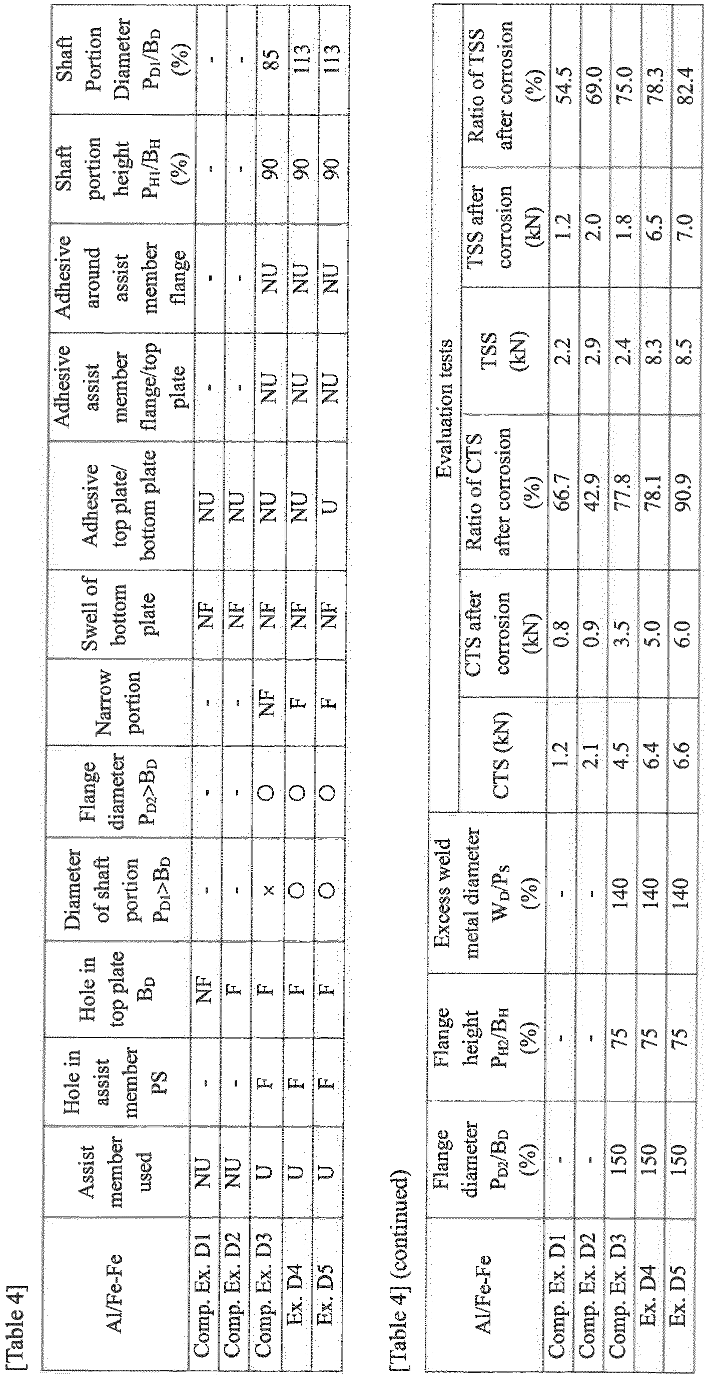

In No. D1, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. D2, arc welding was performed without using the joining assist member 30, though a hole 11 having a diameter of 6.0mm was made through the top plate 10. Since the aluminum alloy mixing proportion of a weld metal was smaller than in No. D1, the amount of intermetallic compounds was small and the degree of embrittlement was low. However, TSS and CTS were still low.

In No. D3, the joining assist member 30 through which a hole having a diameter of 4.4 mm was made was inserted into the top plate through which a hole having a diameter of 6.0 mm was made and arc welding was performed from above the joining assist member 30. The shaft portion of the joining assist member 30 was smaller than the hole diameter of the top plate 10 and did not have a narrow portion. Therefore, arc welding was performed in the state that the shaft portion 31 was not press-fitted into the hole 11, but was put in the hole 11. Since a gap was present between the shaft portion 31 of the joining assist member 30 and a wall surface of the hole 11 of the top plate 10, deviation occurred easily in a tensile shear test (TSS) and TSS was low value.

On the other hand, in Nos. D4 and D5, the joining assist member 30 produced by working a JIS G3106 SM490A plate through which a hole having a diameter of 4.4 mm was made was press-fitted into the top plate 10 through which a hole having a diameter of 6.0 mm was made and arc welding was performed from above the joining assist member 30. The joining assist member 30 had the shape that the maximum outer diameter of the shaft portion 31 and the width of the flange portion 32 were larger than the hole diameter of the top plate 10, respectively and the shaft portion 31 had the narrow portion 39 at the flange portion side. In these samples, inflow of aluminum into a weld metal formed was restricted to zero or a very small amount by virtue of the presence of the shaft portion 31 of the joining assist member 30, whereby a high-quality weld metal 40 was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Furthermore, since the top plate 10 and the joining assist member 30 were caulked and restrained, TSS receiving shear stress was high value. Still further, in the sample No. D5 in which a high temperature curing type two-liquid-mixing adhesive was applied to appropriate locations and the samples were maintained in the environment of 180°C and 0.5 hours to cure the adhesive, an effect of preventing electric corrosion at aluminum-steel interfaces was obtained, whereby reduction in CTS and TSS due to corrosion was suppressed and high CTS and TSS after corrosion were obtained as compared with the sample No. D4 using no adhesive.

### <Examples E>

In Examples E, a lap joint was used having a combination of a 4.0 mm-thick top plate 10 made of an aluminum alloy A7N01 and a 3.0 mm-thick bottom plate 20 made of 1180 MPa-class high tensile strength steel. A 1.5 mm-height swell portion 21 was formed by drawing at welding locations in the bottom plate 20. This lap joint was joined by arc welding by a plasma arc welding method using a 1.2 mm-diameter JIS Z3321 YS309L stainless steel welding wire and using 100% Ar as a plasma gas and 99% Ar + 1% H₂ as a shielding gas at a fixed point for a certain period of time.

This welded joint 1 was subjected to breaking tests according to JIS Z3136 "Test piece dimensions and test method of shearing test of resistance spot and projection welded joint" and JIS Z3137 "Cross tension test for resistance spot and projection welded joint." In the following, tensile strength of Z3136 was referred to as TSS and tensile strength of Z3137 was referred to as CTS. Acceptance criteria were TSS ≥ 10 kN and CTS ≥ 8 kN.

To obtain not-indispensable but preferable performance, as in Examples A to D, the welded joint 1 was also subjected to JASO-CCT for 28 days and then subjected to the same breaking tests as described above to obtain TSS after corrosion and CTS after corrosion. Acceptance criteria for preferable performance were that they should be 80% or larger of respective values of the tests without corrosion.

In Table 5, Examples are denoted by Nos. E1 to E3.

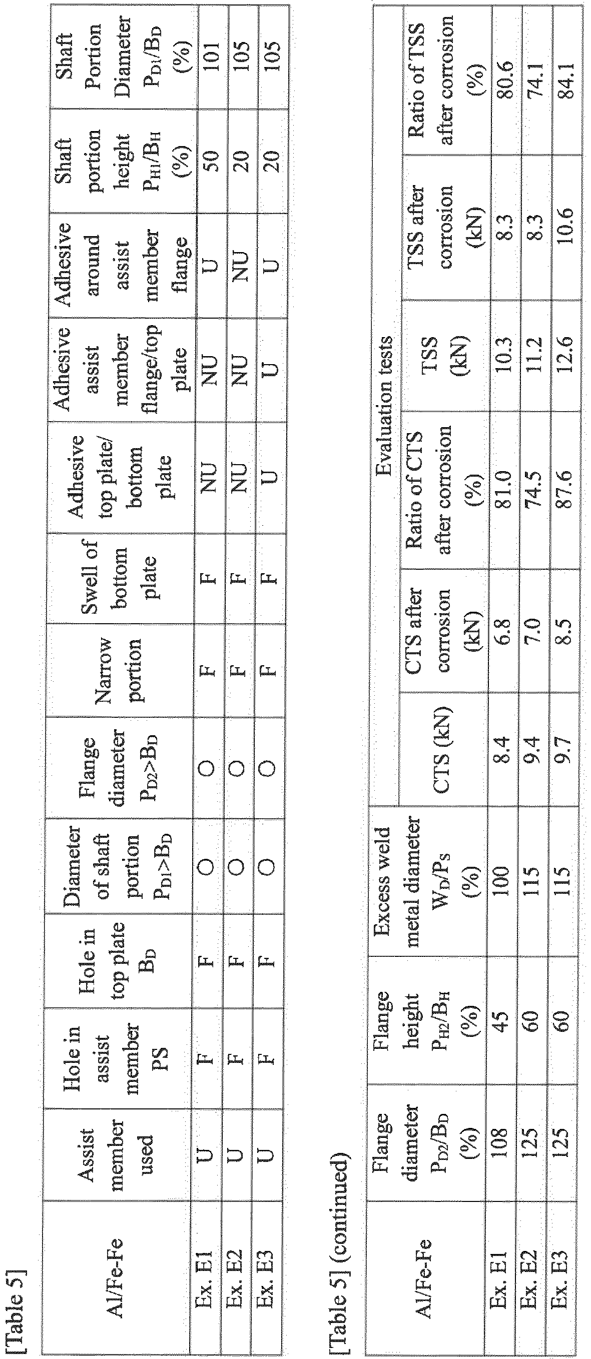

In Nos. E1 to E3, the joining assist member 30 produced by working a SUS304 steel plate through which a hole having a diameter of 8.0 mm was made was press-fitted into the top plate 10 through which a hole having a diameter of 10.0 mm was made and arc welding was performed from above the joining assist member 30. The joining assist member 30 had the shape that the maximum outer diameter of the shaft portion 31 and the width of the flange portion 32 were larger than the hole diameter of the top plate 10, respectively and the shaft portion 31 had the narrow portion 39 at the flange portion side. In these samples, inflow of aluminum into a weld metal formed was restricted to zero or a very small amount by virtue of the presence of the shaft portion 31 of the joining assist member 30, whereby a high-quality weld metal was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Although the top plate 10 was relatively thick as 4.0 mm, the welding efficiency was increased and a burn-through preventing effect was obtained because the distance between the joining assist member 30 and the bottom plate 20 was decreased at the welding location by the deep drawing of the bottom plate 20. Furthermore, since the top plate 10 and the joining assist member 30 were caulked and restrained, TSS receiving shear stress was high value. Still further, in the sample Nos. E1 and E3 in which a high temperature curing type two-liquid-mixing adhesive was applied to appropriate locations and the samples were maintained in the environment of 180°C and 0.5 hours to cure the adhesive, an effect of preventing electric corrosion at aluminum-steel interfaces was obtained, whereby reduction in CTS and TSS due to corrosion was suppressed and high CTS and TSS after corrosion were obtained. Specifically, in the sample No. E3, the CTS after corrosion and the TSS after corrosion of No. E3 in which an adhesive was applied were higher than those of No. E2 in which no adhesive was applied.

The effectiveness of the second embodiment was confirmed using Examples F to J described below.

### <Examples F>

In Examples F, a lap joint was used having a combination of a 1.6 mm-thick top plate 10 made of an aluminum alloy A5083 and a 1.4 mm-thick bottom plate 20 made of 590 MPa-class high tensile strength steel. This lap joint was joined by arc welding by a MAG welding method using a 1.2 mm-diameter JIS Z3312 YGW16 stainless steel welding wire and using 80% Ar + 20% CO₂ mixed gas as a shielding gas at a fixed point for a certain period of time.

This welded joint 1 was subjected to breaking tests according to JIS Z3136 "Test piece dimensions and test method of shearing test of resistance spot and projection welded joint" and JIS Z3137 "Cross tension test for resistance spot and projection welded joint." In the following, tensile strength of Z3136 was referred to as TSS and tensile strength of Z3137 was referred to as CTS. Acceptance criteria were TSS ≥ 8 kN and CTS ≥ 5 kN.

To obtain not-indispensable but preferable performance, the welded joint was also subjected to JASO-CCT (Japanese Automobile Standards Organization Cyclic Corrosion Test) in which a welded joint was subjected to repetition of spraying of salt water, drying, and moistening to cause accelerated corrosion, through 28 days. It was then subjected to the same breaking tests as described above to obtain TSS after corrosion and CTS after corrosion. Acceptance criteria for these preferable performances were that they should be 80% or larger of respective values of the tests without corrosion.

In Table 6, Comparative Examples are denoted by Nos. F1 to F9 and Examples are denoted by Nos. F10 to F15.

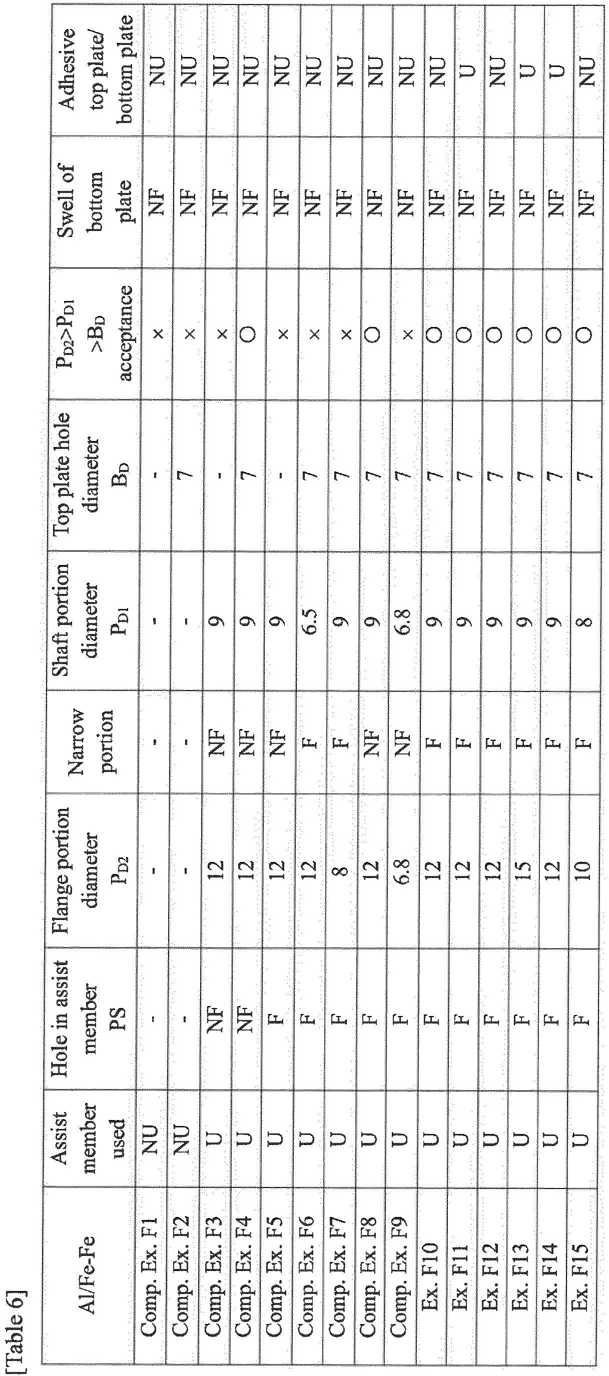

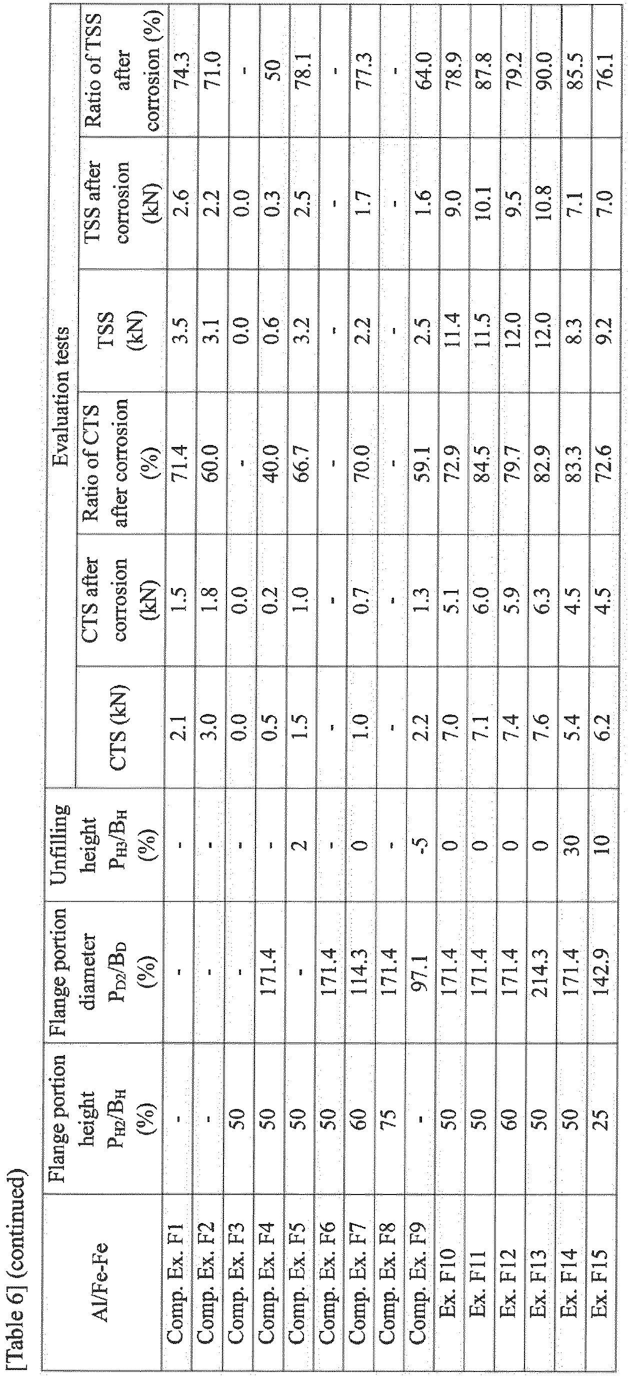

In No. F1, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. F2, a hole 11 having a diameter of 7.0 mm was made through the top plate 10, and arc welding was performed without using the joining assist member 30. Since the aluminum mixing proportion of a weld metal was smaller than in No. E1, the amount of intermetallic compounds was small and the degree of embrittlement was low. However, TSS and CTS were still low.

In No. F3, the joining assist member 30 was put on the top plate 10 through which no hole was made and arc welding was performed from above the joining assist member 30. The material of the joining assist member 30 was JIS G3106 SM490C (this also applies to the following samples of Examples F). No hole was made through the joining assist member 30. As a result, weld penetration into the bottom plate 20 through the joining assist member 30 and the top plate 10 could not be caused and the welding failed.

In No. F4, the entire joining assist member 30 was press-fitted into the top plate 10 through which a hole 11 having a diameter of 7.0 mm was made and arc welding was performed from above the joining assist member 30. No hole was made through the joining assist member 30. As a result, there was some weld penetration into the bottom plate 20 through the joining assist member 30. However, the weld penetration width in the bottom plate 20 was very small and the sample was broken easily in the breaking tests.

In No. F5, the joining assist member 30 was put on the top plate 10 through which no hole was made and arc welding was performed from above the joining assist member 30. A hole having a diameter of 5.0 mm was made through the joining assist member 30. As a result, as in No. F1, a steel welding wire and an aluminum base material were melt-mixed to form a weld metal. Thus, the weld metal formed was very fragile intermetallic compounds and TSS and CTS were low.

In No. F6, the entire joining assist member 30 through which a hole was made was press-fitted into the top plate 10 through which a hole having a diameter of 7.0 mm was made and arc welding was performed from above the joining assist member 30. The narrow portion 39 was provided in the shaft portion 31 of the joining assist member 30, but the maximum outer diameter of the shaft portion 31 was smaller than the hole diameter of the top plate 10. Therefore, the joining assist member 30 had the state that the shaft portion 31 was not press-fitted into the hole 11, but was put in the hole 11. Even though the joining assist member 30 was press-fitted into the hole 11 of the top plate 10 up to the flange portion 32 thereof, caulking effect was not obtained and the joining assist member 30 popped out and detached. Therefore, the welding failed.

In No. F7, the joining assist member 30 through which a hole was made was press-fitted into the top plate 10 through which a hole having a diameter of 7.0 mm was made and arc welding was performed from above the joining assist member 30. The portion (corresponding to the flange portion 32) at the exposed surface side of the joining assist member 30 to the narrow portion 39 was smaller than the maximum outer diameter of the shaft portion 31. The top plate 10 was easily detached from the periphery of the joining assist member 30 when stress was applied to the top plate 10. Therefore, CTS and TSS were low values.

In No. F8, the joining assist member 30 through which a hole was made was press-fitted into the top plate 10 through which a hole having a diameter of 7.0 mm was made and arc welding was performed from above the joining assist member 30. The flange portion 32 and the shaft portion 31 were larger than the hole diameter of the top plate 10, but the shaft portion 3 did not have a narrow portion and was cylindrical. In this case, the joining assist member 30 could be temporarily press-fitted into the hole 11. However, since the shaft portion did not have a narrow portion, caulking effect was not obtained and the joining assist member 30 popped out and detached. Therefore, the welding failed.

In No. F9, the joining assist member 30 through which a hole was made was press-fitted into the top plate 10 through which a hole having a diameter of 7.0 mm was made and arc welding was performed from above the joining assist member 30. However, the joining assist member 30 did not have the boundary between the shaft portion 31 and the flange portion 32 and did not have a narrow portion. That is, the joining assist member had a form of a circular steel pipe and its diameter was smaller than the hole 11 of the top plate 10. A gap was present between the shaft portion 31 of the joining assist member 30 and a wall surface of the hole 11 of the top plate 10, and the surface of the top plate 10 barely connected to the joining assist member 30 by excess weld metal. The sample was broken easily when stress was received. Therefore, CTS and TSS were low values.

On the other hand, in Nos. F10 to F15, the entire joining assist member 30 was press-fitted into the top plate 10 through which a hole was made and arc welding was performed from above the joining assist member 30. The hole diameter of the top plate 10 was set to the values as shown in Table 6 and a hole having an appropriate size was made through the joining assist member 30. The joining assist member 30 had the shape that the maximum outer diameter of the shaft portion 31 and the width of the flange portion 32 were larger than the hole diameter of the top plate 10, respectively, the width of the flange portion 32 was larger than the maximum outer diameter of the shaft portion 31 and the shaft portion 32 had the narrow portion 39 at the flange portion side thereof. In these samples, since the top plate 10 and the joining assist member 30 were caulked and restrained by the narrow portion 39, press-fitting could be performed in a stable manner. As weld quality, inflow of aluminum into a weld metal 40 formed was restricted to zero or a very small amount by virtue of the presence of the shaft portion 31 of the joining assist member 30, whereby a high-quality weld metal was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Furthermore, TSS was sufficiently high value. Still further, in the samples (Nos. A11, A13 and A14) in which a high temperature curing type two-liquid-mixing adhesive was applied to appropriate locations and the samples were maintained in the environment of 180°C and 0.5 hours to cure the adhesive, an effect of preventing electric corrosion at aluminum-steel interfaces was obtained, whereby reduction in CTS and TSS due to corrosion was suppressed and high CTS and TSS after corrosion were obtained. More specifically, it is seen that the CTS after corrosion and the TSS after corrosion increases in order of No. F10 and No. F11 to which the adhesive was applied.

### <Examples G>

In Examples G, a lap joint was used having a combination of a 0.8 mm-thick top plate 10 made of a magnesium alloy ASTM AZ31B and a 1.0 mm-thick bottom plate 20 made of 780 MPa-class high tensile strength steel. This lap joint was joined by arc welding by a TIG welding method using a 100% Ar gas as a shielding gas while inserting a 1.0 mm-diameter JIS Z3316 YGT50 steel welding wire as a non-conduction filler, at a fixed point for a certain period of time.

This welded joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 4 kN and CTS ≥ 3 kN.

To obtain not-indispensable but preferable performance, as in Example F, the welded joint 1 was also subjected to JASO-CCT for 28 days and then subjected to the same breaking tests as described above to obtain TSS after corrosion and CTS after corrosion. Acceptance criteria for these preferable performance were that they should be 80% or larger of respective values of the tests without corrosion.

In Table 7, Comparative Examples are denoted by Nos. G1 to G8 and Examples are denoted by Nos. G9 to G13.

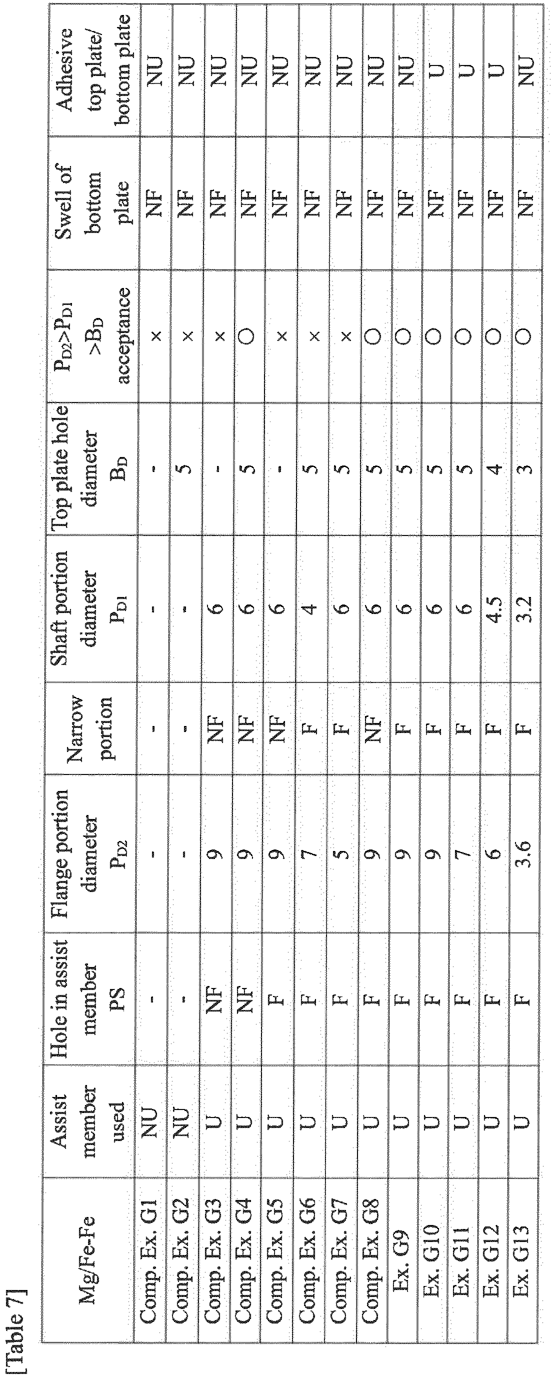

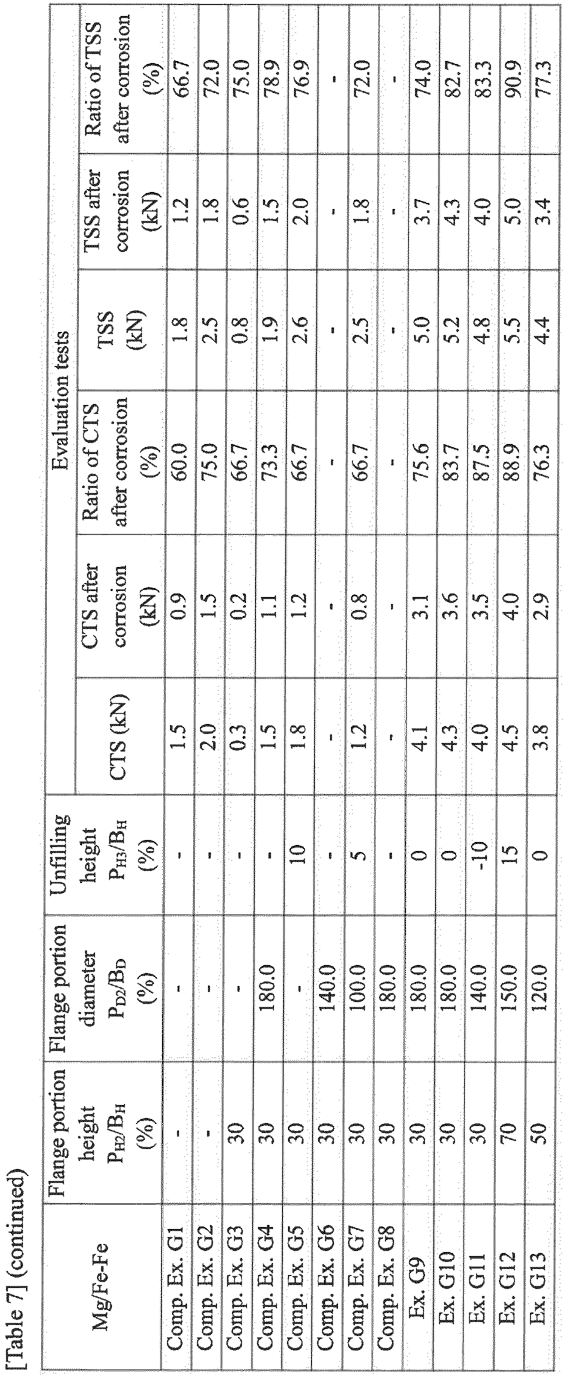

In No. G1, no joining assist member was used, no hole was made through the top plate 10, and arc welding was performed directly on the top plate 10. No adhesive was used. Since a steel welding wire and a magnesium base material were melt-mixed, a weld metal formed was very fragile intermetallic compounds and TSS and CTS were low.

In No. G2, arc welding was performed without using the joining assist member though a hole 11 having a diameter of 5.0 mm was made through the top plate 10. Since the magnesium alloy mixing proportion of a weld metal was smaller than in No. G1, the amount of intermetallic compounds was small and the degree of embrittlement was low. However, TSS and CTS were still low.

In No. G3, the joining assist member 30 was put on the top plate 10 through which no hole was made and arc welding was performed from above the joining assist member 30. The material of the joining assist member 30 was JIS G3101 SS400 (this material also applies to the following samples of Examples G). No hole was made through the joining assist member 30. As a result, there was some weld penetration into the bottom plate 20 through the joining assist member 30 and the top plate 10. However, the weld penetration width in the bottom plate 20 was very small and the sample was broken easily in the breaking tests.

In No. G4, the entire joining assist member 30 was press-fitted into the top plate 10 through which the same hole 11 having a diameter of 5.0 mm as formed in No. G2 was made and arc welding was performed from above the joining assist member 30. No hole was made through the joining assist member 30. As a result, there was some weld penetration into the bottom plate 20 through the joining assist member 30. However, the weld penetration width in the bottom plate 20 was very small and the sample was broken easily in the breaking tests.

In No. G5, the joining assist member 30 was put on the top plate 10 through which no hole was made and arc welding was performed from above the joining assist member 30. A hole having a diameter of 3.8 mm was made through the joining assist member 30. As same as in No. G1, a steel welding wire and a magnesium alloy base material were melt-mixed to form a weld metal. Thus, the weld metal formed was very fragile intermetallic compounds and TSS and CTS were low.

In No. G6, the joining assist member 30 through which a hole was made was inserted into the top plate 10 through which a hole having a diameter of 5.0 mm was made and arc welding was performed from above the joining assist member 30. The narrow portion 39 was provided in the shaft portion 31 of the joining assist member 30, but the maximum outer diameter of the shaft portion 31 was smaller than the hole diameter of the top plate 10. Therefore, the joining assist member 30 had the state that the shaft portion 31 was not press-fitted into the hole 11, but was put in the hole 11. Even though the joining assist member 30 was press-fitted into the hole 11 of the top plate 10 up to the flange portion 11 thereof, caulking effect was not obtained and the joining assist member 30 popped out and detached. Therefore, the welding failed.

In No. G7, the entire joining assist member 30 through which a hole was made was press-fitted into the top plate 10 through which a hole having a diameter of 5.0 mm was made and arc welding was performed from above the joining assist member 30. The portion (corresponding to the flange portion 32) at the exposed surface side of the joining assist member 30 to the narrow portion 39 was smaller than the maximum outer diameter of the shaft portion 31. The top plate 10 was easily detached from the periphery of the joining assist member 30 when stress was applied to the top plate 10. Therefore, CTS and TSS were low values.

In No. G8, the entire joining assist member 30 through which a hole was made was press-fitted into the top plate 10 through which a hole having a diameter of 5.0 mm was made and arc welding was performed from above the joining assist member 30. The flange portion 32 and the shaft portion 31 were larger than the hole diameter of the top plate 10, but the shaft portion 31 did not have a narrow portion and was cylindrical. In this case, the joining assist member 30 could be temporarily press-fitted into the hole 11. However, since the shaft portion did not have a narrow portion, caulking effect was not obtained and the joining assist member 30 popped out and detached. Therefore, the welding failed.

On the other hand, in Nos. G9 to G13, the entire joining assist member 30 was press-fitted into the top plate 10 through which a hole was made and arc welding was performed from above the joining assist member 30. The hole diameter of the top plate 10 was set to the values as shown in Table 7 and a hole having an appropriate size was made through the joining assist member 30. The joining assist member 30 had the shape that the maximum outer diameter of the shaft portion 31 and the width of the flange portion 32 were larger than the hole diameter of the top plate 10, respectively, the width of the flange portion 32 was larger than the maximum diameter of the shaft portion 31 and the shaft portion 31 had the narrow portion 39 at the flange portion side thereof. In these samples, since the top plate 10 and the joining assist member 30 were caulked and restrained by the narrow portion 39, press-fitting could be performed in a stable manner. As weld quality, inflow of magnesium into a weld metal 40 formed was restricted to zero or a very small amount by virtue of the presence of the shaft portion 31 of the joining assist member 30, whereby a high-quality weld metal 40 was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Furthermore, TSS was sufficiently high value. Still further, in the samples (Nos. B10 to B12) in which a high temperature curing type two-liquid-mixing adhesive was applied to appropriate locations and the samples were maintained in the environment of 180°C and 0.5 hours to cure the adhesive, an effect of preventing electric corrosion at magnesium alloy-steel interfaces was obtained, whereby reduction in CTS and TSS due to corrosion was suppressed and high CTS and TSS after corrosion were obtained. More specifically, it is seen that as compared with G9, the CTS after corrosion and the TSS after corrosion increase by adhesive application in G10.

### <Examples H>

In Examples H, a lap joint was used having a combination of a 3.6 mm-thick top plate 10 made of an aluminum alloy A6061 and a 2.2 mm-thick bottom plate 20 made of 400 MPa-class steel. This lap joint was joined by arc welding by a coated arc welding method using a 4.0 mm-diameter JIS Z3252 ECNi-Cl Ni alloy coated arc welding rod at a fixed point for a certain period of time. In case where a hole was made through the top plate 10, the bottom plate 20 was subjected to deep drawing using a punch at the welding location of the bottom plate 20 so that the drawn portion went into the hole formed through the top plate 10 to a 1.8 mm height, that is, reaching the center in the thickness direction.

This welded joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 9 kN and CTS ≥ 6 kN.

To obtain not-indispensable but preferable performance, as in Examples F and G, the welded joint 1 was also subjected to JASO-CCT for 28 days and then subjected to the same breaking tests as described above to obtain TSS after corrosion and CTS after corrosion. Acceptance criteria for these preferable performance were that they should be 80% or larger of respective values of the tests without corrosion.

In Table 8, Comparative Examples are denoted by Nos. H1 to H7 and Examples are denoted by Nos. H8 to H13.

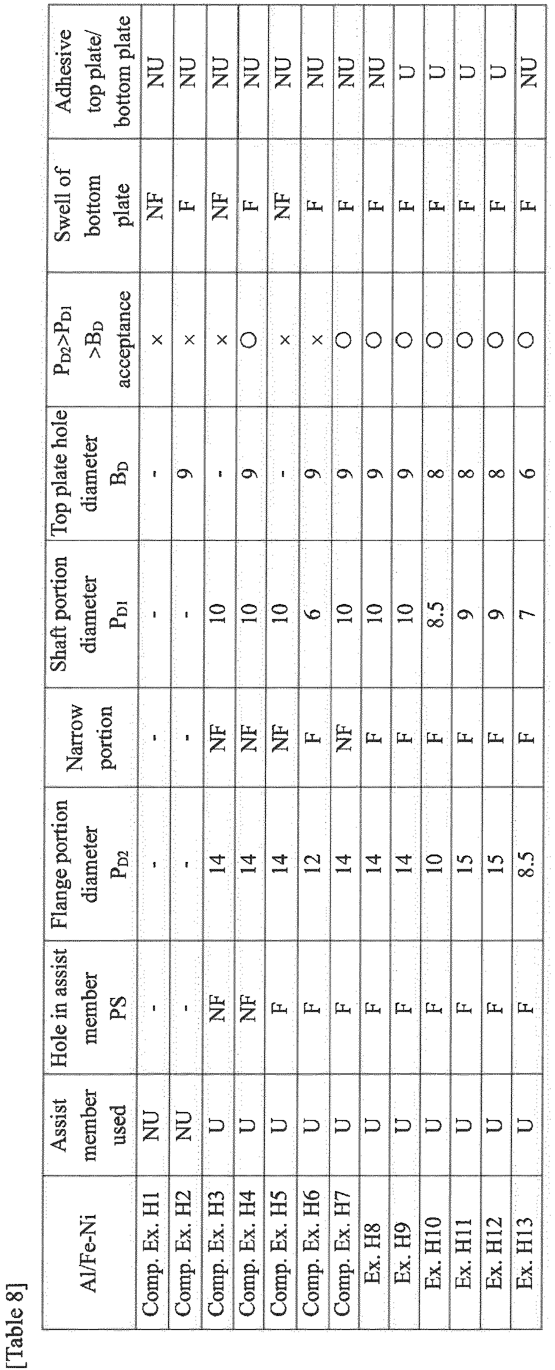

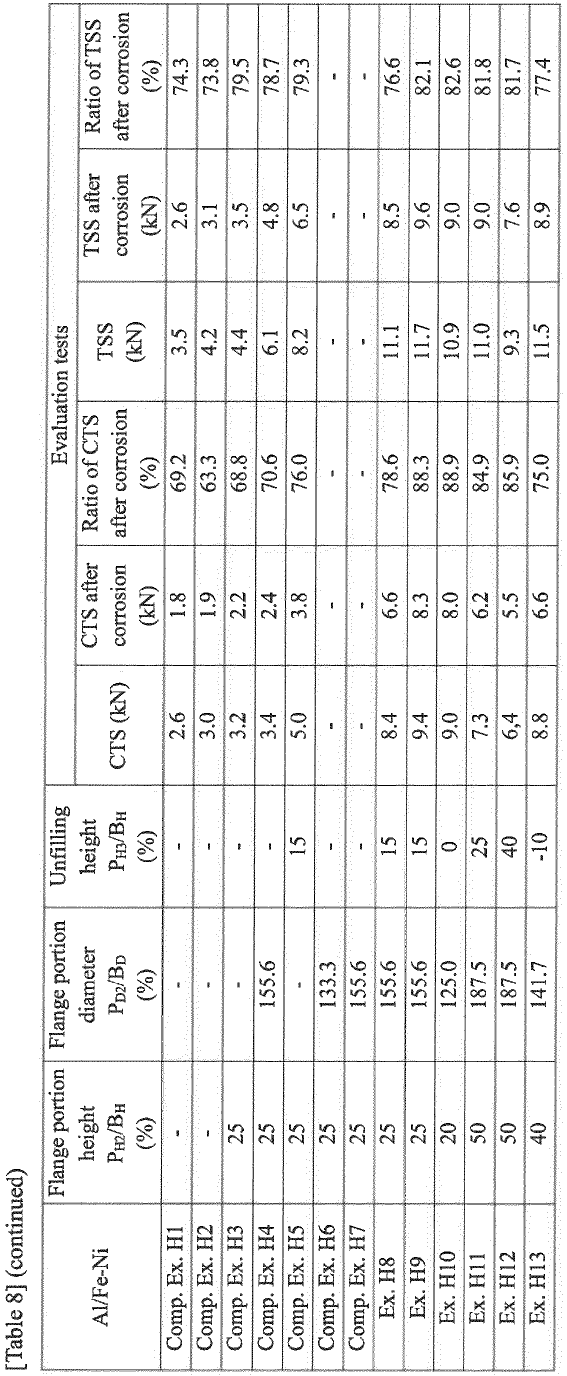

In No. H1, no joining assist member was used, no hole was made through the top plate 10, and arc welding was performed directly on the top plate 10. No adhesive was used. Since an Ni alloy coated arc welding rod and an aluminum base material were melt-mixed, a weld metal formed was very fragile intermetallic compounds and TSS and CTS were low.

In No. H2, arc welding was performed without using the joining assist member 30 although a hole 11 having a diameter of 9.0 mm was made through the top plate 10. Since the aluminum alloy mixing proportion of a weld metal was smaller than in No. H1, the amount of intermetallic compounds was small and the degree of embrittlement was low. However, TSS and CTS were still low.

In No. H3, the joining assist member 30 was put on the top plate 10 through which no hole was made and arc welding was performed from above the joining assist member 30. The material of the joining assist member 30 was JIS G4051 S12C (this material also applies to the following samples of Examples H). No hole was made through the joining assist member 30. As a result, there was no weld penetration into the bottom plate 20 through the joining assist member 30 and the top plate 10 and the welding failed.

In No. H4, the joining assist member 30 was press-fitted into the top plate 10 through which a hole having a diameter of 9.0 mm was made and arc welding was performed from above the joining assist member 30. No hole was made through the joining assist member 30. As a result, there was some weld penetration into the bottom plate 20 through the joining assist member 30. However, the weld penetration width in the bottom plate 20 was very small and the sample was broken easily in the breaking tests.

In No. H5, the joining assist member 30 was put on the top plate 10 through which no hole was made and arc welding was performed from above the joining assist member 30. A hole having a diameter of 7.0 mm was made through the joining assist member 30. As same as in No. H1, an Ni alloy welding rod and a magnesium alloy base material were melt-mixed to form a weld metal. Thus, the weld metal formed was very fragile intermetallic compounds and TSS and CTS were low.

In No. H6, the entire joining assist member 30 through which a hole was made was press-fitted into the top plate 10 through which a hole having a diameter of 9.0 mm was made and arc welding was performed from above the joining assist member 30. The narrow portion 39 was provided in the shaft portion 31 of the joining assist member 30, but the maximum outer diameter of the shaft portion 31was smaller than the hole diameter of the top plate 10. Therefore, the joining assist member 30 had the state that the shaft portion 31 was not press-fitted into the hole 11, but was put in the hole 11. Even though the joining assist member 30 was press-fitted into the hole 11 of the top plate 10 up to the flange portion 32 thereof, caulking effect was not obtained and the joining assist member 30 popped out and detached. Therefore, the welding failed.

In No. H7, the entire joining assist member 30 through which a hole was made was press-fitted into the top plate through which a hole having a diameter of 9.0 mm was made and arc welding was performed from above the joining assist member 30. The flange portion 32 and the shaft portion 31 were larger than the hole diameter of the top plate 10, but the shaft portion 31 did not have a narrow portion and was cylindrical. In this case, the joining assist member 30 could be temporarily press-fitted into the hole 11. However, since the shaft portion did not have a narrow portion, caulking effect was not obtained and the joining assist member 30 popped out and detached. Therefore, the welding failed.

On the other hand, in Nos. H8 to H13, the entire joining assist member 30 was press-fitted into the top plate 10 through which a hole was made and arc welding was performed from above the joining assist member 30. The hole diameter of the top plate 10 was set to the values as shown in Table 8 and a hole having an appropriate size was made through the joining assist member 30. The joining assist member 30 had the shape that the maximum outer diameter of the shaft portion 31 and the width of the flange portion 32 were larger than the hole diameter of the top plate 10, respectively, the width of the flange portion 32 was larger than the maximum outer diameter of the shaft portion 11 and the shaft portion 31 had the narrow portion 39 at the flange portion side thereof. In these samples, since the top plate 10 and the joining assist member 30 were caulked and restrained by the narrow portion 39, press-fitting could be performed in a stable manner. As weld quality, inflow of aluminum into a weld metal formed was restricted to zero or a very small amount by virtue of the presence of the shaft portion 31 of the joining assist member 30, whereby a high-quality weld metal was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Furthermore, TSS was sufficiently high value. Although the top plate 10 was relatively thick as 3.6 mm, the welding efficiency was increased and a burn-through preventing effect was obtained because the distance between the joining assist member 30 and the bottom plate 20 was decreased at the welding location by the deep drawing of the bottom plate 20. Still further, in the samples (Nos. H9 to H12) in which a high temperature curing type two-liquid-mixing adhesive was applied to appropriate locations and the samples were maintained in the environment of 180°C and 0.5 hours to cure the adhesive, an effect of preventing electric corrosion at aluminum-steel interfaces was obtained, whereby reduction in CTS and TSS due to corrosion was suppressed and high CTS and TSS after corrosion were obtained. More specifically, it is seen that the CTS after corrosion and the TSS after corrosion in No. H9 are increased by the adhesive application as compared with No. H8.

### <Examples I>

In Examples I, a lap joint was used having a combination of a 1.2 mm-thick top plate 10 made of an aluminum alloy A6N01 and a 1.2 mm-thick bottom plate 20 made of SPCC steel. This lap joint was joined by arc welding at a fixed point for a certain period of time by a self-shielded arc welding method using a 1.2 mm-diameter JIS Z3313 T49T14-0NS-G steel wire containing flux.

This welded joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 6 kN and CTS ≥ 4 kN.

To obtain not-indispensable but preferable performance, as in Examples F, G, and H, the welded joint 1 was also subjected to JASO-CCT for 28 days and then subjected to the same breaking tests as described above to obtain TSS after corrosion and CTS after corrosion. Acceptance criteria for preferable performance values were that they should be 80% or larger of respective values of the tests without corrosion.

In Table 9, Comparative Examples are denoted by Nos. I1 to I3 and Examples are denoted by Nos. 14 and 17.

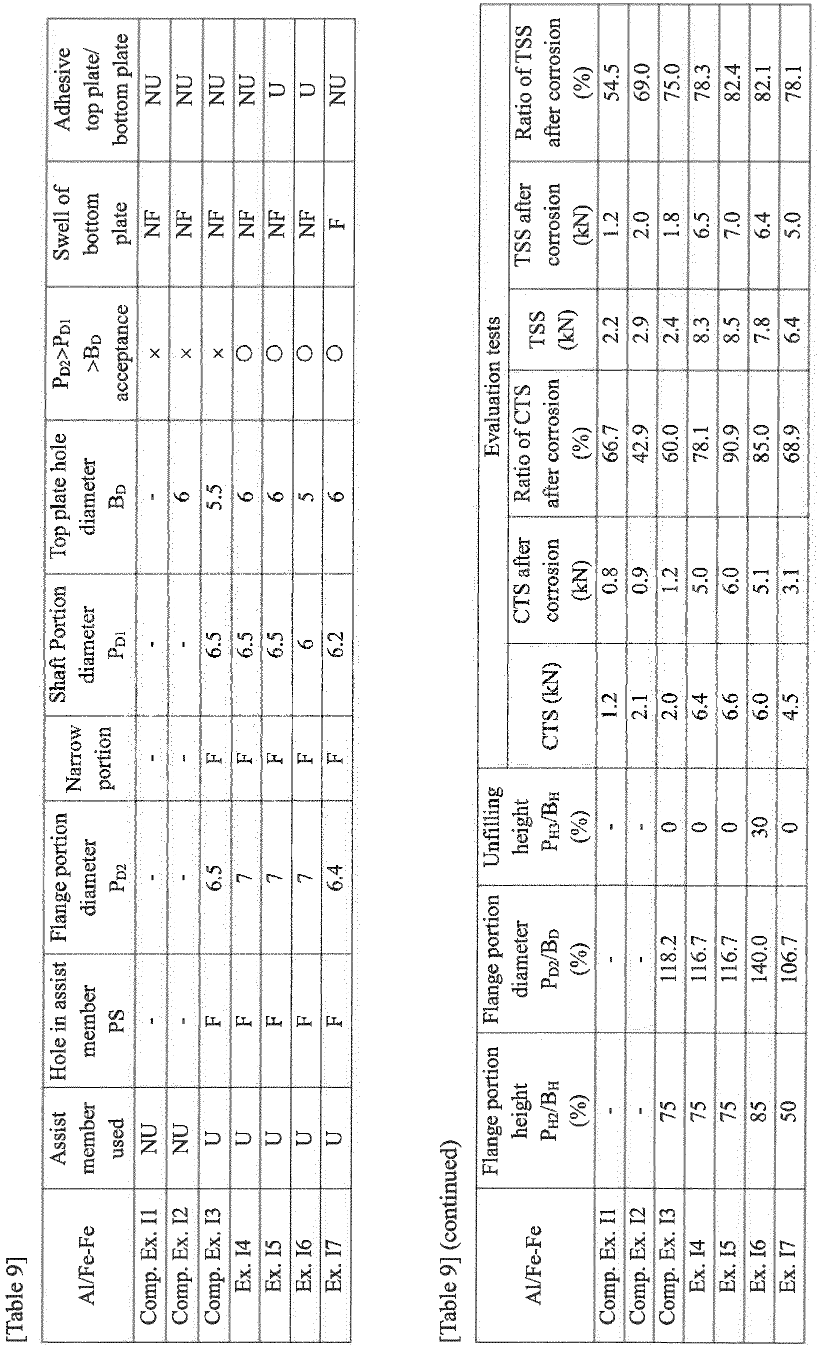

In No. 11, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. 12, arc welding was performed without using the joining assist member 30, though a hole 11 having a diameter of 6.0mm was made through the top plate 10. Since the aluminum alloy mixing proportion of a weld metal was smaller than in No. I1, the amount of intermetallic compounds was small and the degree of embrittlement was low. However, TSS and CTS were still low.

In No. 13, the entire joining assist member 30 through which a hole was made was press-fitted into the top plate through which a hole having a diameter of 5.5 mm was made and arc welding was performed from above the joining assist member 30. The narrow portion 39 was provided in the shaft portion 31 of the joining assist member 30, but the shaft portion 31 and the flange portion 32 had the same outer diameter. Therefore, resistance force in the thickness direction, that is, to peel stress, was small, the top plate 10 was easily detached from periphery of the joining assist member 30, and CTS and TSS were low values.

On the other hand, in Nos. I4 to I7, the entire joining assist member 30 produced by working a JIS G3106 SM570 plate was press-fitted into the top plate 10 through which a hole was made and arc welding was performed from above the joining assist member 30. The hole diameter of the top plate 10 was set to the values as shown in Table 9 and a hole having an appropriate size was made through the joining assist member 30. The joining assist member 30 had the shape that the maximum outer diameter of the shaft portion 31 and the width of the flange portion 32 were larger than the hole diameter of the top plate 10, respectively, the width of the flange portion were larger than the maximum outer diameter of the shaft 31, and the shaft portion 31 had the narrow portion 39 at the flange portion side thereof. In these samples, since the top plate 10 and the joining assist member 30 were caulked and restrained by the narrow portion 39, press-fitting could be performed in a stable manner. As weld quality, inflow of aluminum into a weld metal 40 formed was restricted to zero or a very small amount by virtue of the presence of the shaft portion 31 of the joining assist member 30, whereby a high-quality weld metal 40 was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Furthermore, TSS was sufficiently high value. Still further, in the samples No. I5 and I6 in which a high temperature curing type two-liquid-mixing adhesive was applied to appropriate locations and the samples were maintained in the environment of 180°C and 0.5 hours to cure the adhesive, an effect of preventing electric corrosion at aluminum-steel interfaces was obtained, whereby reduction in CTS and TSS due to corrosion was suppressed. It is seen that the TSS after corrosion and the CTS after corrosion in No. I5 are increased by adhesive application as compared with No. I4 to which no adhesive is applied.

### <Examples J>

In Examples J, a lap joint was used having a combination of a 4.0 mm-thick top plate 10 made of an aluminum alloy A7N01 and a 3.0 mm-thick bottom plate 20 made of 1180 MPa-class high tensile strength steel. A 1.5 mm-height swell portion 21 was formed by drawing at welding locations in the bottom plate 20. This lap joint was joined by arc welding by a plasma arc welding method using a 1.2 mm-diameter JIS Z3321 YS309L stainless steel welding wire and using 100% Ar as a plasma gas and 99% Ar + 1% H₂ as a shielding gas at a fixed point for a certain period of time.

This welded joint 1 was subjected to breaking tests according to JIS Z3136 "Test piece dimensions and test method of shearing test of resistance spot and projection welded joint" and JIS Z3137 "Cross tension test for resistance spot and projection welded joint." In the following, tensile strength of Z3136 was referred to as TSS and tensile strength of Z3137 was referred to as CTS. Acceptance criteria were TSS ≥ 10 kN and CTS ≥ 8 kN.

To obtain not-indispensable but preferable performance, as in Examples F to I, the welded joint 1 was also subjected to JASO-CCT for 28 days and then subjected to the same breaking tests as described above to obtain TSS after corrosion and CTS after corrosion. Acceptance criteria for preferable performance were that they should be 80% or larger of respective values of the tests without corrosion.

In Table 10, Examples are denoted by Nos. J1 to J4.

**[Table 10]**

| Al/Fe-Fe | Assist member used | Hole in assist member PS | Flange portion diameter P_{D2} | Narrow portion | Shaft portion diameter P_{D1} | Top plate hole diameter B_{D} | P_{D2}>P_{D1} >B_{D} acceptance | Swell of bottom plate | Adhesive top plate/bottom plate |
|---|---|---|---|---|---|---|---|---|---|
| Ex. J1 | U | F | 10 | F | 9 | 8 | ○ | F | U |
| Ex. J2 | U | F | 15 | F | 10.5 | 10 | ○ | F | NU |
| Ex. J3 | U | F | 15 | F | 10.5 | 10 | ○ | F | U |
| Ex. J4 | U | F | 13 | F | 8.5 | 8 | ○ | F | NU |

| Al/Fe-Fe | Flange portion height P_{H2}/B_{H} (%) | Flange portion diameter P_{D2}/B_{D} (%) | Unfilling height P_{H3}/B_{H} (%) | Evaluation tests | | | | | |
|---|---|---|---|---|---|---|---|---|---|
| | | | | CTS (kN) | CTS after corrosion (kN) | Ratio of CTS after corrosion (%) | TSS (kN) | TSS after corrosion (kN) | Ratio of TSS after corrosion (%) |
| Comp. Ex. I1 | 45 | 125.0 | 0 | 8.4 | 6.8 | 81.0 | 10.3 | 8.3 | 80.6 |
| Comp. Ex. I2 | 60 | 150.0 | 2.5 | 9.4 | 7.0 | 74.5 | 11.2 | 8.3 | 74.1 |
| Comp. Ex. I3 | 60 | 150.0 | 2.5 | 9.7 | 8.5 | 87.6 | 12.6 | 10.6 | 84.1 |
| Comp. Ex. I4 | 17 | 162.5 | 0 | 8.1 | 6.3 | 77.8 | 10.2 | 8.0 | 78.4 |

In Nos. J1 to J4, the entire joining assist member 30 produced by working a SUS304 steel plate was press-fitted into the top plate 10 through which a hole was made and arc welding was performed from above the joining assist member 30. The hole diameter of the top plate 10 was set to the values as shown in Table 10 and a hole having an appropriate size was made through the joining assist member 30. The joining assist member 30 had the shape that the maximum outer diameter of the shaft portion 31 and the width of the flange portion 32 were larger than the hole diameter of the top plate 10, respectively, the width of the flange portion was larger than the maximum outer diameter of the shaft portion 31, and the shaft portion 31 had the narrow portion 39 at the flange portion side thereof. In these samples, since the top plate 10 and the joining assist member 30 were caulked and restrained by the narrow portion 39, press-fitting could be performed in a stable manner. As weld quality, inflow of aluminum into a weld metal 40 formed was restricted to zero or a very small amount by virtue of the presence of the shaft portion 31 of the joining assist member 30, whereby a high-quality weld metal was formed. Furthermore, since the degree of weld penetration into the bottom plate 20 was sufficiently high and the flange portion 32 of the joining assist member 30 was larger in area than the hole 11 of the top plate 10, full coming-off was prevented and high CTS was obtained in the cross tension test. Furthermore, TSS was sufficiently high value.

Although the top plate 10 was relatively thick as 4.0 mm, the welding efficiency was increased and a burn-through preventing effect was obtained because the distance between the joining assist member 30 and the bottom plate 20 was decreased at the welding location by the deep drawing of the bottom plate 20. Still further, in the sample No. J3 in which a high temperature curing type two-liquid-mixing adhesive was applied to appropriate locations and the samples were maintained in the environment of 180°C and 0.5 hours to cure the adhesive, an effect of preventing electric corrosion at aluminum-steel interfaces was obtained, whereby reduction in CTS and TSS due to corrosion was suppressed and high CTS and TSS after corrosion were obtained. Specifically, it is seen that the TSS after corrosion and the CTS after corrosion in No. J3 are increased by adhesive application as compared with No. J2 to which no adhesive is applied.

(1) An arc welding method for dissimilar material joining for joining a first plate made of an aluminum alloy or a magnesium alloy and a second plate made of steel, the method including:
   a step of making a circular hole through the first plate;
   a step of press-fitting a joining assist member made of steel into the hole formed in the first plate, the joining assist member having a stepped external shape including a shaft portion and a flange portion and having a hollow portion penetrating the shaft portion and the flange portion, a maximum outer diameter of the shaft portion and a width of the flange portion being larger than a diameter of the hole of the first plate respectively and the shaft portion having a narrow portion in at a flange portion side;
   a step of overlapping the first plate with the second plate; and
   a step of filling the hollow portion of the joining assist member with a weld metal and welding the second plate and the joining assist member by any method of the following (a) to (e):
      (a) a gas-shielded arc welding method using, as a consumable electrode, a welding wire to provide the weld metal made of an iron alloy or a nickel alloy;
      (b) a non-gas arc welding method using the welding wire as a consumable electrode;
      (c) a gas tungsten arc welding method using the welding wire as a non-consumable electrode filler;
      (d) a plasma arc welding method using the welding wire as a non-consumable electrode filler; and
      (e) a coated arc welding method using, as a consumable electrode, a coated arc welding rod to provide the weld metal made of an iron alloy or a nickel alloy.
(2) The arc welding method for dissimilar material joining according to (1), wherein the second plate has a swell portion formed by drawing, and the swell portion of the second plate is placed in the hole of the first plate in the overlapping step.
(3) The arc welding method for dissimilar material joining according to (1) or (2), further including, before the overlapping step, a step of applying an adhesive to at least one of overlapped surfaces of the first plate and the second plate around the hole over its entire circumference.
(4) The arc welding method for dissimilar material joining according to any one of (1) to (3), wherein in the press-fitting step, an adhesive is applied to at least one of confronting surfaces between the joining assist member and the first plate opposed to the joining assist member.
(5) The arc welding method for dissimilar material joining according to any one of (1) to (4), wherein in the press-fitting step or after the filling and welding step, an adhesive is applied to a boundary between the joining assist member and a surface of the first plate.
(6) The arc welding method for dissimilar material joining according to any one of (1) to (5), wherein the shaft portion of the joining assist member has a height P_{H1} of 10% or larger and 100% or smaller of a thickness B_{H} of the first plate.
(7) The arc welding method for dissimilar material joining according to any one of (1) to (6), wherein the shaft portion of the joining assist member has a maximum outer diameter P_{D1} is of 102% or larger and 125% or smaller of a diameter B_{D} of the hole of the first plate.
(8) The arc welding method for dissimilar material joining according to any one of (1) to (7), wherein the flange portion of the joining assist member has a width P_{D2} of 105% or larger of a diameter B_{D} of the hole of the first plate.
(9) The arc welding method for dissimilar material joining according to any one of (1) to (8), wherein the flange portion of the joining assist member has a thickness P_{H2} of 50% or larger and 150% or smaller of a thickness B_{H} of the first plate.
(10) The arc welding method for dissimilar material joining according to any one of (1) to (11), wherein in the filling and welding step, an excess weld metal is formed on a surface of the joining assist member and the excess weld metal has a diameter W_{D} of 105% or larger of a diameter Ps of the hollow portion of the joining assist member.
(11) A joining assist member to be used for the arc welding method for dissimilar material joining according to any one of (1) to (10), the joining assist member being made of steel, having a stepped external shape including a shaft portion and a flange portion and having a hollow portion penetrating the shaft portion and the flange portion, a maximum outer diameter of the shaft portion and a width of the flange portion being larger than a diameter of the hole of the first plate respectively, wherein the shaft portion has a narrow portion at a flange portion side.
(12) A dissimilar material welded joint including a first plate made of an aluminum alloy or a magnesium alloy and a second plate made of steel that is arc-welded to the first plate,
   wherein the first plate has a circular hole that reaches an overlapped surface to the second plate,
   wherein the dissimilar material welded joint further includes a joining assist member made of steel, the joining assist member having a stepped external shape including a shaft portion press-fitted into the hole formed in the first plate and a flange portion and having a hollow portion penetrating the shaft portion and the flange portion, a maximum outer diameter of the shaft portion and a width of the flange portion being larger than a diameter of the hole of the first plate respectively and the shaft portion having a narrow portion at the flange portion side, and
   wherein the hollow portion of the joining assist member is filled with a weld metal made of an iron alloy or a nickel alloy, and a melting portion is formed of the weld metal and a part of melted portions of the second plate and the joining assist member.
(13) The dissimilar material welded joint according to (12), wherein a swell portion formed in the second plate is placed in the hole of the first plate.
(14) The dissimilar material welded joint according to (12) or (13), including an adhesive applied to at least one of overlapped surfaces of the first plate and the second plate around the hole over its entire circumference.
(15) The dissimilar material welded joint according to any one of (12) to (14), including an adhesive applied to at least one of confronting surfaces between the joining assist member and the first plate opposed to the joining assist member.
(16) The dissimilar material welded joint according to any one of (12) to (15), including an adhesive applied to a boundary between the joining assist member and a surface of the first plate.
(17) The dissimilar material welded joint according to any one of (12) to (16), wherein the shaft portion of the joining assist member has a height P_{H1} of 10% or larger and 100% or smaller of a thickness B_{H} of the first plate.
(18) The dissimilar material welded joint according to any one of (12) to (17), wherein the shaft portion of the joining assist member has a maximum outer diameter P_{D1} of 102% or larger and 125% or smaller of a diameter B_{DX} of the hole of the first plate.
(19) The dissimilar material welded joint according to any one of (12) to (18), wherein the flange portion of the joining assist member has a width P_{D2} of 105% or larger of a diameter B_{DX} of the hole of the first plate.
(20) The dissimilar material welded joint according to any one of (12) to (19), wherein the flange portion of the joining assist member has a thickness P_{H2} of 50% or larger and 150% or smaller of a thickness B_{H} of the first plate.
(21) The dissimilar material welded joint according to any one of (12) to (20), wherein an excess weld metal is formed on a surface of the joining assist member and the excess weld metal has a diameter W_{D} of 105% or larger of a diameter P_{S} of the hollow portion of the joining assist member.
(22) The dissimilar material welded joint according to any one of (12) to (21), wherein the shaft portion of the joining assist member is press-fitted into the hole of the first plate and fixed.
(23) A plate material with a joining assist member capable of forming a dissimilar material welded joint by arc welding with a plate material made of steel, the plate material with a joining assist member including:
   a plate material made of an aluminum alloy or an magnesium alloy, having a circular hole;
   a joining assist member being made of steel, having a stepped external shape including a shaft portion and a flange portion and having a hollow portion penetrating the shaft portion and the flange portion, a maximum outer diameter of the shaft portion and a width of the flange portion being larger than a diameter of the hole of the first plate respectively and the shaft portion having a narrow portion at the flange portion side;
   wherein the joining assist member is attached to the plate material by fixing the shaft portion in the hole formed in the plate material.
(24) The plate material with a joining assist member according to (23), wherein the shaft portion of the joining assist member is press-fitted into the hole of the plate material and fixed.
(25) An arc welding method for dissimilar material joining for joining a first plate made of an aluminum alloy or a magnesium alloy and a second plate made of steel, the method including:
   a step of making a circular hole through the first plate;
   a step of press-fitting a joining assist member made of steel into the hole formed in the first plate so that an exposed surface of a flange portion is located to be nearly flush with or inside a surface of the first plate, the joining assist member having a stepped external shape including a shaft portion and a flange portion and having a hollow portion penetrating the shaft portion and the flange portion, a maximum outer diameter P_{D1} of the shaft portion, a width P_{D2} of the flange portion and a diameter B_{D} of the hole of the first plate having a relationship of P_{D2}>P_{D1}>B_{D}, and the shaft portion having a narrow portion at a flange portion side;
   a step of overlapping the first plate with the second plate; and
   a step of filling the hollow portion of the joining assist member with a weld metal and welding the second plate and the joining assist member by any method of the following (a) to (e):
      (a) a gas-shielded arc welding method using, as a consumable electrode, a welding wire to provide the weld metal made of an iron alloy or a nickel alloy;
      (b) a non-gas arc welding method using the welding wire as a consumable electrode;
      (c) a gas tungsten arc welding method using the welding wire as a non-consumable electrode filler;
      (d) a plasma arc welding method using the welding wire as a non-consumable electrode filler; and
      (e) a coated arc welding method using, as a consumable electrode, a coated arc welding rod to provide the weld metal made of an iron alloy or a nickel alloy.
(26) The arc welding method for dissimilar material joining according to (25), wherein the joining assist member has a thickness that is equal to or smaller than a thickness of the first plate.
(27) The arc welding method for dissimilar material joining according to (25) or (26), wherein the second plate has a swell portion formed by drawing, and the swell portion of the second plate is placed in the hole of the first plate in the overlapping step.
(28) The arc welding method for dissimilar material joining according to any one of (25) or (27), further including, before the overlapping step, a step of applying an adhesive to at least one of overlapped surfaces of the first plate and the second plate around the hole over its entire circumference.
(29) The arc welding method for dissimilar material joining according to any one of (25) or (28), wherein after the press-fitting step, the first plate is press-molded.
(30) The arc welding method for dissimilar material joining according to any one of (25) or (29), wherein the flange portion of the joining assist member has a thickness P_{H2} of 20% or larger and 80% or smaller of a thickness B_{H} of the first plate.
(31) The arc welding method for dissimilar material joining according to any one of (25) or (30), wherein the flange portion of the joining assist member has a width P_{D2} of 110% or larger and 200% or smaller of a diameter B_{D} of the hole 11 of the first plate.
(32) The arc welding method for dissimilar material joining according to any one of (25) or (31), wherein in the filling and welding step, an unfilled height P_{H3} of the weld metal from the exposed surface of the flange portion is 30% or smaller of a thickness B_{H} of the first plate.
(33) A joining assist member to be used for the arc welding method for dissimilar material joining according to any one of (25) to (32), the joining assist member being made of steel, having a stepped external shape including a shaft portion and a flange portion and having a hollow portion penetrating the shaft portion and the flange portion, a maximum outer diameter P_{D1} of the shaft portion, a width P_{D2} of the flange portion and a diameter B_{D} of the hole of the first plate having a relationship of P_{D2}>P_{D1}>B_{D}, wherein the shaft portion has a narrow portion at a flange portion side.
(34) A dissimilar material welded joint including a first plate made of an aluminum alloy or a magnesium alloy and a second plate made of steel that is arc-welded to the first plate,
   wherein the first plate has a circular hole that reaches an overlapped surface to the second plate,
   wherein the dissimilar material welded joint further includes a joining assist member being made of steel and having a stepped external shape including a shaft portion fixed into the hole formed in the first plate and a flange portion and having a hollow portion penetrating the shaft portion and the flange portion, a maximum outer diameter P_{D1} of the shaft portion, a width P_{D2} of the flange portion and a diameter B_{D} of the hole of the first plate having a relationship of P_{D2}>P_{D1}>B_{D} and the shaft portion having a narrow portion at the flange portion side,
   wherein the joining assist member is fixed into the hole of the first plate so that an exposed surface of a flange portion is located to be nearly flush with or inside a surface of the first plate, and
   wherein the hollow portion of the joining assist member is filled with a weld metal made of an iron alloy or a nickel alloy, and a melting portion is formed of the weld metal and a part of melted portions of the second plate and the joining assist member.
(35) The dissimilar material welded joint according to (34), wherein the joining assist member has a thickness that is equal to or smaller than a thickness of the first plate.
(36) The dissimilar material welded joint according to (34) or (35), wherein a swell portion formed in the second plate is placed in the hole of the first plate.
(37) The dissimilar material welded joint according to any one of (34) to (36), including an adhesive applied to at least one of overlapped surfaces of the first plate and the second plate around the hole over its entire circumference.
(38) The dissimilar material welded joint according to any one of (34) to (37), wherein the flange portion of the joining assist member has a thickness P_{H2} of 20% or larger and 80% or smaller of a thickness B_{H} of the first plate.
(39) The dissimilar material welded joint according to any one of (34) to (38), wherein the flange portion of the joining assist member has a width P_{D2} of 110% or larger and 200% or smaller of a diameter B_{D} of the hole 11 of the first plate.
(40) The dissimilar material welded joint according to any one of (34) to (39), wherein an unfilled height P_{H3} of the weld metal from the exposed surface of the flange portion is 30% or smaller of a thickness B_{H} of the first plate.
(41) The dissimilar material welded joint according to any one of (34) to (40), wherein the joining assist member is press-fitted into the hole of the first plate and fixed.
(42) A plate material with a joining assist member capable of forming a dissimilar material welded joint by arc welding with a plate material made of steel, the plate material with a joining assist member including:
   a plate material made of an aluminum alloy or an magnesium alloy, having a circular hole;
   a joining assist member being made of steel, having a stepped external shape including a shaft portion and a flange portion and having a hollow portion penetrating the shaft portion and the flange portion, a maximum outer diameter P_{D1} of the shaft portion, a width P_{D2} of the flange portion and a diameter B_{D} of the hole of the plate material have a relationship of P_{D2}>P_{D1}>B_{D} and the shaft portion having a narrow portion at the flange portion side;
   wherein the joining assist member is fixed into the hole of the plate material so that an exposed surface of a flange portion is located to be nearly flush with or inside a surface of the plate material.
(43) The plate material with a joining assist member according to (42), wherein the joining assist member has a thickness that is equal to or smaller than a thickness of the plate material.
(44) The plate material with a joining assist member according to (42) or (43), wherein the joining assist member is press-fitted into the hole of the plate material and fixed.

This application is based on Japanese Patent Application No. 2016-254215 filed on December 27, 2016 and Japanese Patent Application No. 2016-254216 filed on December 27, 2016, the entire subject matter of which is incorporated herein by reference.

### Description of Symbols

10: Top plate
11: Hole
20: Bottom plate
30: Joining assist member
31: Shaft portion
32: Flange portion
33: Hollow portion
40: Weld metal
W: Melting portion
Wa: Excess weld metal

## Claims

1. An arc welding method for dissimilar material joining for joining a first plate made of an aluminum alloy or a magnesium alloy and a second plate made of steel, the method comprising:
a step of making a circular hole through the first plate;
a step of press-fitting a joining assist member made of steel into the hole formed in the first plate, the joining assist member having a stepped external shape including a shaft portion and a flange portion and having a hollow portion penetrating the shaft portion and the flange portion, a maximum outer diameter P_{D1} of the shaft portion and a width P_{D2} of the flange portion being larger than a diameter B_{D} of the hole of the first plate respectively and the shaft portion having a narrow portion at a flange portion side;
a step of overlapping the first plate with the second plate; and
a step of filling the hollow portion of the joining assist member with a weld metal and welding the second plate and the joining assist member by any method of the following (a) to (e):
(a) a gas-shielded arc welding method using, as a consumable electrode, a welding wire to provide the weld metal made of an iron alloy or a nickel alloy;
(b) a non-gas arc welding method using the welding wire as a consumable electrode;
(c) a gas tungsten arc welding method using the welding wire as a non-consumable electrode filler;
(d) a plasma arc welding method using the welding wire as a non-consumable electrode filler; and
(e) a coated arc welding method using, as a consumable electrode, a coated arc welding rod to provide the weld metal made of an iron alloy or a nickel alloy.

2. The arc welding method for dissimilar material joining according to claim 1, wherein the second plate has a swell portion formed by drawing, and the swell portion of the second plate is placed in the hole of the first plate in the overlapping step.

3. The arc welding method for dissimilar material joining according to claim 1, further comprising, before the overlapping step, a step of applying an adhesive to at least one of overlapped surfaces of the first plate and the second plate around the hole over its entire circumference.

4. The arc welding method for dissimilar material joining according to claim 1, wherein in the press-fitting step, an adhesive is applied to at least one of confronting surfaces between the joining assist member and the first plate opposed to the joining assist member.

5. The arc welding method for dissimilar material joining according to claim 1, wherein in the press-fitting step or after the filling and welding step, an adhesive is applied to a boundary between the joining assist member and a surface of the first plate.

6. The arc welding method for dissimilar material joining according to claim 1, wherein the shaft portion of the joining assist member has a height P_{H1} of 10% or larger and 100% or smaller of a thickness B_{H} of the first plate.

7. The arc welding method for dissimilar material joining according to claim 1, wherein the shaft portion of the joining assist member has a maximum outer diameter P_{D1} of 102% or larger and 125% or smaller of a diameter B_{D} of the hole of the first plate.

8. The arc welding method for dissimilar material joining according to claim 1, wherein the flange portion of the joining assist member has a width P_{D2} of 105% or larger of a diameter B_{D} of the hole of the first plate.

9. The arc welding method for dissimilar material joining according to claim 1, wherein the flange portion of the joining assist member has a thickness P_{H2} of 50% or larger and 150% or smaller of a thickness B_{H} of the first plate.

10. The arc welding method for dissimilar material joining according to claim 1, wherein in the filling and welding step, an excess weld metal is formed on a surface of the joining assist member and the excess weld metal has a diameter W_{D} of 105% or larger of a diameter P_{S} of the hollow portion of the joining assist member.

11. The arc welding method for dissimilar material joining according to claim 1,
wherein a maximum outer diameter P_{D1} of the shaft portion, a width P_{D2} of the flange portion and a diameter B_{D} of the hole of the first plate have a relationship of P_{D2}>P_{D1}>B_{D} and
wherein in the press-fitting step, the joining assist member is press-fitted into the hole of the first plate so that an exposed surface of a flange portion is located to be nearly flush with or inside a surface of the first plate, the joining assist member being made of steel and having the shaft portion having a narrow portion at the flange portion side.

12. The arc welding method for dissimilar material joining according to claim 1, wherein the joining assist member has a thickness that is equal to or smaller than a thickness of the first plate.

13. The arc welding method for dissimilar material joining according to claim 1, wherein after the press-fitting step, the first plate is press-molded.

14. The arc welding method for dissimilar material joining according to claim 11, wherein the flange portion of the joining assist member has a thickness P_{H2} of 20% or larger and 80% or smaller of a thickness B_{H} of the first plate.

15. The arc welding method for dissimilar material joining according to claim 11, wherein the flange portion of the joining assist member has a width P_{D2} of 110% or larger and 200% or smaller of a diameter B_{D} of the hole 11 of the first plate.

16. The arc welding method for dissimilar material joining according to claim 11, wherein in the filling and welding step, an unfilled height P_{H3} of the weld metal from the exposed surface of the flange portion is 30% or smaller of a thickness B_{H} of the first plate.

17. A joining assist member to be used for the arc welding method for dissimilar material joining according to any one of claims 1 to 10, the joining assist member being made of steel, having a stepped external shape including a shaft portion and a flange portion and having a hollow portion penetrating the shaft portion and the flange portion, a maximum outer diameter P_{D1} of the shaft portion and a width P_{D2} of the flange portion being larger than a diameter B_{D} of the hole of the first plate respectively, wherein the shaft portion has a narrow portion at a flange portion side.

18. A joining assist member to be used for the arc welding method for dissimilar material joining according to any one of claims 11 to 16, the joining assist member being made of steel, having a stepped external shape including a shaft portion and a flange portion and having a hollow portion penetrating the shaft portion and the flange portion, a maximum outer diameter P_{D1} of the shaft portion, a width P_{D2} of the flange portion and a diameter B_{D} of the hole of the first plate having a relationship of P_{D2}>P_{D1}>B_{D}, wherein the shaft portion has a narrow portion at a flange portion side.

19. A dissimilar material welded joint comprising a first plate made of an aluminum alloy or a magnesium alloy and a second plate made of steel that is arc-welded to the first plate,
wherein the first plate has a circular hole that reaches an overlapped surface to the second plate,
wherein the dissimilar material welded joint further comprises a joining assist member being made of steel and having a stepped external shape including a shaft portion fixed into the hole formed in the first plate and a flange portion and having a hollow portion penetrating the shaft portion and the flange portion, a maximum outer diameter P_{D1} of the shaft portion and a width P_{D2} of the flange portion being larger than a diameter B_{D} of the hole of the first plate respectively and the shaft portion having a narrow portion at the flange portion side, and
wherein the hollow portion of the joining assist member is filled with a weld metal made of an iron alloy or a nickel alloy, and a melting portion is formed of the weld metal and a part of melted portions of the second plate and the joining assist member.

20. The dissimilar material welded joint according to claim 19, wherein a swell portion formed in the second plate is placed in the hole of the first plate.

21. The dissimilar material welded joint according to claim 19, comprising an adhesive applied to at least one of overlapped surfaces of the first plate and the second plate around the hole over its entire circumference.

22. The dissimilar material welded joint according to claim 19, comprising an adhesive applied to at least one of confronting surfaces between the joining assist member and the first plate opposed to the joining assist member.

23. The dissimilar material welded joint according to claim 19, comprising an adhesive applied to a boundary between the joining assist member and a surface of the first plate.

24. The dissimilar material welded joint according to claim 19, wherein the shaft portion of the joining assist member has a height P_{H1} of 10% or larger and 100% or smaller of a thickness B_{H} of the first plate.

25. The dissimilar material welded joint according to claim 19, wherein the shaft portion of the joining assist member has a maximum outer diameter P_{D1} of 102% or larger and 125% or smaller of a diameter B_{D} of the hole of the first plate.

26. The dissimilar material welded joint according to claim 19, wherein the flange portion of the joining assist member has a width P_{D2} of 105% or larger of a diameter B_{D} of the hole of the first plate.

27. The dissimilar material welded joint according to claim 19, wherein the flange portion of the joining assist member has a thickness P_{H2} of 50% or larger and 150% or smaller of a thickness B_{H} of the first plate.

28. The dissimilar material welded joint according to claim 19, wherein an excess weld metal is formed on a surface of the joining assist member and the excess weld metal has a diameter W_{D} of 105% or larger of a diameter Ps of the hollow portion of the joining assist member.

29. The dissimilar material welded joint according to claim 19, wherein the shaft portion of the joining assist member is press-fitted into the hole of the first plate and fixed.

30. The dissimilar material welded joint according to claim 19,
wherein a maximum outer diameter P_{D1} of the shaft portion, a width P_{D2} of the flange portion and a diameter B_{D} of the hole of the first plate have a relationship of P_{D2}>P_{D1}>B_{D} and
wherein the joining assist member is fixed into the hole of the first plate so that an exposed surface of a flange portion is located to be nearly flush with or inside a surface of the first plate.

31. The dissimilar material welded joint according to claim 30, wherein the joining assist member has a thickness that is equal to or smaller than a thickness of the first plate.

32. The dissimilar material welded joint according to claim 30, wherein the flange portion of the joining assist member has a thickness P_{H2} of 20% or larger and 80% or smaller of a thickness B_{H} of the first plate.

33. The dissimilar material welded joint according to claim 30, wherein the flange portion of the joining assist member has a width P_{D2} of 110% or larger and 200% or smaller of a diameter B_{D} of the hole 11 of the first plate.

34. The dissimilar material welded joint according to claim 30, wherein an unfilled height P_{H3} of the weld metal from the exposed surface of the flange portion is 30% or smaller of a thickness B_{H} of the first plate.

35. The dissimilar material welded joint according to claim 30, wherein the joining assist member is press-fitted into the hole of the first plate and fixed.

36. A plate material with a joining assist member capable of forming a dissimilar material welded joint by arc welding with a plate material made of steel, the plate material with a joining assist member comprising:
a plate material made of an aluminum alloy or an magnesium alloy, having a circular hole;
a joining assist member being made of steel, having a stepped external shape including a shaft portion and a flange portion and having a hollow portion penetrating the shaft portion and the flange portion, a maximum outer diameter P_{D1} of the shaft portion and a width P_{D2} of the flange portion being larger than a diameter B_{D} of the hole of the first plate respectively and the shaft portion having a narrow portion at the flange portion side;
wherein the joining assist member is attached to the plate material by fixing the shaft portion in the hole formed in the plate material.

37. The plate material with a joining assist member according to claim 36, wherein the shaft portion of the joining assist member is press-fitted into the hole of the plate material and fixed.

38. The plate material with a joining assist member according to claim 36, wherein a maximum outer diameter P_{D1} of the shaft portion, a width P_{D2} of the flange portion and a diameter B_{D} of the hole of the plate material have a relationship of P_{D2}>P_{D1}>B_{D} and
wherein the joining assist member is fixed into the hole of the plate material so that an exposed surface of a flange portion is located to be nearly flush with or inside a surface of the plate material.

39. The plate material with a joining assist member according to claim 38, wherein the joining assist member has a thickness that is equal to or smaller than a thickness of the plate material.

40. The plate material with a joining assist member according to claim 38, wherein the joining assist member is press-fitted into the hole of the plate material and fixed.
